(19) Europäisches Patentamt
European Patent Office
Office européen des brevets

(11) **EP 2 165 406 B1**

(12) **EUROPÄISCHE PATENTSCHRIFT**

(45) Veröffentlichungstag und Bekanntmachung des Hinweises auf die Patenterteilung:
**03.04.2013 Patentblatt 2013/14**

(51) Int Cl.:
*H02K 41/02* <sup>(2006.01)</sup>     *H02K 41/025* <sup>(2006.01)</sup>
*H02K 41/03* <sup>(2006.01)</sup>

(21) Anmeldenummer: **08758955.2**

(22) Anmeldetag: **02.06.2008**

(86) Internationale Anmeldenummer:
**PCT/EP2008/004387**

(87) Internationale Veröffentlichungsnummer:
**WO 2008/148513 (11.12.2008 Gazette 2008/50)**

(54) **LAGER- ODER TRANSPORTSYSTEM**

STORAGE OR CONVEYING SYSTEM

SYSTÈME DE STOCKAGE OU DE TRANSPORT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **02.06.2007 DE 102007025822**

(43) Veröffentlichungstag der Anmeldung:
**24.03.2010 Patentblatt 2010/12**

(73) Patentinhaber: **Bergmann, Lars B.**
**64380 Rossdorf (DE)**

(72) Erfinder: **Bergmann, Lars B.**
**64380 Rossdorf (DE)**

(74) Vertreter: **Köllner, Malte et al**
**Köllner & Partner**
**Patentanwälte**
**Vogelweidstrasse 8**
**60596 Frankfurt am Main (DE)**

(56) Entgegenhaltungen:
EP-A- 0 896 936     EP-A- 1 443 632
DE-A1- 10 334 736     US-A1- 2003 178 901

- JUNJI HIRAI ET AL: "Wireless Transmission of Power and Information and Information for Cableless Linear Motor Drive" IEEE TRANSACTIONS ON POWER ELECTRONICS, IEEE SERVICE CENTER, PISCATAWAY, NJ, US, Bd. 15, Nr. 1, 1. Januar 2000 (2000-01-01), XP011043386 ISSN: 0885-8993

## Beschreibung

Gebiet der Erfindung

Die Erfindung betrifft ein Lager- oder Transportsystem.

Stand der Technik

Das heute übliche Lager ist das Hochregallager, bei dem die Waren durch einen Roboter oder von einem Menschen gefahrenen Gabelstapler abgelegt und geholt werden. Dieser Vorgang ist schlecht parallelisierbar und daher insgesamt zeitintensiv.

Die Druckschrift EP 1 443 632 A2 offenbart einen Flächenlinearmotor, der zur Nachbildung von Fahrtzuständen eines Straßenfahrzeuges unter Laborbedingungen verwendet werden kann. Dieser Flachenlinearmotor ermöglicht einen Antrieb in beide Raumrichtungen einer Ebene. Dazu sind einerseits in einer Fahrfläche eine Vielzahl von Flächenkomponenten, d. h. Primärteile zur Erzeugung eines magnetischen Wanderfeldes in einer Wirkungsrichtung oder Sekundärteile, die ein statischen Magnetfelds erzeugen oder als ein passives stromleitfähiges Element ausgebildet sind, verteilt angeordnet. Weiterhin sind auf einem Mobilteil mindestens zwei Primärteile, wenn es sich bei den Flächenkomponenten der Fahrfläche im Sekundärteile handelt, oder mindestens zwei Sekundärteile, wenn es sich bei den Flächenkomponenten der Fahrfläche im Primärteile handelt, angeordnet. Die Anordnung der Flächenkomponenten erfolgt dabei derart, dass zwei Teilmengen mit zwei unterschiedlichen Wirkrichtungen.

Aus der Druckschrift US 2003/0178901 A1 ist ein elektromagnetisches Positionierungssystem bekannt. Dieses umfasst eine erste Oberfläche mit einer Vielzahl von Elektromagneten sowie eine zweite Oberfläche mit einer Vielzahl von magnetischen Positioniereinheiten. Die zweite Oberfläche ist relativ zu der ersten Oberfläche drehbar angeordnet. Eine Aktivierung der Elektromagneten bewirkt somit eine Verdrehung der zweiten Oberfläche. Um eine Relativbewegung der ersten und der zweiten Fläche zueinander zu detektieren, kann die zweite Oberfläche mit einem magnetischen Positionsgeber versehen sein. Eine Bewegung der zweiten Oberfläche und damit des magnetischen Positionsgebers relativ zu der ersten Oberfläche induziert nun in den Spulen der Elektromagneten der ersten Oberfläche eine elektrische Spannung.

Aufgabe

Aufgabe der Erfindung ist es, ein flexibles Lager- bzw. Transportsystem zu schaffen.

Lösung

Diese Aufgabe wird durch die Erfindung mit den Merkmalen des unabhängigen Anspruchs gelöst. Vorteilhafte Weiterbildungen der Erfindung sind in den Unteransprüchen gekennzeichnet.

Das erfindungsgemäße Lager- oder Transportsystem hat einen elektromagnetischen Flächenmotor, der eine Transportvorrichtung antreibt. Als Transportvorrichtungen dienen insbesondere fahrbare Paletten oder Wagen, die auf Rädern oder Rollen gelagert sind. Der Flächenmotor weist eine Mehrzahl von aktiven Wandlern auf, die geeignete Magnetfelder zur Krafteinwirkung auf die Transportvorrichtungen erzeugen können. Die Transportvorrichtung ist hinsichtlich des Antriebs durch den Flächenmotor passiv ausgestaltet. Die Wandler sind vereinzelbar und können zu gewünschten Geometrien des Flächenmotors angeordnet werden. In den Flächenmotor ist mindestens eine Einrichtung zur Metalldetektion integriert, die als ein induktiver Näherungsschalter ausgebildet ist, wobei als Detektor entweder die Wandler als Sender und Empfangsspulen im Pulsmessverfahren fungieren oder individuelle rechteckig aufgebaute Detektionsspulen um oder über jedem einzelnen Polkopf eines Wandlers vorgesehen sind oder Detektionsspulen in rechteckigen Bahnen um jeweils eine Reihe der Polköpfe der Wandler geführt sind.

Die Lösung der Aufgaben geschieht also erfindungsgemäß dadurch, dass zu einer Plattform kombinierbare und vernetzbare Wandler, welche durch eine Steuerung kontrolliert Magnetfelder gestalten, die logistische Führung von Transportvorrichtungen bewirken. Die Wandler verfügen weiterhin über Leitungen und Schnittstellen zur Energie- und Informationsversorgung für den Eigen- und Fremdverbrauch. Die in der Größe, Ausprägung und zeitlicher Frequenz individuell gestaltbaren Magnetfelder üben Kräfte auf die Ankerelemente von Transportvorrichtungen aus. Die Anker sind vorzugsweise aus ferromagnetischen Elementen aufgebaut. Ferner übertragen die Wandler Energie und Daten kontaktlos zu den Transportvorrichtungen.

Die Erfindung nutzt das Prinzip des elektromagnetischen Flächenmotors. Die Wandler sind Elektromagnete und erzeugen mit Hilfe von Kern und Spule geeignete Magnetfelder zum Bewegen der Transportvorrichtungen.

Die Wandler werden über eine Steuereinheit gesteuert, welche im Betrieb den oder die Wandler derart steuert, dass über die durch den oder die Wandler erzeugte Kraft, die Lage oder Steifigkeit der Transportvorrichtungen verändert wird.

Es können somit im Wesentlichen, beispielsweise durch eine entsprechende Eingabe an der Steuereinheit, die über die Wandler wirkenden Kräfte derart verändert werden, dass sich die Transportvorrichtung in ihrer Lage verändert. Es können somit beliebige Bewegungen von Transportvorrichtungen durch entsprechende Ansteuerung der Wandler erzeugt werden. Die Transportvorrichtungen können dabei unterschiedlicher Größe und Form sein.

Der Erfindung kann Transportvorrichtungen unterschiedlicher Größe flexibel, automatisiert, umweltschonend und gleichzeitig zur richtigen Zeit, mit der richtigen Geschwindigkeit, zum gewünschten Ort und in der richtigen Menge zu bewegen.

Das erfindungsgemäße Transportsystem ist in bereits bestehende Netzwerke und Prozesse der Logistik, Informations- und Stromversorgung integrierbar.

Die erfindungsgemäße Plattform und deren Wandler können in einer Vielzahl von Bereichen eingesetzt werden. Sie kann beispielsweise in logistischen Lagern in Form von automatisierter gleichzeitiger Objektkoordination und Objektbewegung Verwendung finden. Die verwinkelt aufgebauten Flächenmotoren ermöglichen durch die magnetisierenden Kräfte, beispielhaft in Form von Objekthebeverfahren, eine Logistik über mehrere Ebenen und/oder Höhen. Flächenmotoren können auch an Wänden, Decken oder an Gestellen angebracht werden, und z. B. senkrecht oder kopfüber an der Decke aufgehängte Transportvorrichtungen bewegen.

Ebenso kann sie in produzierenden Bereichen flexibel den Materialfluss, Datenfluss und Energiefluss unterstützen und/oder steuern. Die automatisierte Versetzung von architektonischen und/oder gestalterischen Elementen, sowie die Bewegung von Behältern und produzierenden Systemen sind ebenso denkbar. Die Erfindung lässt sich sowohl im betrieblichen, öffentlichen und/oder privaten Bereichen einsetzten. Neben den pragmatischen Anwendungen sind auch gestalterische Integrationen der Plattform und/oder der Flächenmotoren denkbar. Durch die gesteuerte Übertragung von elektrischen Energien, Daten, thermischen Feldern und magnetischen Kräften können entsprechend elektronisch und/oder mechanisch ausgestaltete Systeme von Nutzen sein.

Um möglichst wenig Energie zu verbrauchen, erzeugen nur diejenigen Wandler ein Magnetfeld, die für die Bewegung der Transportvorrichtung benötigt werden. Dazu muss die Position der Transportvorrichtung bekannt sein. Diese ist entweder aus der Steuerung des Systems bekannt. Oder sie kann mit Hilfe eines in den Flächenmotor integrierten Metalldetektor festgestellt werden.

Damit die Wandler ein flexibles und erweiterbares Netzwerk bilden, sind sie derart ausgebildet, dass sie Energie oder Daten kontaktlos an die Transportvorrichtung oder an einen anderen Wandler übertragen können.

Die Übertragung kann beispielsweise mittels einer hochfrequenten Modulation der Magnetfelder erfolgen, die ohnehin von den vorhandenen Elektromagneten für die Bewegung der Transportvorrichtungen erzeugt werden. Die Energieversorgung und der Datenaustausch mit externen Systemen können dann mittels elektromagnetischer Felder, welche von den Wandlern erzeugt werden, erfolgen. Die Wandler können dazu ein Hochfrequenzmodul und/oder ein Mittelfrequenzmodul, eine Kontrolleinheit, sowie ein Koppelelement beinhalten, um elektromagnetische Felder im entsprechenden Frequenzbereich zu gestalten und Daten und/oder Energie austauschen zu können. Die Wandler fungieren als Sender und/oder als Empfänger.

Die Erfindung kann dadurch als Netzwerkbestandteil elektrische Energie und Daten sowohl für den Eigenbedarf als auch für Fremdnutzer weiterleiten.

In einer weiteren Ausführungsform der Erfindung beinhalten die Wandler an der Oberfläche befestigte Kontaktpunkte über welche Energie in Form von elektrischem Strom und/oder elektrische Daten an externe Transportvorrichtungen und/oder Nutzer übertragen werden können.

Eine dreidimensionale, nicht ebene Form eines oder mehrerer Flächenmotoren oder auch der Plattform als Ganzes, kann durch eine entsprechende Formgebung eines Flächenmotors und/oder der Ränder von wenigstes einem Flächenmotor erreicht werden, insbesondere durch die Neigung oder Formgebung von aufeinander stoßenden Kanten von benachbarten Flächenmotoren.

In einer weiteren Ausführungsform der Erfindung kann die Randgestaltung eines oder mehrerer Flächenmotoren eine verbindende Steckverbindung, Schraubverbindung, magnetische Verbindung und/oder Haftverbindung aufweisen, welche eine relative Stabilität der zusammenhängenden oder benachbarten Wandler schaffen soll.

Die Steuereinheit des Flächenmotors und/oder der Plattform kann außerhalb des Flächenmotors und/oder der Plattform als zentrale Steuereinheit ausgebildet sein, wobei die Steuersignale über elektrische Leitungen, in den Flächenmotoren selbst, extern gelegen und/oder drahtlos an die einzelnen Wandler übermittelt werden. Es ist jedoch auch möglich, dass die Steuereinheit dezentral aus mehreren, in den Flächenmotoren integrierten Steuerelementen gebildet ist, wobei die Steuerelemente elektrisch und/oder drahtlos miteinander kommunizieren können.

Die Leitungen bzw. ein Teil der Leitungen der Flächenmotoren können beispielsweise über flexible Steckverbindungselemente und/oder Kontaktverbindungselemente, welche sich am Rand der Wandler befinden, miteinander gekoppelt werden um einen Energietransfer, einen Datentransfer und/oder Steuersignaltransfer zwischen den Wandlern zu ermöglichen.

Die Wandler können eine beliebige Form aufweisen. Beispielsweise könne sie in Draufsicht kreisförmig, oval oder als Vielecke ausgestaltet sein. Vorzugsweise passen die Vielecke derart zusammen, dass eine im Wesentlichen durchgehende Fläche erzeugt wird. In den Flächenmotoren ist mindestens ein Wandler integriert.

Die Wandler können eine beliebige Form und Ausgestaltung aufweisen. Beispielsweise können die Wandler Elektromagnete in U-Form, Topf-Form, Stab-Form, E-Form oder in anderweitiger Form beinhalten. In der Draufsicht können die Polflächen der Elektromagnete und/oder Wandler eine beliebige Form, beispielsweise kreisförmig, rund oder vieleckig, aufweisen. Die Größe und Gestalt der in den Flächenmotoren integrierten Wandler kann gegenüber anderen Wandlern im Flächenmotor variieren.

Je nach Anwendungsbereich können die Flächenmotoren oder Wandler aus unterschiedlichen Materialien bestehen. Vorzugsweise besteht der Flächenmotor aus einem Trägermaterial, in das ein oder mehrere Wandler integriert sind. Das Trägermaterial kann Stahl, Beton, Blech, Plastik, Glas oder dergleichen sein. Seine Form bzw. Steifigkeit beeinflusst seine Tragfähigkeit und Belastbarkeit. Es ist ferner möglich, eine oder mehrere Oberflächen der Flächenmotoren oder Wandler komplett oder teilweise mit einem Material zu überziehen, wobei das Material beispielsweise ein elektromagnetisch abschirmendes, wärmeableitendes, weiches und/oder visuell gestaltendes Material sein kann.

Die Flächenmotoren können auf Böden, Wänden, Decken oder Ähnlichem ausgelegt, aufgehängt oder angesteckt werden. Entsprechende Haltevorrichtungen können in und/oder an den Flächenmotoren angebracht sein.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1    eine Draufsicht auf eine erste Ausführungsform des erfindungsgemäßen Flächenmotors;

Fig. 2    eine Querschnittsansicht eines Flächenmotors von der Seite, welches Elektromagnete als Wandler verwendet;

Fig. 3    eine Draufsicht eines weiteren Ausführungsformbeispiels;

Fig. 4    eine Draufsicht eines weiteren Ausführungsformbeispiels;

Fig. 5    eine Draufsicht eines weiteren Ausführungsformbeispiels;

Fig. 6    eine Querschnittsansicht eines abgewinkelten Flächenmotors von der Seite;

Fig. 7    eine Querschnittsansicht eines abgerundeten Flächenmotors von der Seite;

Fig. 8    eine seitliche Querschnittsansicht eines nicht ebenen Flächenmotors mit unterschiedlich geformten Wandlern;

Fig. 9    die Wirkungsweise eines Flächenmotors auf eine beispielhafte Transportvorrichtung in Querschnittsansicht;

Fig. 10A    eine dreidimensionale Darstellung eines beispielhaften logistischen Anwendungsgebietes der Erfindung;

Fig. 10B    eine dreidimensionale Darstellung einer beispielhaften Transportvorrichtung;

Fig. 11    eine dreidimensionale Darstellung einer beispielhaften Einbindung und Anwendung der Erfindung in ein bestehendes Netzwerk;

Fig. 12    die Struktur der Oberfläche des Induktionsmotors mit Kern / Spulen - primärer Teil und Anker;

Fig. 13    eine schematische Darstellung eines Wandlers;

Fig. 14    einen Ausschnitt eines Flächenmotors;

Fig. 15    verschiedenartige Polflächen;

Fig. 16    einen Flachankermagnet;

Fig. 17    eine orthozyklische Wicklung;

Fig. 18    Wicklungen im Luftspalt;

Fig. 19    verjüngte Zahn- / Statorachse

Fig. 20    ein aufgefächertes Flächenelement

Fig. 21    ein simplifiziertes aufgefächertes Flächenelement

Fig. 22    den Aufbau / Verzahnung eines linearen Schrittmotors und Ankers

Fig. 23    eine Draufsicht auf einen dreieckigen und einen runden Flächenmotor;

Fig. 24    eine Querschnittsansicht eines abgewinkelten Flächenmotors von der Seite sowie eine Querschnittsansicht eines abgerundeten Flächenmotors von der Seite;

Fig. 25A    Statoranordnung A;

Fig. 25B    Statoranordnung B, welche einen Flächenmotor mit zusätzlichem Freiheitsgrad darstellt;

Fig. 25C    Statorpolaranordnung A mit 8-Kantpolköpfen und zusätzlichem Freiheitsgrad;

Fig. 26    ein aufgefächertes Flächenelement mit abgeschrägten Rahmen und Verschraubungen;

Fig. 27    Flächenelemente der Größen 250x250mm, 500x500mm und 100x100mm;

Fig. 28    eine Plattform mit kombinierten Flächenelementen;

Fig. 29    kombinierte Flächenelemente zur Plattformerzeugung;

Fig. 30    elektromagnetische Plattformen zum automatisierten gleichzeitigen individuellen Antrieb einzelner Transportvorrichtung;

Fig. 31    eine Statorplatte mit Spulenachsen, Verstrebungen und Verbindungselementen;

Fig. 32    eine Platine mit Stabilisierungsringen;

Fig. 33    eine Statorplatte mit aufgesetzter Platine;

Fig. 34A    die Draufsicht und Unterseite einer Spule;

Fig. 34B    die Spulen vergossen mit zwei unterschiedlichen Materialien;

Fig. 35    eine vergossene Spule auf die Platine auf-

| Fig. 36 | eine Statorplatte mit aufgesetzten Spulen; |
| Fig. 37 | wie ein Statorkopf in eine Statorplatte versenkt wird; |
| Fig. 38 | wie die Polköpfe nach dem Aufstecken der Spulen in die Achsen der Statorplatte versenkt werden; |
| Fig. 39 | zwei verbundene Flächenelemente (transparente Darstellung); |
| Fig. 40 | eine Flächenelementfixierungsvorrichtung mit aufgestecktem / aufgeschraubtem Fixierungsring; |
| Fig. 41 | einen steckbaren Fixierring mit Isolationsschicht und einen aufschraubbaren Fixierring mit Isolationsschicht; |
| Fig. 42 | wie benachbarte Flächenelemente über die Ringelemente der Statorplatte durch einen Fixierring zusammengezogen und durch eine versenkbare Schraube am Untergrund fixiert werden; |
| Fig. 43 | eine Platine, eine Statorplatte und Kontaktstellen; |
| Fig. 44 | eine eingebundene Kontaktstelle und Kontaktmaterialangrenzung an die Platine |
| Fig. 45 | eine Kontaktstelle mit Kontaktmaterial und Kontaktmaterial, jeweils aus zwei Perspektiven; |
| Fig. 46 | Kontakt- und Fixierstellen des Flächenelements mit Kontaktfixierringen und jeweiligen Schrauben sowie einer Kontakt- und Fixierstelle mit Fixierring und entsprechender Schraube in der Flächenelementmitte; |
| Fig. 47 | einen nackten Kontaktfixierring, einen Kontaktfixierring mit Isolationsschicht, einen Kontaktfixierring mit Isolationsschicht und aufgebrachten Kontaktringen und einen Kontaktringaufbau ohne Kontaktfixierring; |
| Fig. 48 | einen einzelnen Kontaktring; |
| Fig. 49 | eine Schraube mit Kontaktfixierring und Kontaktstellen der Flächenelemente: offen, mit versenktem Kontaktfixierring und mit versenkter Schraube; |
| Fig. 50 | einen Kontaktfixierring mit Kugelkontakten in den Flächenelementen; |
| Fig. 51 | einen versenkten Kontaktadapter mit Steckvorrichtung; |
| Fig. 52 | einen Kontaktadapter mit Ringkontakten, einen Kontaktadapter ohne Ringkontakte, Kontaktadapter mit herausstehendem Schraubgewinde; |
| Fig. 53 | diverse Steckvorrichtungen welche in einen Kontaktadapter eingesteckt werden können; |
| Fig. 54A | die Vorderansicht einer Seitenwand mit Aussparungen |
| Fig. 54B | die Rückansicht einer Seitenwand mit Aussparungen und Verstrebungen |
| Fig. 55 | eine Hüllenbodenplatte; |
| Fig. 56 | eine Hüllenbodenplatte mit Hüllenseiten; |
| Fig. 57 | eine Hüllenseiten mit integrierter Statorplatte; |
| Fig. 58 | Hüllendachplatte / -deckel von unten; |
| Fig. 59 | eine gesamte, vergossene Hülle; |
| Fig. 60 | ein gerades / abgeschnittenes Randprofil; |
| Fig. 61 | ein gerades / abgeschnittenes Profil mit abgeflachten Ecken; |
| Fig. 62 | ein abgeschrägtes Randprofil; |
| Fig. 63 | eine Verschraubungsbohrung; |
| Fig. 64 | eine Flächenelementfixierungsstelle; |
| Fig. 65 | eine Flächenelementfixierungsstelle mit versenkter Schraube; |
| Fig. 66 | einen schrägen Rand mit zwei Schlitzen; |
| Fig. 67 | eine Rahmenelement-Schräge 25cm mit zwei Schraubenversenkungen und einer Flächenelementfixierungsstelle; |
| Fig. 68 | eine Rahmenecke mit Verschraubungsbohrung, eine Verschraubungsbohrung in der Rahmenecke und Steck- / Verschraubungsschlitze der Rahmenecke; |
| Fig. 69 | zusammengesetzte, abgeschrägte Ränder und Ecken eines Flächenelements; |
| Fig. 70 | Rahmenelemente (Schräg), Rahmenekelemente von unten mit eingelassenen Schlitzen und eingebrachter Verschraubung; |
| Fig. 71 | beispielhafte Vernetzung (Vogelperspektive) von Flächenelementen; |
| Fig. 72 | Grobstruktur eines Regalsystems; |
| Fig. 73 | die Wirkungsweise eines Flächenmotors auf eine beispielhafte Transportvorrichtung in Querschnittsansicht; |
| Fig. 74 | magnetische Verzahnung; |
| Fig. 75 | eine Transportvorrichtung mit aufgesetztem Stapelbehälter; |
| Fig. 76 | eine Transportvorrichtung mit aufgesetzter Europalette; |
| Fig. 77 | die Kraftbildung in Abhängigkeit des Polteilungsverhältnisses; |
| Fig. 78 | ein 9-poliges FE-Modell für die Schubkraftberechnung; |
| Fig. 79 | vier Statormodule / Flächenmotoren mit einem großflächigen Anker; |
| Fig. 80 | den prinzipiellen Aufbau eines Vierpols; |
| Fig. 81 | einen Pick-Up; |
| Fig. 82 | das Prinzip eines Metalldetektors (Beispiel, nicht Teil der beanspruchten Erfindung); |
| Fig. 83 | ein Flächenelement mit einzelnen Spulen zur Metalldetektion; |
| Fig. 84 | rechteckig um jede Spule individuell verlaufende Metalldetektionsspulen und temporäres Detektieren der Flächenelementoberfläche sowie Detektion eines Objekts; |
| Fig. 85 | ein Flächenelement mit in Bahnen verlaufenden Spulen zur Metalldetektion; |
| Fig. 86 | in Bahnen verlaufende und übereinandergelegte Spulen deren Ende bzw. Anfang über |

die Seitenwände des Gehäuses zur Elektrik des Flächenelements geführt werden;

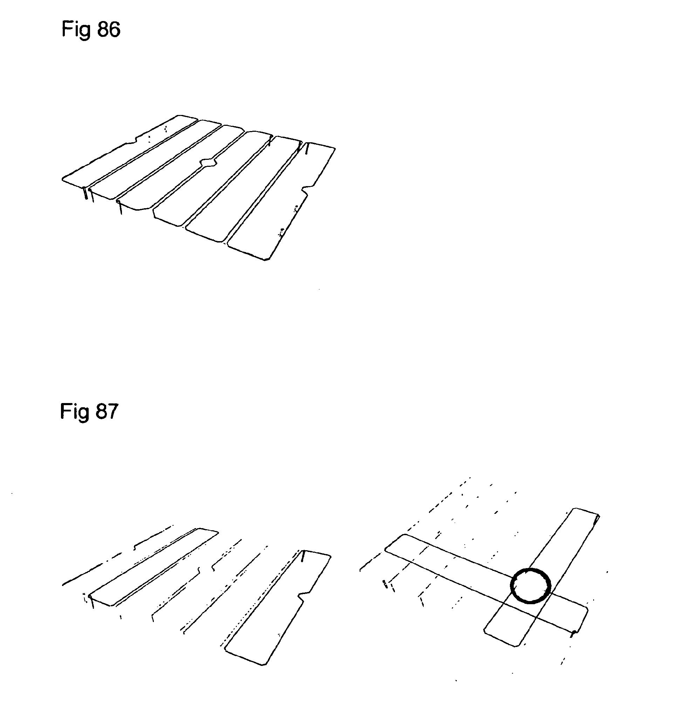

Fig. 87 gepulste Detektion durch übereinanderliegende Spulenbahnen und entsprechende Objektdetektierung;

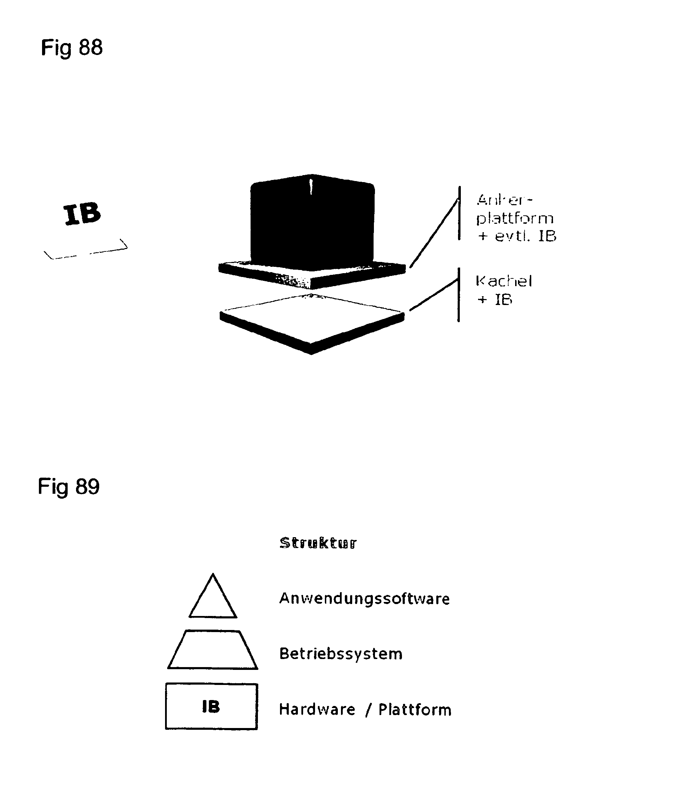

Fig. 88 eine schematische Darstellung der Verwendung der IB; und

Fig. 89 eine schematische Struktur der Steuerungssoftware.

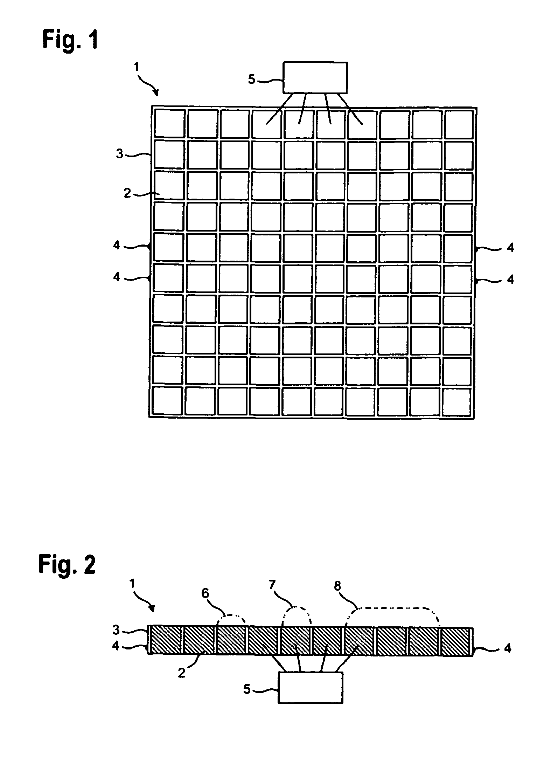

Fig. 1 zeigt eine Draufsicht auf eine erste Ausführungsform eines erfindungsgemäßen Flächenmotors 1. Aus Übersichtsgründen sind hierbei nicht alle Wandler 2 und Umhüllungen 3 mit den entsprechenden Bezugszeichen versehen. Der Flächenmotor 1 ist im Wesentlichen eben und umfasst eine Vielzahl integrierter, teilweise nebeneinander angeordnete Wandlerelemente 2, so dass ein rechteckförmiger Flächenmotor 1 mit mehreren Zeilen an Wandlerelementen 2 gebildet wird.

Die Wandlerelemente 2 sind elektromagnetische, individuell ansteuerbare Spulen oder beinhalten diese. Die wirksame Ankeroberfläche eines Wandlers 2 ist eben und symmetrisch aufgebaut, wobei der Wandler 2 eine im Wesentlichen durchgängige Fläche mit benachbarten gleichartigen Wandlern 2 erzeugt.

Jeder Wandler 2 wird von nichtferromagnetischem Material 3 umschlossen. Das nichtferromagnetische Material 3 wirkt ebenso als Füllstoff für Lücken in dem Flächenmotor 1. Die Elektromagnete der Wandler 2 werden über eine (nicht gezeigte) elektrische Energiequelle, beispielsweise über eine Netzspannung, durch (nicht gezeigte) unter und/oder zwischen den Wandlern liegenden Leitungen mit Strom versorgt.

Wie in Fig. 1 schematisch angedeutet ist, wird der Betrieb der einzelnen Wandler 2 eines Flächenmotors 1 über eine elektronische Steuereinheit 5 gesteuert. Aus Übersichtlichkeitsgründen wird in den Zeichnungen nur eine vereinfachte Kopplung der Steuereinheit 5 zu wenigen Wandlern 2 angedeutet. Die Steuereinheit 5 kann zum Beispiel die elektrische Energiezufuhr der Energiequelle zu den Wandlern 2 unterbrechen. Ferner kann die Stärke des zugeführten elektrischen Stroms durch die Steuereinheit 5 geregelt werden.

Die elektrische Energieversorgung und die elektrische Informationsversorgung eines Flächenmotors 1 und dessen Steuerung 5 erfolgt über (nicht gezeigte) Leitungen und an den Seiten des Flächenmotors 1 angebrachte Kontakte 4. Die Kontakte 4 dienen in Verbindung mit Kontakten 4 anderer Wandler ebenfalls der Weitergabe von elektrischer Energie und Daten an andere Wandler, Transportvorrichtungen und/oder Nutznießer.

Die Ausgestaltung der Kontakte 4 kann sich an üblichen Kontaktverbindungen, Steckverbindungen und/oder Schleifkontakten orientieren. Bevorzugt wird eine federnde in den Wandler versenkbare Kontaktlösung, welche in eingedrücktem Zustand bündig mit der Seitenoberfläche des Wandlers abschließt.

Fig. 2 zeigt die Seitenansicht eines Flächenmotors 1, welches nebeneinander angeordnete Wandler 2 aufweist. Die Form entspricht hierbei der in Fig. 1 gezeigten Form des Flächenmotors 1 von der Seite betrachtet. Alle Wandler sind analog zu Fig. 1 zueinander angeordnet und mit einem nichtferromagnetischem Material 3 umhüllt. Mittels der durch das Steuerelement 5 angesteuerten Wandler 2 wird ein Magnetfeld aufgebaut. Die Magnetfeldausprägung 6, 7, 8, beispielhaft in der Zeichnung dargestellt, kann in ihrer Stärke, in ihrem zeitlichen Aufbau, ihrer Struktur und Gestaltung durch den Anwender vorgegeben und/oder beeinflusst werden.

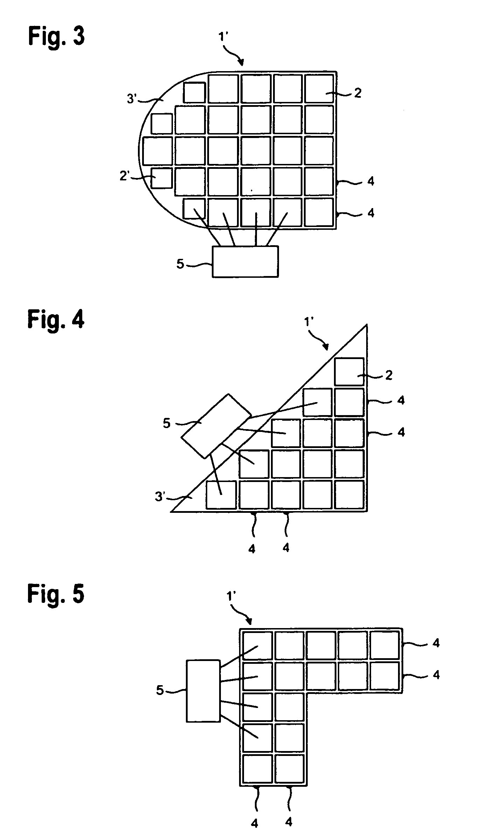

Die Fig. 3, 4 und 5 zeigen eine Draufsicht weiterer beispielhafter Ausführungsformen 1' des erfindungsgemäßen Flächenmotors 1. In den Fig. 3, 4, 5, 6, 7 und 8 erkennt man, dass die Form der einzelnen Wandlerelemente 2 beliebig gewählt werden kann. Gleiches gilt für die Gesamtform des Flächenmotors 1 und der sich daraus ergebenen Plattform. Insbesondere ist die Form nicht auf Rechtecke beschränkt, beispielsweise könnten auch die inneren Wandlerelemente 2 eine beliebige andere Form, wie z. B. eine Wabenstruktur oder ähnliches aufweisen. Ansonsten entspricht die Funktionsweise der einzelnen Wandler 2, der Steuerelemente 5, des Flächenmotors 1 und der Plattform der in Bezug auf Fig. 1 beschriebenen Funktionsweise.

Der in Fig. 3 gezeigte Flächenmotor 1' weist eine, aus der Draufsicht betrachtet, seitliche Rundung auf, was dadurch bewirkt wird, dass Wandler 2 fehlen, Wandler 2 in ihrer Position im Flächenmotor 1' versetzt sind und einige Wandler 2' kleiner als die anderen sind. Die gleichmäßige Rundung in Fig. 3 wird durch Auffüllung mit nichtferromagnetischem Material 3 erreicht.

Der in Fig. 4 gezeigte Flächenmotor 1' weist eine, aus der Draufsicht betrachtet, dreieckige Form auf. Die gleichmäßige Formgebung in Fig. 4 wird durch Auffüllung mit nichtferromagnetischem Material 3 erreicht.

Fig. 5 zeigt in Draufsicht eine Darstellung einer abgewinkelten Ausführungsform eines Flächenmotors 1' auf.

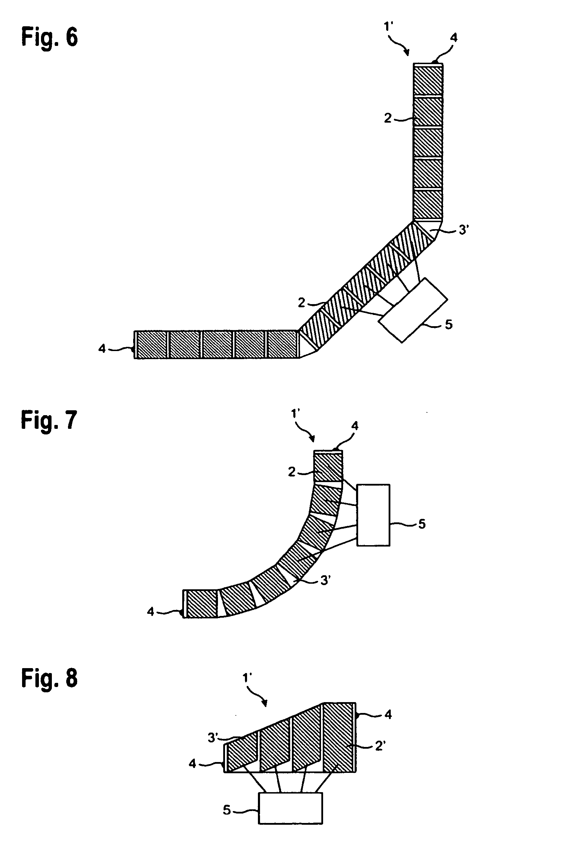

Die Ausführungsform gemäß Fig. 6 zeigt eine Seitenansicht einer weiteren Ausführungsform eines erfindungsgemäßen Flächenmotors 1. Es handelt sich um einen winklig dreidimensional aufgebauten Flächenmotor 1'. Diese Formgebung wird dadurch erreicht, dass Wandler 2 im unterschiedlich starken Winkel zueinander angeordnet sind. Die durch die Verwinklung hervorgerufenen Spalten werden durch nichtferromagnetisches Material 3 aufgefüllt. Die Verbindung zwischen den in Fig. 6 dargestellten Wandlern 2 wird durch elektrische Leitungen oder Kontaktverbundstücke (nicht gezeigt), welche im entstandenen Spalt anstatt des nichtferromagnetischen Materials 3 eingesetzt werden, erreicht. Beim Aktivieren der Wandler 2 bilden sich geeignet gestaltete Magnetfelder, welche eine Kraft auf ferromagnetische Transportvorrichtungen ausüben und diese von einer waagrechten Position in eine senkrechte Position führen.

Die Ausführungsform gemäß Fig. 7 unterscheidet sich von der Ausführungsform gemäß Fig. 2 dadurch, dass der Flächenmotor 1 nicht eben ist, sondern eine dreidimensionale gerundete Formvariante des Flächenmotors 1 aufweist. Diese Formgebung wird dadurch erreicht, dass die Wandler 2 im unterschiedlich starken Winkel zueinander angeordnet sind. Die Kopfteile der Wandler 2 sind in Fig. 7 näher an die Kopfteile der benachbarten Wandler 2 gerückt als die Fußteile. Diese Formgebung ermöglicht verbindende Flächenmotoren 1' zwischen waagrecht liegenden Flächenmotoren 1 und senkrecht aufgehängten Flächenmotoren 1.

Es kann durch entsprechende Formgebung der Flächenmotoren 1 eine nahezu beliebige dreidimensionale Oberfläche erreicht werden. Dies ermöglicht eine dreidimensionale Bewegung von Transportvorrichtungen mit ferromagnetischen Elementen.

Fig. 8 zeigt eine seitliche Schnittansicht einer Ausführungsform eines erfindungsgemäßen Flächenmotors 1. Die Wandler 2' sind unterschiedlich geformt. Die Kraft, die durch die von diesem Flächenmotor aufgebauten Magnetfelder auf ferromagnetische Transportvorrichtungen ausgeübt wird, bewegt diese Transportvorrichtungen in eine gegenüber der Waagerechten angewinkelte Stellung oder auf eine höhere Ebene. Für eine gleichmäßigere Formgebung des Flächenmotors 1' werden entstandene Spalten und Lücken durch nichtferromagnetisches Material 3 aufgefüllt.

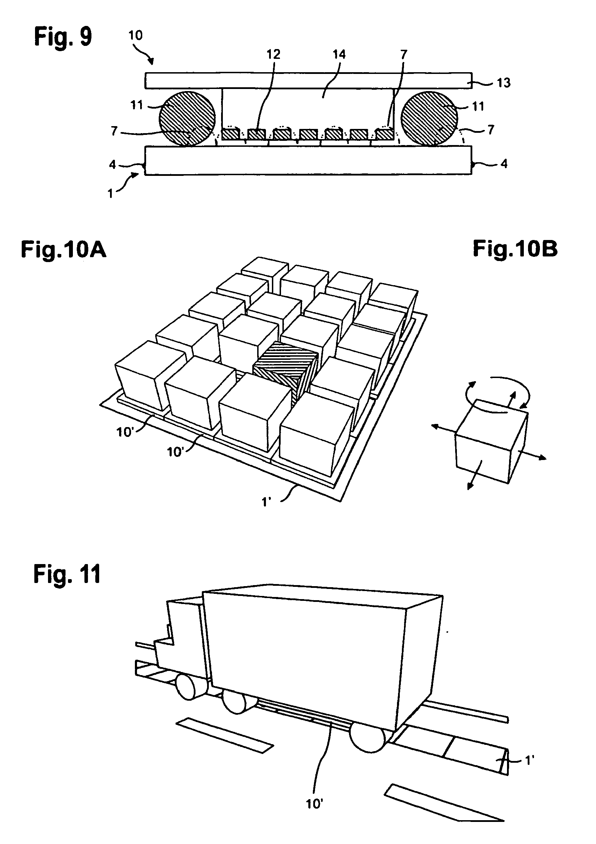

Fig. 9 zeigt in einer seitlichen Schnittansicht schematisch eine Ausführungsform einer auf einem Flächenmotor 1 angeordneten Transportvorrichtung 10. Die Transportvorrichtung 10 bewegt sich auf Rädern 11. Sie hat einen Unterbau 14 und eine darüber befindliche Lade- oder Transportfläche 13. Im Unterbau 14 befindet sich bodenseitig, wenig über dem Boden und damit wenig über dem Flächenmotor 1 mindestens ein ferromagnetisches Element 12. Ebenso wie der Unterbau 14 können die Räder 11 mit ferromagnetischen Elementen durchsetzt sein oder daraus bestehen. Durch geeignete, zeitlich variierende Ansteuerung der Wandler im Flächenmotor 1 bilden sich Magnetfelder 7, die eine Kraft auf die Transportvorrichtung 10 ausüben, um diese zu bewegen.

Die Transportvorrichtung 10 kann für ihre elektrische Energieversorgung und Datenübertragung die kontaktlose Energiezuführung oder die bidirektionale Datenübertragung über die Wandler nutzen.

Fig. 10A zeigt die dreidimensionale Ansicht einer schematisch dargestellten logistischen Anwendung. Gelagerte Transportvorrichtungen 16 sind individuell getragen von beweglichen Transportvorrichtungen 10'. Diese können wiederum individuell von den Wandlern im Flächenmotor 1' bewegt werden.

Die gleichzeitige individuelle Verschiebung von mehreren Transportvorrichtungen 16 in einem Lager mit Flächenmotoren 1 spart im Vergleich zu herkömmlichen Lagersystemen Transportwege und Raum. Letzteres durch das problemlose Ausnutzen von Lagerlücken. Weiterhin ist der Platztausch zwischen benachbarten Transportvorrichtungen 16 möglich, so dass schwer zugänglich gelagerte Transportvorrichtungen 16 an den Rand des Lagers transportiert werden können.

Wie in Fig. 10B angedeutet, kann eine Transportvorrichtung 10' auf einem Flächenmotor 1 horizontal in alle Richtungen bewegt werden. Ferner kann die Transportvorrichtungen 10' um ihre senkrechte Achse gedreht werden.

In der schematischen Darstellung gemäß Fig. 11 wird beispielhaft die Einbindung und Anwendung der Erfindung in ein bestehendes Netzwerk - hier eine Straße - zum Ausdruck gebracht. Dazu werden Flächenmotoren 1' in die Straße eingelassen. Ergänzend weisen Lastkraftwagen 15 an ihrer Unterseite einen Unterbau 14 mit Ankern 12 auf. Dies ermöglicht die Bewegung der Lastkraftwagen 15 durch magnetische Kräfte. Denkbar ist auch eine Unterstützung der durch einen herkömmlichen Motor bewirkten Eigenbewegung der Lastkraftwagen 15 durch die geschilderten Einrichtungen. Auch können mit den geschilderten Einrichtungen Lastkraftwagen 15 abgebremst werden.

Bevor die technischen Details näher erläutert werden, sollen die verwendeten Begriffe definiert werden:

● Mit dem Begriff "Wandler" ist ein einzelner Elektromagnet gemeint.
● Ein Elektromagnet weist typischerweise folgende Komponenten auf:

o eine Spule, die aus Wicklungen von leitenden, lackierten Drähten aufgebaut ist; und
o einen Spulkern, der typischerweise aus Eisen besteht; der Spulenkern wird gelegentlich auch als "Achse" bezeichnet;
o als "Stator" werden diejenigen Teile eines Elektromagneten bezeichnet, die nicht zur Wicklung gehören. Dies sind insbesondere (siehe auch unten unter 2.1):

■ der Spulenkern,
■ der Polfuß und
■ der Polkopf;

● Mit "Anker" oder "Läufer" bezeichnet man die Permanentmagnete oder ferromagnetischen Elemente, die an der Transportvorrichtung angebracht sind und auf die die Kräfte der Magnetfelder der Wandler wirken.
● Mit "Flächenelement" wird eine zusammenhängende Anordnung von einer Mehrzahl von Wandlern bezeichnet. Typischerweise kann man mehrere Wandler zu einem rechteckigen Flächenelement von z. B. 6x6 oder 10x10 Wandlern verbinden oder einstückig herstellen.

## Allgemeines

Gegenstand der Projektidee ist die Entwicklung und der Vertrieb adaptiv IT-gesteuerter Logistik über Plattformen, welche durch elektromagnetische Felder kontaktlos Kräfte und Energien und Daten an Objekte und Vorrichtungen übertragen. Objekte und Vorrichtungen beliebiger Form und Größe können auf diese Weise flexibel, einzeln, im Verbund oder schwarmartig, gleichzeitig im Raum präzise bewegt sowie mit Strom und Daten versorgt werden. Dies gestattet sowohl die Initiierung von Hol- als auch Bringprozessen jeglicher Art "Just in Sequenz" und bietet die Möglichkeit zur Gestaltung von fluiden Prozessen (z.B. die Durchdringung verschiedener Materialströme in der Lager- und Fertigungslogistik). Die vollautomatisierte logistische Objektkoordination und -verwaltung passt sich optimal ändernden Situationen und Bedürfnissen dynamisch an. Fertigungsabläufe und Feinverteilungsprozesse können in Echtzeit gestaltet werden, so dass ein Hybrid zwischen Einzel-, Serienfertigung und Lager entsteht. Durch individuelle Bewegungen von mehreren Objekten simultan kann in der Lagerhaltung bei maximaler Speicherdichte im Lager selbst eine automatisierte Vorkommissionierung stattfinden bevor die Waren zum Akteur / Verarbeitungsort bewegt werden. Objekte können im Rahmen der Plattform zur richtigen Zeit, zum richtigen Ort, in der richtigen Menge, in der richtigen Qualität, zu geringen Kosten und äußerst umweltgerecht individuell, flexibel und gleichzeitig ausgeliefert werden. Die hohe Genauigkeit und das große Integrationspotential (z.B. in mechanische Systeme oder architektonische Gegebenheiten) ermöglicht gleichzeitig die Umsetzung von kleineren Prozessen, wie beispielsweise eine schnelle Ein- und Ausgliederung von Bearbeitungspositionen (Maschinen) oder Werkstücken, als auch die Realisierung von großflächigen Prozessen mit erhöhtem Logistikaufkommen über Unternehmensgrenzen hinaus. Das schienenlose System verhält sich durch die schlichte Energie- und Datenlogistik äußerst kompatibel und integrativ zu bestehenden Netzwerken, Gegebenheiten, externen Nutznießern und Prozessen. Die Steuerung aller Variablen erfolgt durch ein Warehouse-Control-System, welches neben Prozesssimulationen und ERP-Anbindungen eine immer aktuelle Datentransparenz ermöglicht.

Im Vergleich zu bestehenden Lösungen realisiert das System durch die integrativ ausgeprägte Automatisation ein höheres Einsparungspotential bei Prozessen, Personal, Lagerflächen, Ressourcen sowie Betriebs- und Wartungskosten. Im Bereich der innerbetrieblichen Logistik bedeutet dies einen simultanen und schnelleren Zugriff auf alle Artikel, höhere Umschlagsfrequenzen, kürzere Durchlaufzeiten sowie Null-Ausfallzeiten bei gleichzeitig geringem Handlingsaufwand (Ware-zum-Mann-Prinzip). Das hoch agile System ermöglicht, dass logistische Prozesse und Lager sich in Echtzeit dynamisch an ändernde Situationen immer optimal anpassen.

## Inhaltsverzeichnis

1. Funktionsweise des Antriebs auf dem Prinzip des Induktionsmotors

    1.1 Funktion von Planarantrieben auf Grundlage des Oberflächen-Induktionsmotors

2. Wandler / Spule / Elektromagnet

    2.1 Wandler / Stator
    2.2 Wicklung
    2.3 Material

3. Konstruktion Flächenelement

    3.1 Konstruktionsprinzip
    3.2 Konstruktionsübersicht und Aufbau
    3.3 Größenausführungen
    3.4 Kombinationsverfahren
    3.5 Statorfuß / Statorplatte
    3.6 Platine
    3.7 Spulen / Wandler
    3.8 Statorpolköpfe
    3.9 Kombinations- / Fixierungsstellen
    3.10 Schnitt- / Kontaktstellen
    3.11 Zusätzliche Nutzenfunktionen der Schnitt- und Kontaktstellen
    3.12 Hülle / Gehäuse
    3.13 Plattformränder / Plattformrahmen

4. Schaltung und elektronische Steuerung
5. Transportvorrichtungen/Anker

    5.1 Anker- und Statortopologien von permanent erregten Synchronmaschinen

        5.1.1 Statorzahnteilung kleiner als die Ankerpolteilung
        5.1.2 Statorzahnteilung beträgt Ankerpolteilung / ms
        5.1.3 Statorzahnteilung größer als die Rotorzahnteilung

    5.2 Elektromechanische Energiewandlung - Kraftdichten 6. Kontaktlose Energie- und Datenübertragung

7. Metalldetektion / Sensorik
8. Identifikation
9. Software

    9.1 Betriebssystem
    9.2 Anwendungssoftware

1. Funktionsweise des Antriebs auf dem Prinzip des Induktionsmotors

Der folgende Abschnitt beschreibt die Technik der planaren Antriebsstruktur beruhend auf dem Prinzip des OberflächenInduktionsmotor / Flächenmotors. Auf der Grundlage eines 3D-Magnet-Ersatzschaltbildes wird eine magnetischen Wanderwelle beschrieben, welche in eine beliebige Richtung bewegt werden kann.

Planar-Laufwerke spielen eine wichtige Rolle in mehreren industriellen Bereichen (z.B. zur Herstellung von Halbleiten Systemen, Werkzeugmaschinen-Engineering, Lithographie, SMD-Montage-, Laser-Schneiden und logistische Systeme). Die besonderen Anforderungen an planaren Antriebe über die strukturelle und funktionelle Parameter hängen von der Anwendung ab. Nach Angaben der Anforderungen der verschiedenen Energie-Prinzipien und-Konverter können die unterschiedlichen Bauarten angewendet werden. Die meisten bestehenden planaren Antriebe wurden entwickelt für hohe Präzision und hohe Dynamik. Mittlerweile gibt es Bereiche, in denen zuverlässige robuste und kostengünstige planaren Antriebs ohne hohe Anforderungen an Präzision und Dynamik erforderlich sind.

Für solche Anforderungen sind planare Laufwerke auf der Grundlage des Induktionsmotorprinzips gut geeignet. Dies hat Grundsätzlich folgende strukturellen Vorteile:

- ● Relativ einfache Konstruktion;
- ● Einen homogenen und unstrukturierten sekundär Teil (Anker), der bewegt wird;
- ● Willkürliche Ausrichtung der Antriebstechnik.

Prototypen von Planarmotoren basieren auf einer Kombination aus mehreren linearen Induktions-Motoren. Hier soll ein planarer

Motor auf der Grundlage eines Oberflächen-Induktionsmotors mit isotropen primären und sekundären magnetischen Eigenschaften dargestellt werden.

1.1 Funktion von Planarantrieben auf Grundlage des Oberflächen-Induktionsmotors

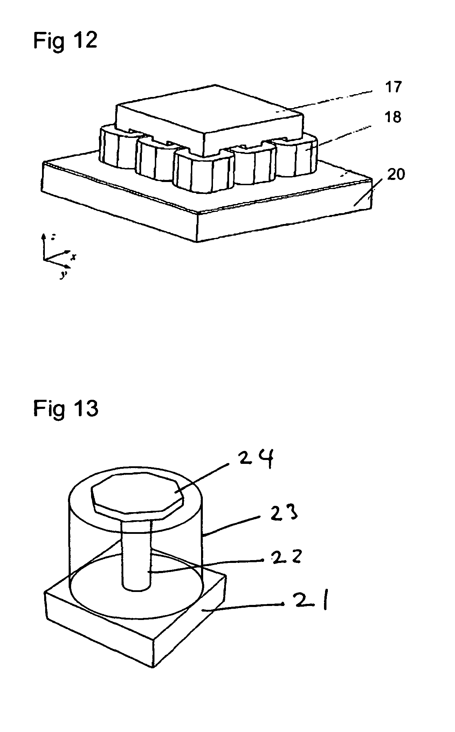

Die Struktur des Oberflächen-Induktionsmotors wird in Fig. 12 gezeigt. Im Gegensatz zu der dargestellten Skizzierung ist die Konstruktion der Erfindung allerdings "auf dem Kopf" gestellt. Der Induktionsmotor ist als Flächenelement in den Boden eingelassen und bewegt den Läufer / Anker über sich.

Die Materialanforderungen an den primären Kern und Anker sind: magnetisch isotrope Eigenschaften, hohe Sättigung der magnetischen Flussdichte, niedrige Leitfähigkeit und kleine Hysterese.

Ein weichmagnetisches Mischmaterial erfüllt am besten die genannten Anforderungen.

Prinzipiell sind für den Flächenmotor verschiedene Zahn- /Oberflächenstruktur-konfigurationen möglich. In diesem Beispiel wird der Oberflächeninduktionsmotor mit neun Zähnen beschrieben, wobei der Abstand zwischen den einzelnen Zähnen entlang der x- und y-Koordinaten gleich ist und die Oberflächenstruktur symmetrisch aufgebaut wurde.

Die Spulen sind mit einem Drei-Phasen-System ausgestattet um eine magnetische Welle bzw. magnetische Wirbelströme in der Luftlücke / Luftspalt zwischen den Polen und dem Interaktionsanker zu erzeugen. Als Ergebnis dieser Interaktion wird ein Antrieb in eine beliebige Richtung hergestellt. Abhängig von der Wahl der Gestaltung der Parameter kann dieser Maschinenaufbau sowohl als Längs- oder als transversaler Induktionsmotor fungieren. Die Lagerung / Aufhängung des Ankers kann sowohl aerostatisch, mechanisch oder auf elektrodynamische Art und Weise realisiert werden.

Für die Abstandssensorik sind Messsysteme wie beispielsweise optische Korrelations-, interferrometrische oder Ultraschallsysteme denkbar. Bei einer mechanischen Lagerung des Ankers entfällt diese. Die detaillierte konstruktive Umsetzung, sowie die Realisierung der Mess- und Regeltechnik soll in diesem Abschnitt nicht berücksichtigt werden.

2. Wandler / Spule / Elektromagnet

Der Wandler ist das Kernstück eines elektromagnetischen Flächenmotors. Seine Konstruktion ist optimiert für das aufzubauende Kraftfeld und einen geringen Energiebedarf gestaltet. Die enthaltenen Materialien seiner Komponenten entscheiden maßgeblich über den Kostenfaktor der Flächenelemente. Weiterhin wird eine minimale Ansteuerleistung sowie minimale Verlustwärme (geringer Mindestschaltstrom, niedriger Haltestrom), schnell schaltend bei minimalen Anforderungen an die Ansteuereinrichtung, minimales Bauvolumen, geringe Störanfälligkeit, hohe Lebensdauer, und weitere geringste Kosten (Entwicklung, Material, Herstellung, Betriebskosten, Entsorgung) angestrebt.

2.1 Wandler / Stator

Der Wandler / Stator (in Fig. 13 mit nur einem Zahn dargestellt) als Hauptelement der elektromagnetischen Kachel setzt sich aus folgenden Teilen zusammen:

- 21 Fuß / Statorfuß / Statorpolfuß (Statorpol / Polfläche)
- 22 Kern / Wicklungsachse / Statorachse
- 23 Wicklung / Spulenwicklung
- 24 Kopf / Statorkopf (Statorpol / Polfläche)
- Nichtferromagnetisches Material, Umhüllung, Spulen-Lack, Fixierung mit dem Flächenelement bzw. anderen Wandlern (in der Fig. 13 nicht dargestellt).

Seine Form und sein Aufbau sind entscheidend für die Gestaltung des aufzubauenden Magnetfeldes in Stärke, Form und Frequenz. Er kann sowohl als Zug-, Trag- bzw. Belastungselement, als potentieller Bestandteil des Metalldetektors und als Element der kontaktlosen Energieübertragung fungieren.

Um die Stromstärke bzw. Stromspannung der Anwendung anzupassen, sind am Markt verschiedenartige elektromagnetische Bauarten (E-Magnet, Topfmagnet, U-Magnet, ...) zu erhalten. Bei geringen Streuverlusten der Ströme ist ein durchgängiger Statorfuß, welcher alle Wandler verbindet und die Wirkkraft bei Ansteuerung erhöht, sinnhaft. Daher wurde bei der vorliegenden Erfindung eine Statoroberflächenkonstruktion mit einer Vielzahl an Zähnen (Statorachsen mit Polen) entwickelt. Die Windungsanzahl, der Drahtdurchmesser und das Drahtmaterial der Spule sind entscheidend für die induzierte Energie und besonders die betreffenden Kosten. Eine einheitliche Ankerplatte (Form, Auflage, Material, Abstand (Luftspalt) zur Polfläche, ...) welche z.B. an verschiedenartige Transportvorrichtungen befestigt wird tritt in Wechselwirkung mit den planaren Flächenelementen.

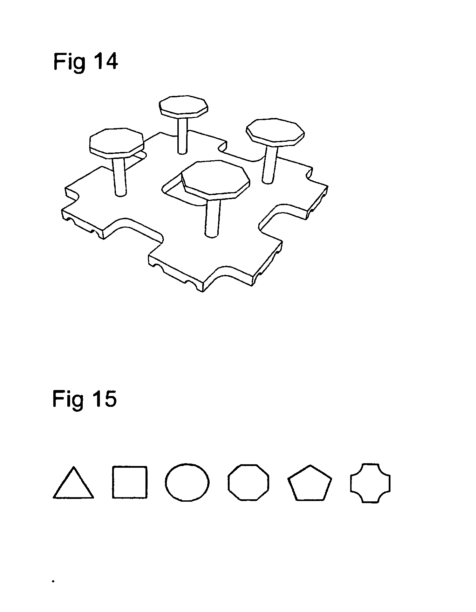

Das Magnetskelett (Statorkopf, -fuß, -achse), wie in Fig. 14 dargestellt, wendet ebenfalls so wenig Material wie möglich auf und bietet dennoch eine gewisse Stabilität, Steifigkeit und Tragfunktion für potentiell aufliegende Objekte. Sein Durchmesser, seine Permeabilitätszahl sowie seine Größe sind verantwortlich für die Form und Magnetfeldausprägung des gesamten elektromagnetischen Flächenelementes.

Die Kontur des Magnetpols muss derart bestimmt werden, dass der optimale Verlauf der induzierten Spannung durch eine entsprechende Flussdichteverteilung im Luftspalt erreicht wird. Der Polfläche des Statorskeletts sollte in seiner Flächenform so gewählt sein, dass in Kombination mit anderen Wandlern Magnetfelder entstehen, die angesprochene (Rund-) Objekte gleichmäßig, Energiebewusst, Zugstark und in mehreren Freiheitsgradenbewegen können. Dies wird in Fig. 15 veranschaulicht.

Gleichzeitig wird als Möglichkeit der Krafterhöhung die Polflächenvergrößerung eingesetzt. Mit größerer Polfläche sinkt der magnetische Leitwert bei gleichem Hub. Somit steht eine maximale Fläche (quadratische Polfläche) einem optimal ausgestalteten Kraftfeld (runde Polfläche) gegenüber, welche zudem das Verzahnungsmuster der Anker beeinflusst. Zu beachten ist, das sich bei Stromfluss durch die Erregerspule ein Streufeld zwischen den Polen bildet. Befinden sich in diesem Feld gerätefremde, magnetisierbare Teile, werden sie in Richtung der Polflächen infolge der Kraftwirkung angezogen und mit einer, der magnetischen Feldstärke adäquaten Haftkraft an den Polen festgehalten. Bei nebeneinander angeordneten und aktivierten Wandlern treffen Kraftfelder aufeinander und treten in Wechselwirkung. Um Energiesparsam und mit mehren Freiheitsgraden in der Ebene arbeiten zu können, stellt eine sechs- oder achteckige Polfläche einen akzeptablen Kompromiss da.

Damit eine zu große Magnetfeldinduktion in anderen Spulen unterbunden wird und um Positionsveränderung der Wandler, aufgrund der wirkenden Kräfte, zu vermeiden, umhüllt nichtferromagnetisches und hitzeunempfindliches Material stabilisierend die Wandler. Dies schützt zudem vor möglichen Oxidationen der Elemente und trägt zur Wärmeabfuhr bei. Um die Luftspalte zwischen den Spulen zu minimieren und die Wandler zu stabilisieren werden diese in entsprechendes Material eingegossen. Hier ist der Gewichts-, Kosten- und Dehnungsfaktor bei einer Erwärmung zu berücksichtigen.

Entscheidend für die Ausnutzung der vom Magnet aufzubringenden Kraft ist die Erfüllung der Querschnittsbedingung, durch die magnetfremden, zu haltenden Teile. Danach muss deren Dicke bei Verwendung runder Haftmagnete mindestens d 2/4, bei quadratischen Mittelpolen s/2 der Blechdicke s entsprechen.

Die Oberfläche der als Magnetanker fungierenden Fremdteile sollte vorzugsweise geschliffen, zumindest aber eben sein. Unebenheiten der Kontaktfläche führen zu größeren Luftspalten zwischen dieser und der Polfläche und verringern die Magnetkraft. Bei kleinen bzw. leichten Teilen ist ein selbständiges Lösen nach dem Abschalten durch die wirkende Remanenzkraft nicht immer gegeben. Die Remanenzkraft ist dann durch einen parasitär wirkenden Luftspalt, im vorliegenden Fall in Form eines Kunststoffüberzuges über den Polflächen bzw. dem Flächenelement, zu verringern. Diese Kunststoffhülle trägt ebenfalls zum Oxidationsschutz des Flächenelements bei.

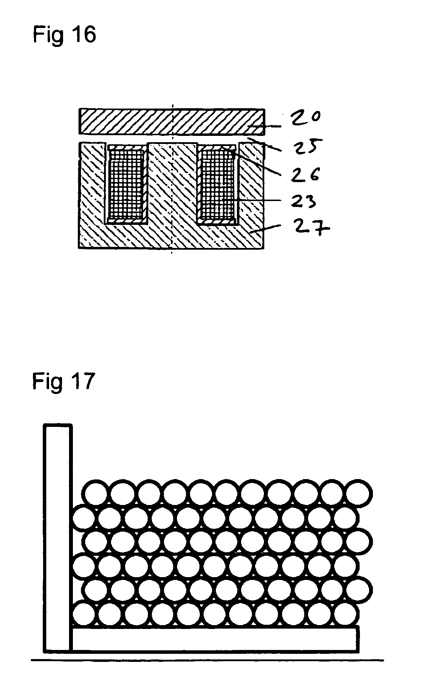

Sollen nichtmagnetisierbare Teile gehalten werden, sind diese mit einer magnetisierbaren Ankerplatte entsprechender Dicke zu versehen. Durch die Mehrspulenanordnungen mit entsprechender Magnetpolzahl können über große Flächen nahezu konstante Haftkräfte erzeugt werden, wie dies z.B. bei Maschinenspanntischen angewendet wird. Dies wird in Fig. 16 veranschaulicht.

Grundsätzliche Definition

Der Stator sämtlicher polyphasiger Maschinen besteht aus einer Abfolge von Einzelzähnen, die im Allgemeinen jeweils eine konzentrierte Zahnspule tragen. Der Zusammenhang zwischen Spule, Wicklungsachse und Zählsinn des Stromes ist durch die Fig. 17 beschrieben. Es zeigt auch die symbolhafte Verkürzung für die folgenden Darstellungen.

Die nebeneinander liegenden Einzelspulen können dem gleichen Flächenelement oder einem anderen Flächenelement angehören. Wegen der geforderten Symmetrie und der min. Dreisträngigkeit muss die Zahl der Zähne und der Spulen ohne Rest durch 3 teilbar sein. Weiterhin muss die Gleichverteilung der Flächenelemente vorliegen.

Die Frequenz der Statorgrößen wird ausschließlich durch die Drehzahl und die Anzahl $z_{pm}$ der Permanentmagnete des Ankers /Läufers bestimmt. Um einen geschlossenen magnetischen Kreis ohne Unipo-

larfluss zu erreichen, muss $z_{pm}$ eine gerade Zahl sein. Allgemein sollte die Spulenweite in der Nähe der durch die im Anker (evtl. Permanentmagnete) vorherrschende Polteilung liegen, um einen günstigen Wicklungsfaktor $\xi_s$ zu erreichen.

Bei den entwickelten Double-layer Statorplatte ist jeder Zahn bewickelt, so dass die Zahl der Zähne und der Spulen identisch ist. Im Vergleich zu den Single-layer Maschinen ergibt sich offenbar ein besonders kleiner Wickelkopfüberstand. Die zu kommutierende Spulendurchflutung ist reduziert, andererseits existiert durch die beiden in einer gemeinsamen Nut liegenden Spulenseiten stets eine (induktivitätssteigernde) Gegenkopplung.

2.2. Wicklung

Der Aufbau der Erregerspule, die Anwendung geeigneter Werkstoffe und die Wahl der günstigsten Herstellungstechnologie haben einen großen Einfluss auf die technischen Daten eines Gleichstrommagneten. Neben dem Aufbau der Wicklung ist die Art der Wicklungsisolation und die Anordnung der Spule innerhalb des magnetischen Kreises von großer Bedeutung für das spezifische Arbeitsvermögen eines Gleichstrommagneten.

Im Interesse einer möglichst kleinen Bauweise des Wandlers, muss der zur Verfügung stehende Wickelraum möglichst günstig ausgenutzt werden. Hierbei gilt allgemein, dass je kleiner der verwendete Drahtdurchmesser, desto größer ist die Zahl der möglichen Wicklungen. Dies ist im Hinblick auf die Dauer und Intensität der Anwendung abzustimmen, da ein sehr dünner Draht schnell überbeansprucht werden kann. Bei abnehmendem Drahtdurchmesser ist weiterhin die Verhältnisänderung des eigentlichen Drahtes zu seiner isolierenden Lackschicht zu beachten. Eine übliche Wicklungsform ist in Fig. 17 veranschaulicht.

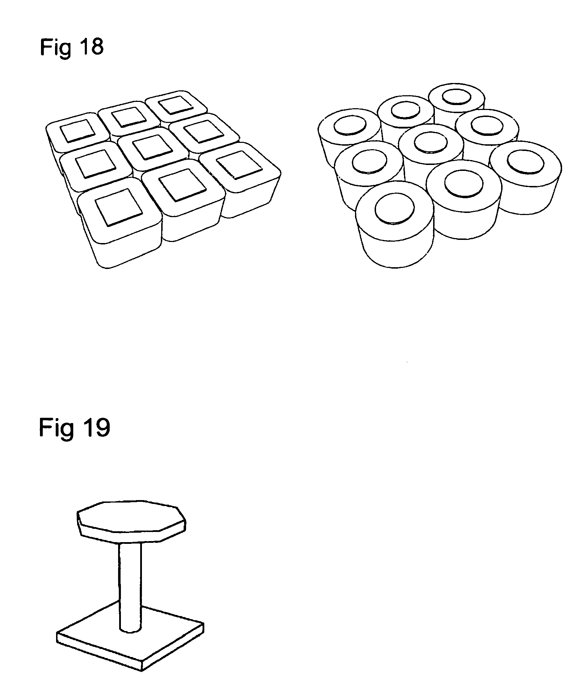

Permanentmagneterregte Linearmotoren werden im Regelfall mit einer Wicklung versehen, die vollständig im Luftspalt liegt. Wegen des dann wirksamen großen magnetischen Spalts ist zwar mit einer reduzierten Kraftdichte zu rechnen, andererseits werden eine kleine Statorinduktivität, extrem geringe Kraftschwankungen und relativ kleine Normalkräfte zwischen Stator und Translator erreicht, wobei letztere bei einer doppelseitigen Anordnung sogar vollständig verschwinden. Dies wird in Fig. 18 veranschaulicht.

Es folgert ein Kompromiss mit einer verjüngten Statorachse (siehe Fig. 19), welcher Kraftschwankungen reduziert, Stabilität verleiht und eine hohe Windungszahl der Spulen ermöglicht.

2.3. Material

Aus Kostengründen muss die Materialwahl sehr sorgfältig geschehen. Der überwiegende Teil üblicher Erregerspulen für Gleichstrommagnete besteht aus Kupferlackdraht oder Eisenlackdraht. Seit 1960 werden vereinzelt auch Aluminiumfolienspulen verwendet. Die derzeit stark steigenden Kupferpreise machen eine Verwendung in der angepeilten Masse unmöglich. Eisenlackdraht ist aufgrund des hohen Gewichtes ebenfalls nicht empfehlenswert. Alternativ wäre daher Aluminium als Spulenmaterial zu nennen.

Die Leitfähigkeit des Aluminiums (Elektrische Leitfähigkeit Aluminium = $37{,}7 \cdot 10^6$ S/m; Dichte = 2700 kg/m$^3$) beträgt zwar nur 2/3 derer des Kupfers (Elektrische Leitfähigkeit Kupfer = $58 \cdot 10^6$ S/m; Dichte = 8920 kg/m$^3$) (Elektrische Leitfähigkeit Eisen = $10 \cdot 10^6$ S/m; Dichte = 7874 kg/m$^3$), weswegen die Leiterlänge 1/3 mal so größer sein muss. Aluminium ist allerdings wesentlich leichter (30% von Kupfer) als Kupfer. Für die benötigte Niederspannung eines Wandlers ist eine Lösung durch Aluminiumwicklungen ebenfalls akzeptabel.

Ein weiterer Vorteil für die Anwendung von Aluminium besteht in der sich schnell bildenden isolierenden Oxidschicht. Diese macht die Spule nicht nur korrosionsbeständig, sondern ersetzt zudem auch den ansonsten üblichen Isolationslack. Bei schwindendem Drahtdurchmesser ist allerdings darauf zu achten, dass die Oxidation der obersten Metallzone nicht zu viel Aluminium in Anspruch nimmt und die Leitfähigkeit des eigentlichen Drahtes hemmt. Aluminium ist ebenfalls ein relativ weiches, zähes und leicht schmelzbare Metall und lässt sich zudem gut in der Wandlerproduktion verarbeiten. Da die Verwendung der Spulen statischer Natur ist, ist die Sprödigkeit von Aluminium nur in der Produktion von Bedeutung.

Im Vergleich zu Kupfer (Wärmeleitfähigkeit Kupfer = 401 W/(m · K) ) ist die Wärmeleitfähigkeit von Aluminium (Wärmeleitfähigkeit Aluminium = 237 W/(m · K) ) wesentlich geringer. Die "kurze" und "geringe" Bestromungsfrequenz der Spulen ermöglicht jedoch eine Reduzierung der Wärmeableitproblematik in den meisten Fällen der Anwendung. Zudem trägt der Verguss zum Wärmeabtransport maßgeblich bei. Dennoch sollte die potentielle Ausdehnung der verwendeten Materialen bei Erwärmung bedacht werden.

Wegen der ständig wechselnden Magnetisierung in den Statorpolen und im Statorjoch /-achse entstehen bei Verwendung von massivem Eisen in diesen Teilen Wirbelstromverluste. Bei konventionellen Maschinen werden deshalb die Teile, in denen Wechselfelder bzw. Drehfelder auftreten aus geschichteten Eisenblechen aufgebaut. In den Flächenelementen könnte sich diese Vorgehensweise möglicherweise als problematisch herausstellen, da die Geometrie und der Feldverlauf in den Statorpolen eine Blechung nicht zulässt. Stattdessen können die Statorpole, das Stator- und das Läuferjoch aus einem weichmagnetischen Pulververbundwerkstoff hergestellt werden. Dieses Material besteht aus Eisenpartikeln mit einer isolierenden Oberfläche, die unter Druck und Temperatur verpresst werden, so dass Halbzeuge entstehen, die sich auf konventionellem Wege bearbeiten lassen. Der Nachteil dieser Methodik ist die Stauchsteifigkeit und die Belastbarkeit der erzeugten Rohlinge.

Es könnte der Werkstoff SOMALOY 500 mit einer Anfangspermeabilität von $\mu$r=500 (Firma Höganäs, Schweden, siehe www.hoganas.com) verwendet werden.

Um einen hohen Wirkungsgrad des Ankers zu ermöglichen müssen Wirbelstromverluste minimiert werden. Eine weitere Alternative zu Elektroblechen und Permanentmagneten stellt das Soft Magnetic Composite (SMC) Material dar. Es handelt sich dabei um ein mit einer Kunststoffschicht ummanteltes Eisenpulver, das mit herkömmlicher Presstechnologie und mit einem anschließenden Sinterprozess seine endgültige Form erhält. Die magnetischen und mechanischen Eigenschaften des SMCMaterials lassen sich durch Zuschläge im Pulver bei entsprechender Anpassung des Sinterprozesses an die Bedürfnisse angleichen. Erreichbar sind zum Beispiel eine relative magnetische Permeabilität von bis zu 700 und eine Sättigungsflussdichte von 2,0 T bei einer mechanischen Festigkeit von 100 N/mm$^2$. Mit Hilfe des SMC-Materials und der Presstechnik lassen sich komplexe isotrope Strukturen herstellen und damit eine höhere funktionale Integrationsdichte realisieren.

3. Konstruktion Flächenelement

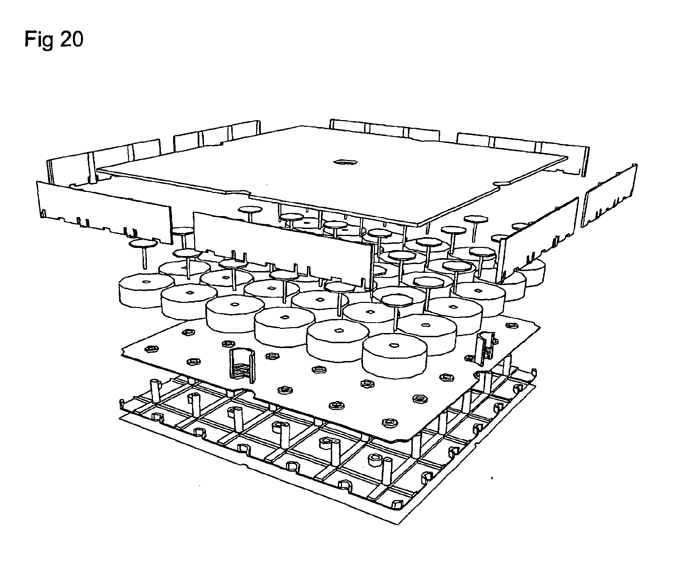

Das Flächenelement / Flächenmotor (siehe Fig. 20) oder auch die "elektromagnetische Kachel" wirkt mit den integrierten Wandlern / Spulen als Modulelement zusammen mit anderen Flächenelementen kombinatorisch in der Plattform. Im Folgenden wird das Prinzip eines Flächenelementes beschrieben:

Anschließend wird konkretisiert und separat auf die einzelnen Bauelemente der Flächenelementkonstruktion mit den Maßen 250mm x 25mm x 250mm näher eingegangen. Wobei größere Ausführungen der Flächenelemente (z.B. 500mm x 25mm x 500mm; 1000mm x 25mm x 1000mm) vom sich vom Aufbau und der Konstruktion sehr ähneln um miteinander in der ausgelegten Plattform wirken zu können. Die Konstruktionsbeschreibung umfasst die einzelnen Bauteile (aus der Abbildung von unten nach oben): Gehäusebodenplatte, Statorplatte, Kontaktschnittstellen, Platine als Trägerplatte für die elektronischen Baugruppen, Spulen, Statorköpfe, Gehäusewände, Gehäusedachplatte.

3.1 Konstruktionsprinzip

Das Konstruktionsprinzip besteht aus den folgenden Elementen:

- 28 Boden / Aufhängung
- 29 Energiezuleitungen
- 30 Datenzuleitungen
- 31 Steuerungselement / Elektronik / Platine / Chip
- 32 Stromverteilung zu den Wandlern
- 33 Wandler / Elektromagnete / Spulen
- 34 Füllmaterial
- 35 Schnittstellen / Kontakte
- 36 Oberfläche / Hülle

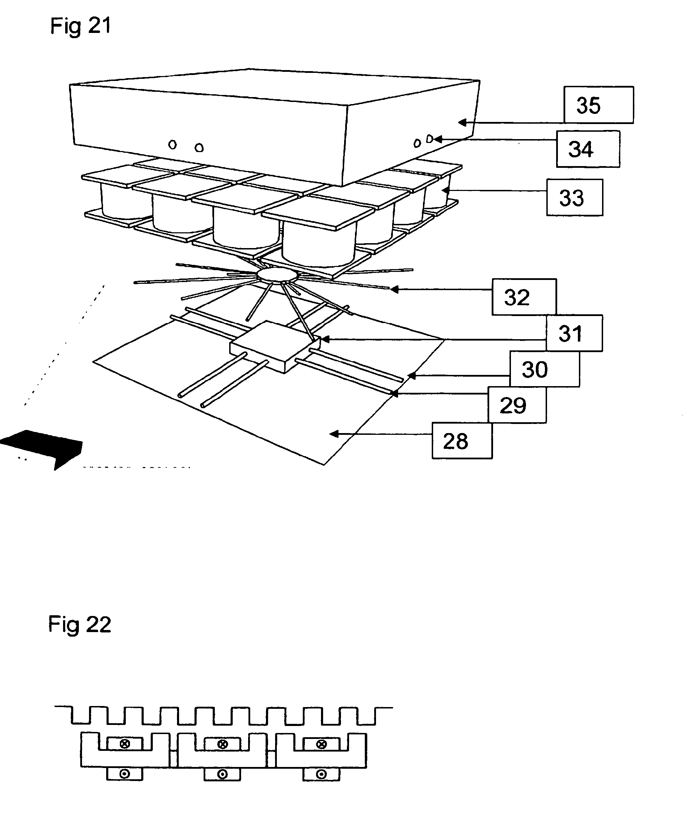

Fig. 21 zeigt stark vereinfacht einen möglichen Aufbau eines Flächenelementes, wobei (nicht wie in der konkretisierten Konstruktion) die Wandler durch getrennte Statorpolfüße und quadratische Polköpfe dargestellt und das elektronische Regelwerk sehr grob vereinfacht wurde.

Der Boden des Flächenelements dient sowohl der Befestigung des Flächenelements in Form einer Halterung oder eines Stecksystems, als auch der Fixierung der Wandler. Weiterhin trägt der Boden zur Stabilität des Moduls wesentlich bei, da die Wandler nicht direkt miteinander verbunden sind.

Die Energieversorgung und Datenversorgung der Wandler und die entsprechende Weitergabe an andere Flächenelemente oder Nutzer erfolgt über verlegte Leitungen im Flächenelement. Je nach Übertragungsmedium und Übertragungsart wird ein internes Steuerungselement zwischen geschaltet um die entsprechende Übergabe zu regeln.

Das interne Steuerungselement oder die interne Schaltung steuert mit Hilfe eines integrierten Chips und der vorgegeben Daten der externen zentralen Plattformsteuerung die Energieabgabe in Stärke, Spannung und Frequenz. Die Magnetfeldausprägung kann in ihrer Stärke, zeitlichen Aufbau, Struktur und Gestaltung somit, über diese Steuerung durch den Anwender vorgegeben und beeinflusst wirken.

Das Steuerungselement steuert neben den Wandlern den Energie- und Datentransfer von benachbarten Verbrauchern und der zentralen Plattformsteuerung. Daten über und von erfassten Objekten, welche sich auf dem Flächenelement befinden, werden aufbereitet an den entsprechenden Nutzer weitergegeben. Weiterhin enthält der Chip eine einmalige Identifikationsnummer, welcher das jeweilige Flächenelement in seiner Aufgabe, Gestaltung, Lage, etc. bezeichnet.

Die Stromversorgung der jeweiligen Wandler wird über ein Leitungsnetz realisiert, welches sich unter oder zwischen den Wandlern befindet. Dies darf allerdings nicht potentielle Magnetfelder oder die Stabilität des Flächenelementes beeinflussen.

Für die Versorgung benachbarter Flächenelemente sind an den Kachelseiten befindliche Schnittstellen am praktikabelsten. Diese sollten derart angeordnet sein, dass bei einer Fehlverlegung einer benachbarten Kachel ein falscher Kontakt zweier Versorgungsleitungen nicht möglich ist. Geringe Erschütterungen, Verschiebungen und kleine Spalte zwischen den Flächenelementen müssen ebenfalls über die Schnittstellenausgeglichen werden können. Ineinandergreifende fixe Steckverbindungen weisen eine hohe Verbindungsstärke auf, sind aber meist relativ Platzeinnehmend und in ihrer Anbringung Kostenintensiv. Zudem müssten sie eine angemessene Isolierung aufweisen, um elektrischen Strom an beliebige Fremdnutzer weiterleiten zu können.

Die Ausgestaltung der Kontakte kann sich an üblichen Kontaktverbindungen, Steckverbindungen und/oder Schleifkontakten orientieren. Bevorzugt wird allerdings eine federnde in das Flächenelement versenkbare Kontaktlösung, welche bündig mit der Seitenoberfläche des Flächenelementes in eingedrückten Zustand abschließt. Die Oberfläche dieser gefederten Kontaktlösung ist gewölbt um geringe Verschiebungen zweier angrenzenden Flächenelemente auszugleichen und somit die elektrische Energie und Datenversorgung aufrecht zu erhalten. Die Lage des der Kontakte an einer Seite des Flächenelements ist so angeordnet, dass bei einer verkehrt angefügten einer verkehrt angefügten Ausrichtung eines Flächenelementes zu einem anderen Flächenelement eine Verbindung zwischen den Kontakten der beiden Flächenelemente nicht möglich ist.

Jeder Wandler wird von nichtferromagnetischem Füllmaterial (in der Fig. 21 nicht gezeigt) umschlossen. Dieses dient ebenso als Füllstoff für fehlende Elemente in einem Flächenelement, als auch der Wärmeableitung, dem Wärmeausdehnungskoeffizienten und der Verbesserung der mechanischen Festigkeit und des Schutzes gegen aggressive Medien und Schadstoffe. Dies kann in entsprechenden Formen oder direkt im äußeren Magnetkörper erfolgen beispielsweise durch umspritzen oder umgießen, wodurch die Luftspalte zwischen Spule und Eisenkreis verringert bzw. ganz ausgefüllt werden.

Die Oberflächen dienen als schützende Hülle und zur Wärmeableitung. Sie sollten im Wesentlichen eben gestaltet sein um Luftspalte zwischen den anliegenden elektromagnetischen Kacheln und der Auflagefläche (Boden) gering zu halten. Die Gleichmäßigkeit der Oberfläche ermöglicht zudem einen ungestörteren Bewegungsablauf von Transportvorrichtungen auf der Plattform. Die Ränder der Hülle bzw. des Flächenelementes sollten aus dem überwiegend genutzten nichtmagnetisierbaren Material Aluminium gefertigt sein um Kosten zu reduzieren und eine einfachere Recyclingfähigkeit zu schaffen.

Durch die Gestaltung der Wandler (Zähne) und der Nutschlitze hat das Flächenelement einen Einfluss auf das Verhalten der Transportvorrichtungen. Die Streuung der Ströme in den Nuten und den Wickelköpfen beeinflusst die Induktivität. Die Nutteilung sowie die Gestaltung der Zähne nehmen zudem Einfluss auf das Rastmoment, den "Drehmomentrippel", den Beschleunigungsvorgang sowie den Abbremsvorgang des Ankers. Aufbau und Verzahnung eines linearen Schrittmotors und Ankers sind in Fig. 22 gezeigt.

Neben der herkömmlichen kachelförmigen Gestalt der Flächenelemente ist es sinnvoll weitere kombinatorische Ausführungsformen anzubieten um die Plattform besser den Räumlichkeiten und Aufgaben anzupassen.

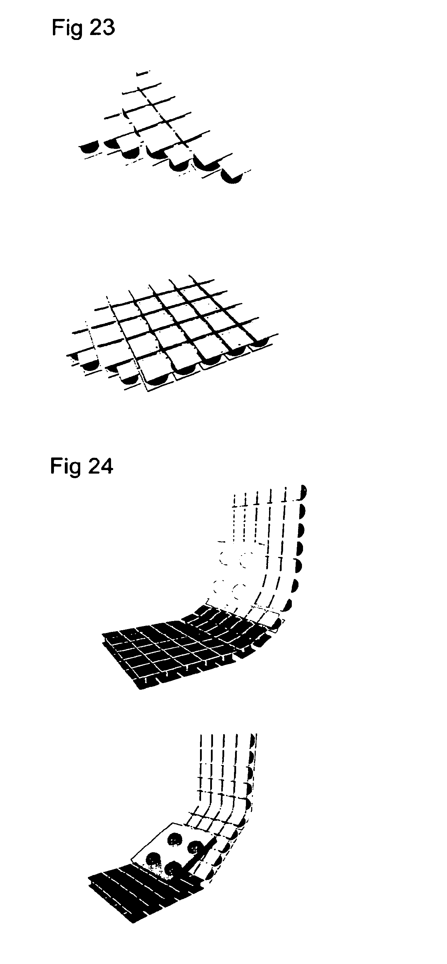

Insbesondere ist die Form nicht auf rechteckige Flächenelemente beschränkt. Rundformen oder Vielecke sind denkbar. Bei gleichförmigen Wandlerelementen würden unter der entsprechenden Formung des Flächenelementes Leerräume in derselben entstehen. Daher ist ein Abänderung der normalen Matrixanordnung der einzelnen Wandler in der Kachel notwendig oder eine Formanpassung der Aufbaugröße der betroffenen Wandler. Weitere entstandene Lücken werden aus Stabilitätsgründen mit nichtferromagnetischen Material gefüllt (Verguss). Dies wird in Fig. 23 veranschaulicht.

Transportvorrichtungen welche ihre Position und Lage von horizontalen Flächenelementen der Plattform in verwinkelte oder vertikal aufgehängte Teilbereiche wechseln wollen, benötigen, je nach Ausgestaltung, entsprechende Übergangselemente.

Eine einfache Lösung bieten drei zu einem kombinierten winklig dreidimensional aufgebauten Flächenelement. Diese Formgebung wird dadurch erreicht, dass Flächenelemente und/oder Wandler im unterschiedlich starken Winkel zueinander angeordnet sind. Die durch die Verwinklung hervorgerufenen Spalten werden durch nichtferromagnetisches Material aufgefüllt. Die Verbindung zwischen den Flächenelementen und wird durch elektrische Leitungen oder Kontaktverbundstücke, welche sich im entstandenen Spalt befinden, erreicht. Beim Aktivieren der Wandler wirkt dies zum Aufbau von gestalteten Magnetfeldern, welche so einen Bewegungszug auf ferromagnetische Objekte ausüben und diese von einer waagrechten Position in eine angewinkelte Position führen (siehe Fig. 24).

Es sind allerdings auch dreidimensionale gerundete Formvarianten des Flächenelements denkbar (wie in Fig. 24 dargestellt). Diese Formgebung wird dadurch erreicht, dass die Wandler im unterschiedlich starken Winkel zueinander angeordnet sind. Die Kopfteile der Wandler sind näher an die Kopfteile der benachbarten Wandler gerückt als die Statorfußelemente. Diese Formgebung ermöglicht verbindende Flächenelemente zwischen waagrecht liegenden Flächenelementen und senkrecht aufgehängten Flächenelementen. Beim Aktivieren der Wandler führt dies zum Aufbau von gestalteten Magnetfeldern, welche so einen gleichmäßigeren Bewegungszug auf ferromagnetische Objekte aus einer waagrechten Position in eine angewinkelte Position erreichen. Somit kann auch durch entsprechend abgewandelte Formgebung der Flächenelemente eine nahezu beliebige dreidimensionale Oberflächenstruktur erreicht werden.

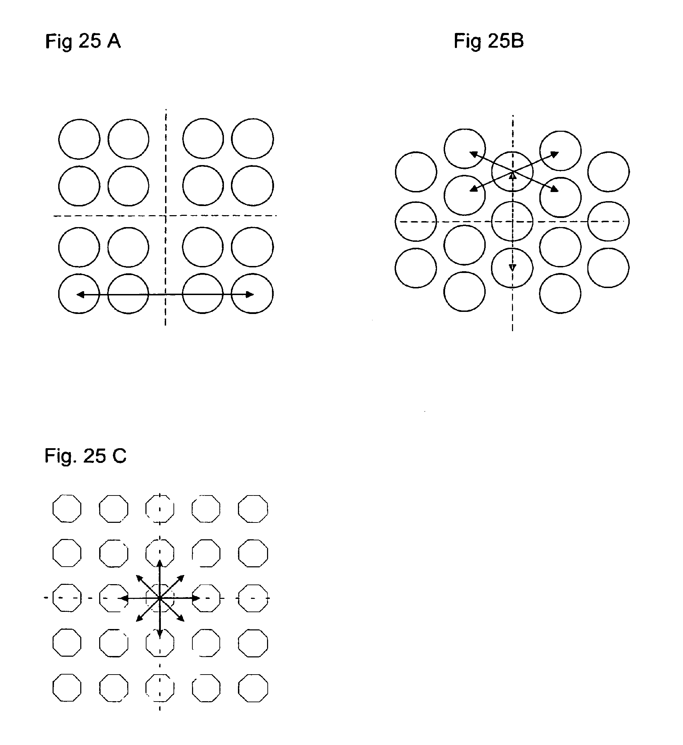

Eine Erweiterung des Flächenmotors stellt die Realisierung eines dritten Freiheitsgrads in Form einer Drehung des Läufers / Ankers dar. Damit auch bei verdrehtem Läufer in jeder Position Kräfte in x- und y-Richtung erzeugt werden können, müssen für diesen Anwendungsfall neue Statorpolanordnungen entwickelt werden (siehe Fig. 25 A, B und C), da die mehrpolige Basisanordnung bei einer Verdrehung von 45° in einigen Positionen u.U. keine Kräfte mehr erzeugen kann. Es ist zu prüfen, ob die Rastkräfte und die Rastmomente dieser Anordnungen einen sinnvollen Betrieb zulassen.

Je nach Aufgabe und Räumlichkeit muss der Aufbau der Plattform einer gewissen Energienetz-Topologie bzw. Datennetz-Topologie mit entsprechenden Schnittstellenelementen unterstehen. Dies sollte allerdings im Sinne der bestmöglichen Integrierbarkeit in andere Netzwerke und unter der Berücksichtigung potentieller Nutzer sowie Verbraucher geschehen.

## 3.2 Konstruktionsübersicht und Aufbau

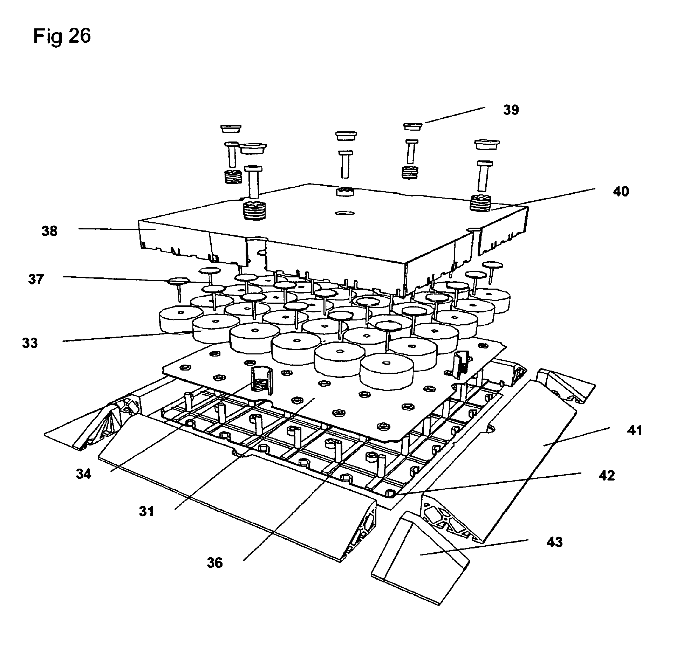

Fig. 26 zeigt ein aufgefächertes Flächenelement mit abgeschrägten Rahmen und Verschraubungen mit den folgenden Teilen:

- 36 Statorplatte mit Verstrebungen, Statorplattenringen, Achsen bzw. Jochen, ...
- 31 Platine / Trägerplatter für die Elektronik (Mosfet's, Leiterbahnen, Controller, Chips, ...)
- 34 Kontaktstellen / Schnittstellen
- 33 Wandler / vergossene Wicklungen / Spulen
- 37 Polflächen / Statorköpfe mit Achsen bzw. Jochen / Statorpole
- 38 Flächenelement-Oberfläche / Hülle bestehend aus Hüllenwänden und Hüllendeckel / Gehäuse bestehend aus Gehäusewänden und Gehäusedeckel
- 39 Blender / Blendknöpfe / Bohrungsverschlüsse / Blendaufsätze
- 40 Schrauben
- 41 Plattformrand / Randschräge / Plattformrahmen
- 42 Hüllenboden - Teil der Flächenelement-Oberfläche
- 43 Plattformrandecke schräg / Rahmenecke schräg

## 3.3 Größenausführungen

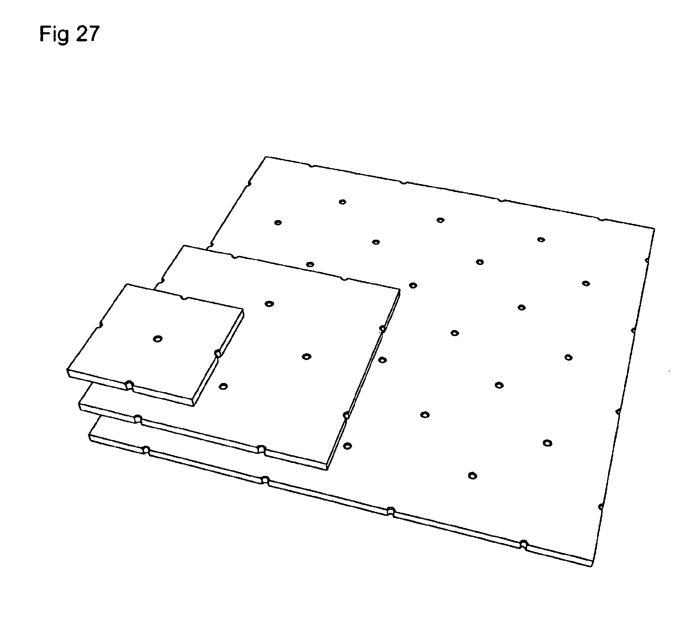

Für den Prototypen einer Plattform werden 3 Größenordnungen von Flächenelementen favorisiert mit den Kantenlängen 250x250mm, 500x500mm und 1000x1000mm (Siehe Fig. 27). Die Höhe aller Ausführungen muss identisch sein. Um allen Elementen genug Freiraum zu geben und der Konstruktion eine entsprechende Stabilität zu ermöglichen wird die Höhe auf 25mm festgelegt. Spezialgrößen sollten nur bei extrem abweichenden Aufgaben z.B. die Bewegung von Schwerstlasten oder größer flächigen Anforderungen angefertigt werden. Die Kompatibilität mit Flächenelementen anderer Größenordnungen muss allerdings immer gewährleistet sein. Dies betrifft u.A. den Aufbau, die Anordnung von Aufhängungen, Kontaktstellen / Schnittstellen, stabilisierenden Elementen, etc..

## 3.4 Kombinationsverfahren

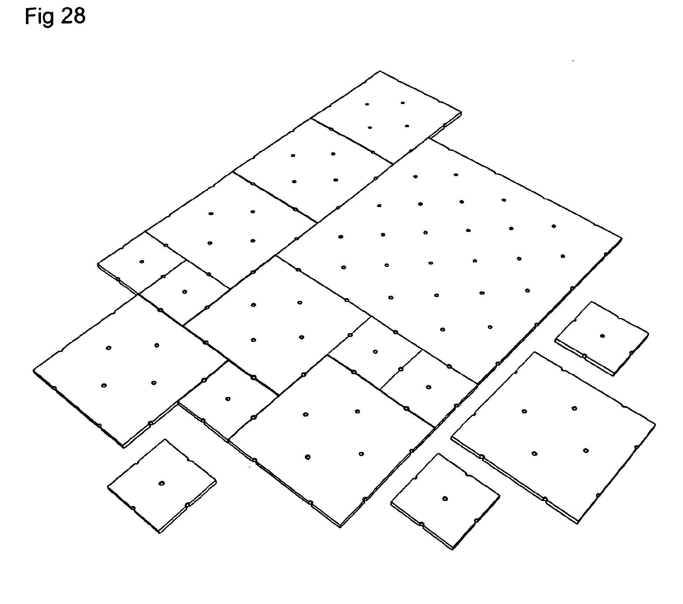

Die Seitengrößen der Flächenelemente sind derart gewählt, dass unterschiedliche Größentypen miteinander kombinierbar sind und ausgelegt eine an die Architektur angepasste Fläche bzw. Plattform ergeben. Dies wird in Fig. 28 veranschaulicht.

An den Seiten sowie im Inneren der Flächenelemente sind in identischen Abstand symmetrisch Aussparungen für die Fixierung der Flächenelemente durch Schraubverbindungen am Untergrund und den benachbarten Flächenelementen realisiert. Sie unterstützen die Kombinatorik der einzelnen Flächentypen ebenso wie die jeweiligen Seitenverhältnisse.

Die Aussparungen werden ebenfalls als Kontaktschnittstelle für die Übergabe von Strom und Daten an benachbarte Flächenelemente und externe Nutznießer bzw. Vorrichtungen verwendet.

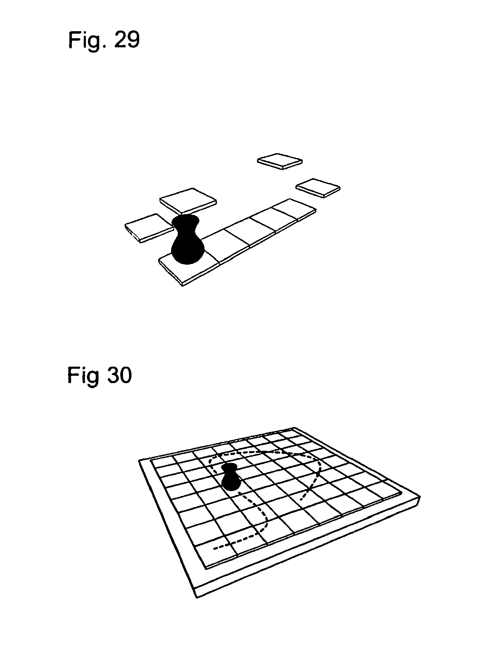

Weitere Flächenmotoren sind in Fig. 29 und 30 veranschaulicht.

## 3.5 Statorfuß / Statorplatte

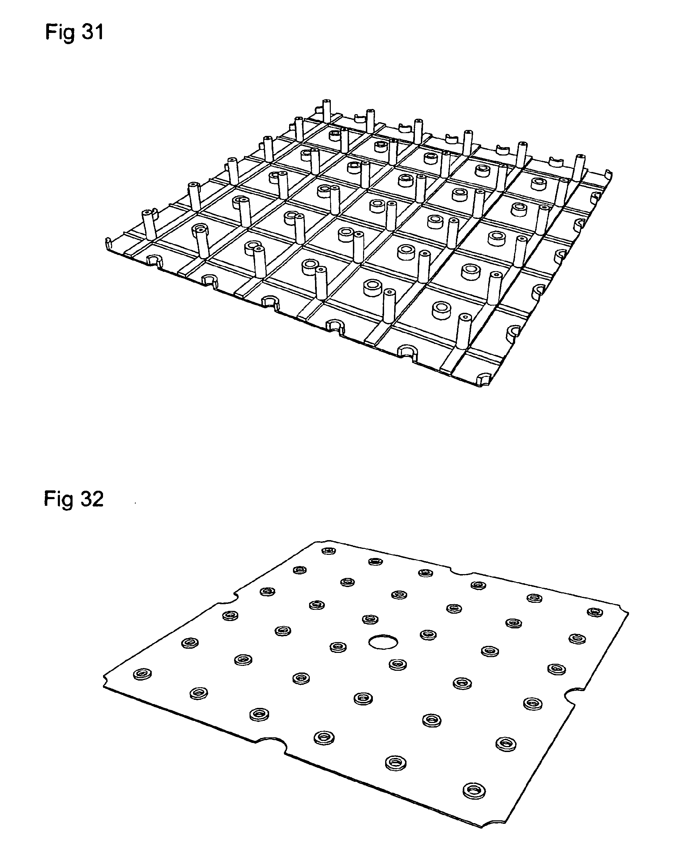

Die Statorplatte (siehe Fig. 31) fungiert in dieser Ausführung als verbindendes und versteifendes Element des gesamten Flächenelementes und gleichzeitig als Statorfuß einer jeden Spule. Sie besteht aus einem Eisenguss oder einem alternativ Material. Aus der Grundplatte ragen die Achsen / Statorjoche für die Wicklungen der Spulenkörper. Sie fixieren neben Polköpfen und den Spulen auch die elektronischen Baugruppen. Weiterhin fangen sie alle senkrecht wirkenden Kräfte auf welche auf das Flächenelement durch z.B. Transportvorrichtungen wirken.

In dieser favorisierten Darstellung ist die Achsen- und Polstruktur aus symmetrischen Gründen quadratisch / Schachbrettartig aufgebaut. Eine Variation der Jochanordnung würde den symmetrischen Aufbau der Gesamtplattform und die magnetische Wanderwelle mit benachbarten Flächenelementen stören ist aber unter besonderen Umständen denkbar. Zwischen den einzelnen Achsen verlaufen Verstrebungen.

Diese Verstrebungen verleihen der Konstruktion eine zusätzliche Steifigkeit und stabilisieren die einzelnen Achsen. Weiterhin bieten sie zusätzliches Material für den Kreisschluss der Magnetfeldinduktion zwischen den jeweilig erregten Spulen. Mittig zentriert aus den jeweiligen Quadraten der Schachbrettstruktur erwächst eine Ringstruktur. Sie trägt zur Fixierung der Flächenelemente am Untergrund und benachbarten Flächenelementen bei. Um einen gleichmäßigen Wirkungsgrad der Spulen zu erzielen und Wirbelströme gleichartig zu halten sind auch Ringelemente ohne speziellen mechanischen Zweck in die Statorplatte eingelassen. Auf die Funktionsweise im Einzelnen wird im Abschnitt Schnittstellen und Fixierung konkretisiert eingegangen.

## 3.6 Platine

Die Platine fungiert als Trägerplatte für die elektronischen Bauteile des Flächenelementes. Die Bohrungen und Aussparungen sind so positioniert, dass die Platine an den Achsen der Statorplatte aufgehängt werden kann. Hartgummiringe unter sowie auf den Bohrungen fixieren, fangen feinfrequentierte Erschütterungen auf und heben die Elektrik in die optimale Höhe, sodass erzeugte Wärmefelder der Spulen abgeschwächt werden.

Dies wird in Fig. 32 dargestellt.

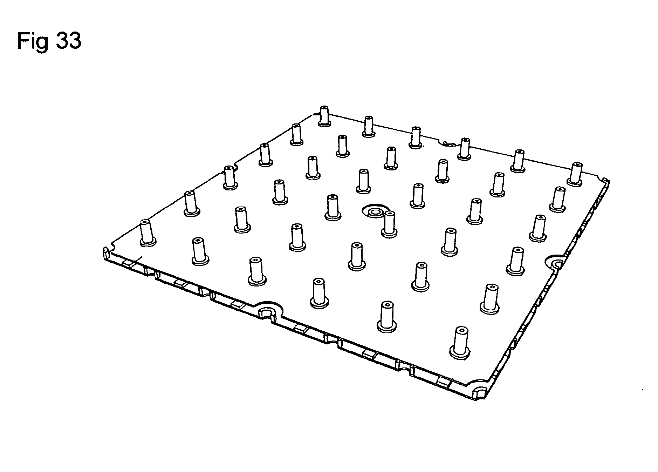

An den Seiten der Platine befinden sich passgenaue Aussparungen für die Schnittstellen / Kontaktstellen, Aufhängungen /Fixierungen und Versteifungsstreben der Hülle des Flächenelementes und ebenso eine Aussparung in der Mitte. Die Aussparungen sind derart zugeschnitten dass sie an die Flächenelementkontaktstellen angrenzen und mit ihnen verlötet sowie verklebt werden können. Dies wird in Fig. 33 veranschaulicht.

3.7. Spulen / Wandler

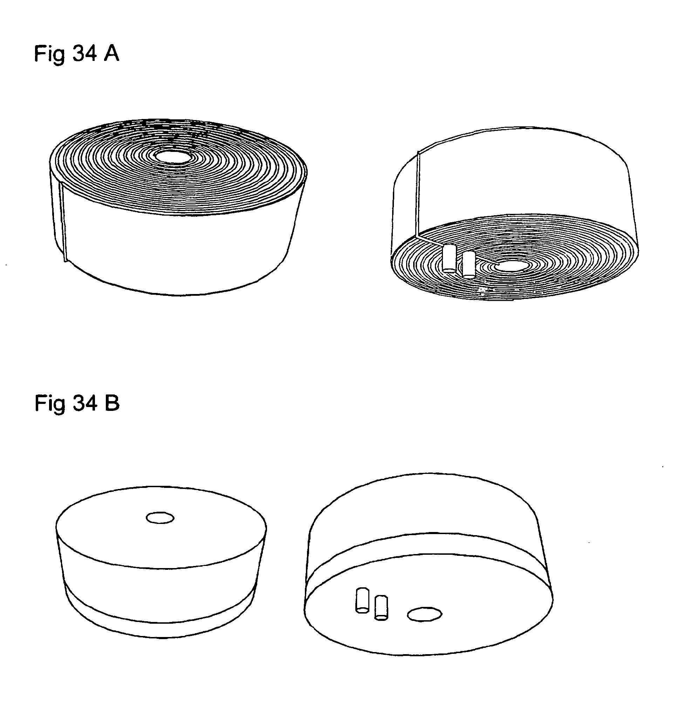

Spulen werden passgenau vorgefertigt bevor der Aufsatz auf die Achsen der Statorplatte über der Platine erfolgt. Sie bestehen aus Kupferlackdraht oder bevorzugt Aluminiumlackdraht (siehe Figuren 34A und 34B).

Um bei geringen Materialeinsatz eine möglichst hohe Anzahl an Wicklungen zu erreichen wird ein rundes Spulenformat bevorzugt. Die Wicklung erfolgt von unten entlang der Statorachse nach oben anschließend zurück über die erste Wicklung nach unten. Es schichtet sich von innen nach außen eine Wicklung über die vorhergehende. Es ergibt sich einen Drahtanfang in der Mitte an der Unterseite der Spule. Diese Drahtanfang wird mit durch ein Kontaktelement verstärkt. Das Drahtende tritt am Seitenrand (in der Abbildung am oberen Seitenrand) der Spule aus. Das Drahtende wird ebenfalls mit einem Kontaktelement verstärkt. Um den Wärmeabtransport der erregten Spule zu gewährleisten, den Draht in seiner Spulenformgebung zu fixieren und die Spule handhabbar zu gestallten wird der Draht bereits während des Wicklungsvorgangs mit zwei nichtleitenden Materialien vergossen. Das obere Vergussmaterial führt die Wärme an die Oberfläche des Flächenelementes nach außen hin ab. Das untere Vergussmaterial am Fuß der Spule isoliert die entstandene Wärme zum Flächenelementinneren hin ab. Zudem werden die Drahtenden und damit die verbundenen Kontakte ebenfalls durch den Verguss fixiert.

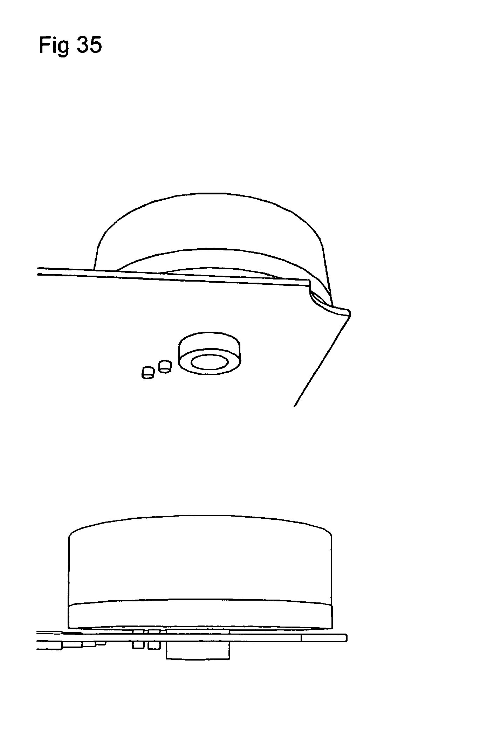

Wird die derart gefertigte Spule auf die Achse der Statorachse aufgesetzt greifen die Spulenkontakte in entsprechend ausgelegte Kontaktbohrungen der Platine und gliedern sich in die Regelelektronik des Flächenelementes. Dies wird in Fig. 35 veranschaulicht.

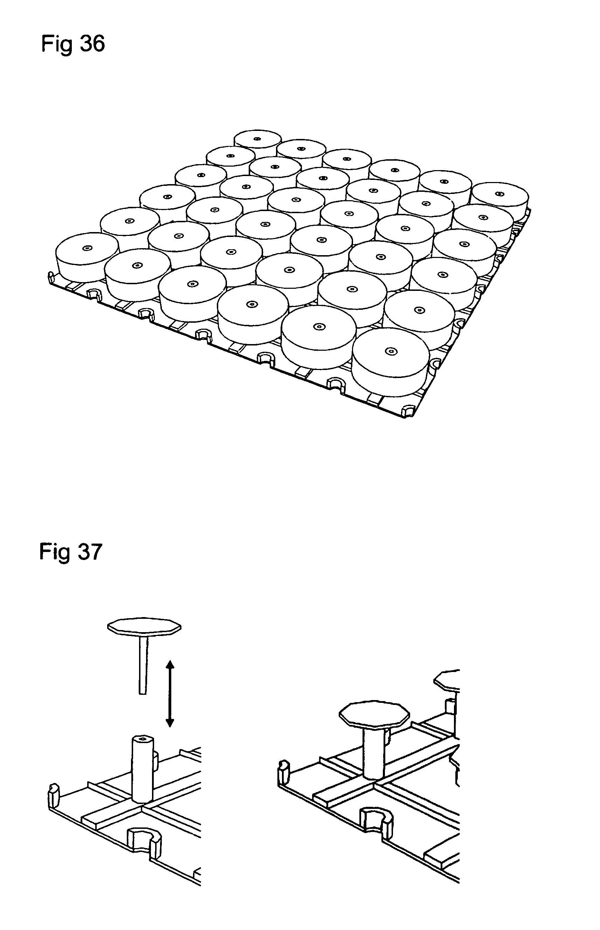

Alle Spulen werden auf die Statorachsen der Statorplatte aufgesetzt (wie in Fig. 36dargestellt). Der Aufbau ist symmetrisch sowie in allen Flächenelementen gleichgehalten um Wirbelstromabweichungen gering zu halten, die Kombinatorik zu garantieren und die harmonisierte Regelung der Spulen optimal umzusetzen.

Die Anzahl und der Durchmesser der Spulen ergeben sich aus der Breite des Flächenelementes sowie der gesetzten Kontakt- /Schnittstellen an den Seiten und im inneren Bereich des Flächenelementes. Der Spulendurchmesser der Spulen in allen Flächenelementtypen ist gleich, halb, doppelt so groß, etc. - damit die Symmetrie und Funktion zwischen allen Flächenelementtypen gewahrt bleibt. Die Höhe einer Spule kann allerdings in den verschiedenartigen Flächenelementen variieren.

Zwischen einzelnen Spulen wurde ein identischer Abstand /Raum geschaffen. Er dient zur Abführung auftretender Wärme, welche durch erregte Spulen entsteht. Zudem kann er von Bauteilen der Elektrik / Regelung genutzt werden welche im unteren Platinensegment des Flächenelementes nicht genug Platz finden oder daraus hervorstehen. Weiterhin nehmen die Leerräume Kontakt- / Schnittstellen des Flächenelementes auf und ermöglichen derart den Energie- und Datenaustausch der Flächenelemente untereinander oder mit externen Vorrichtungen. Die Freiräume dienen ebenfalls als Aussparung für die Fixierung der Flächenelemente am Untergrund und untereinander.

In einem alternativen Verfahren können die Spule in horizontalen Scheiben gedruckt werden. Diese Scheibenspulen werden übereinandergelegt, mit Isoliermaterial/ Isolierlack schichtweise vergossen oder in einem 3D-Verfahren gedruckt.

3.8 Statorpolköpfe

Der Stator einer Spule wird im Fall der Flächenelemente geteilt in den Statorfuß (die Statorplatte) mit der Statorachse und den Statorkopf. Die Statorpole sind getrennt. Dies ist bei der Produktion und bei Reparaturen von Vorteil, da einzelne Elemente (z.B. Platine, Spulen, ...) einfach aufgesteckt / bzw. entfernt und an der Statorplatte fixiert werden können.

Die (achteckigen) Polköpfe werden mit ihrem zentrierten Stift in eine passgenaue Bohrung der entsprechenden Statorachse eingesteckt (wie in Fig. 37 dargestellt). Alternativ können sie auch mit Hilfe eines Gewindes des Polkopfstiftes und der Statorplattenachsbohrung eingeschraubt werden.

Der Vorteil des Einschraubverfahrens ist die stabile gepresste Fixierung aller unter dem Polkopf aufgesteckten Elemente. Allerdings kann das Gewinde zu unregelmäßigen Wirbelstromschwankungen führen und die Regelung der einzelnen Spulen u.U. verkomplizieren.

Das Steckverfahren setzt wiederum eine hohe Passgenauigkeit des Polkopfstiftes und der Statorplattenachsbohrung voraus. Bei einer Fixierung des Polkopfes durch z.B. Verkleben, Dehnverfahren (Vereisen der Bauteile während der Produktion. Wobei bei Normaltemperatur der im Durchmesser leicht breitere Polstift sich wieder ausdehnt und in die Statorplattenachsbohrung einpresst.) oder Verpressung währe allerdings ein einfacher Elementeaustausch oder vergünstigte Produktion nicht möglich.

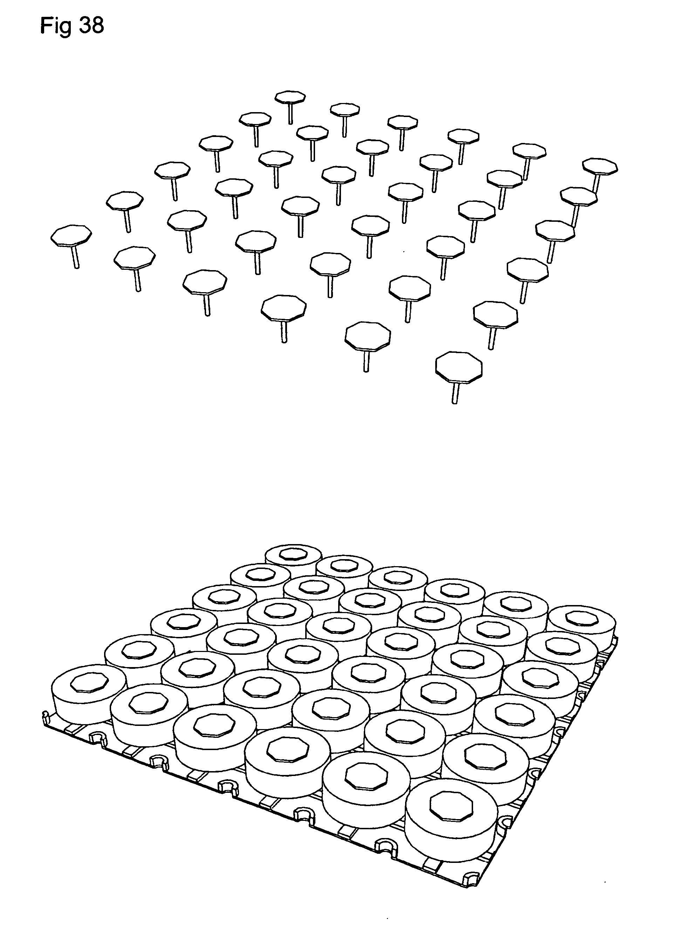

Die Versenkung der Polköpfe in die Achsen der Statorplatten nach dem Aufstecken wird in Fig. 38 veranschaulicht.

### 3.9 Kombinations- / Fixierungsstellen

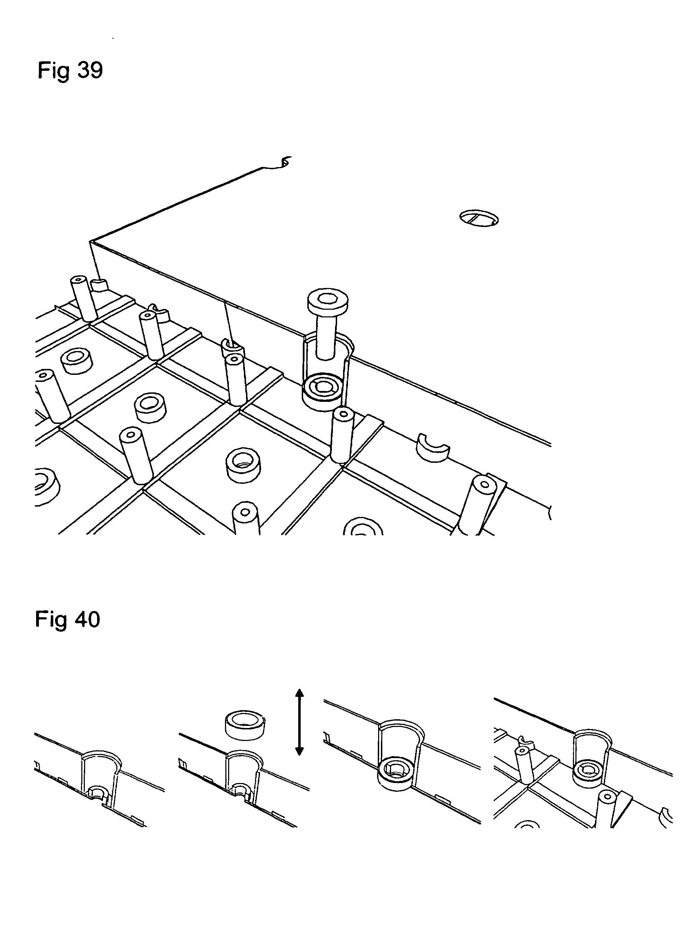

Um die Flächenelemente am Untergrund fixieren und mit den benachbarten Flächenelementen verbinden zu können befindet sich an den Seiten und im Innereren der Flächenelemente Aussparungen für derartige Vorrichtungen. Aufgabe der Fixierungsvorrichtung ist es die Flächenelemente zusammenzuziehen - sie zu kombinieren - als auch gleichzeitig mit den Untergrund fest zu verbinden. Dies ermöglichen durch aus der Statorplatte in den Aussparungen herausstehende Ringelemente über welche wiederum ein passgenauer Fixierring gesteckt / geschraubt werden kann. Über die Ringelemente beider Flächenelemente werden diese zusammengezogen und passgenau aufeinander gepresst. Es findet eine Fixierung und passgenaue Kombination beider Flächenelemente statt. Dies wird in den Fig. 39 und 40 veranschaulicht.

Der Fixierungsring wird mit einer nichtleitenden Schutzschicht (Plastik, Gummi) auf der Oberfläche umgeben. Dies ermöglicht ein gewisses Spiel um den Ring leichter entfernen zu können, dient als Korrosionsschutz, als Isolator zu potentiellen Kontakten auf der Innenseite der Aussparungen und als Eigenfixierung in der Aussparung der Flächenelemente.

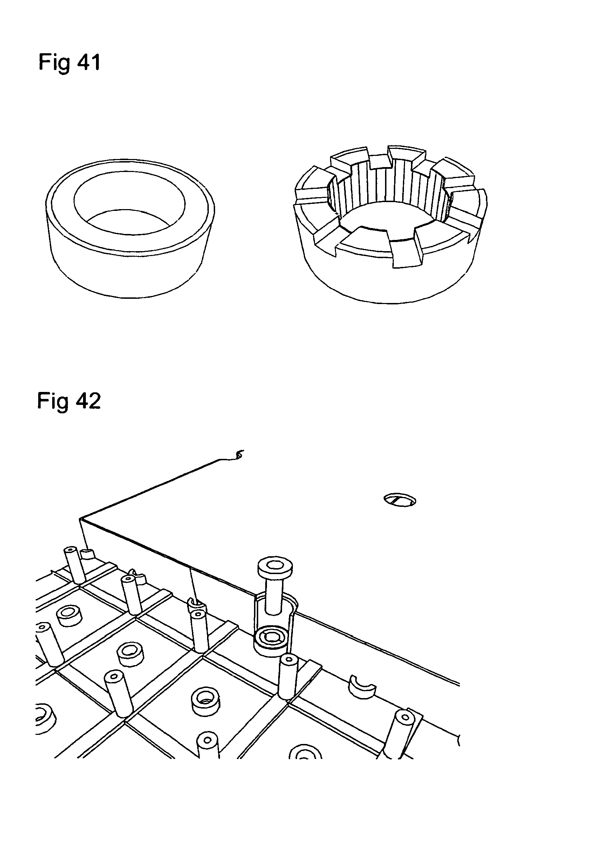

Es sind zwei Arten von Fixierring derzeit denkbar: Ein steckbarer und ein verschraubbarer Fixierring (siehe Fig. 41).

Der steckbare Fixierring ist in der Produktion günstiger zu fertigen und stabiler in der Konstruktion. Allerdings muss er über die Isolierschicht mit beispielsweise einem Schraubendreher bzw. durch eine Verwinkelung der Flächenelemente gegeneinander aus den inneren Statorplattenring hinausgehebelt werden.

Der ver- / aufschraubbare Fixierring birgt auf der Innenseite ein Gewinde welches in ein passgenaues Gewinde auf den Außenseiten der Statorplattenringe voraussetzt. Zudem befinden sich auf seiner Kopffläche Zähne bzw. Aussparungen in welche ein Schraubendreher greifen kann. Auf die Art kann dieser Fixierring auf die Ringe der Statorplatte aufgeschraubt werden. Dies ist von Vorteil, da ein Ein- und Ausschrauben des Ringes und folglich ein leichter Wechsel von Ringen und Flächenelementen möglich ist. Nachteilig ist die komplexe Erstellung der passgenauen Gewinde der Statorplattenringe bei der Produktion welche exakt in die Gewinde der Fixierringe greifen müssen.

Neben der Fixierung der Flächenelemente realisiert der Fixierring durch den Zusammenzug der Statorplatten zudem eine Möglichkeit die Wirbelströme erregter Spulen über ein Flächenelement auf das benachbarte Flächenelement zu übertragen und auf die Art eine indirekte Einheit der Spulenwirkweise für die gesamte Plattform zu erreichen. Die Plattform wirkt als ein einheitliches Flächenelement.

Um eine Fixierung mit dem Untergrund zu erzielen wird eine gewöhnliche Schraube durch den inneren Ring (der Statorplatte) geführt und mit dem Untergrund verschraubt. Der Schraubenkopf presst den Fixierring auf den Statorplattenring an die Statorplatte und schraubt gleichzeitig die Statorplatte bzw. das Flächenelement an den Untergrund. Dies wird in Fig. 42 dargestellt.

Alternativ wäre eine Schraube mit angefügten / verpressten (an den Seiten hin isolierten) Fixierring denkbar um ein schnelleren Aufbau der Plattform zu ermöglichen.

Durch den isolierenden Plastikverguss / die Hüllenbodenplatte, einen isolierenden Verschluss am Kopf der Aussparung sowie eine Isolationsunterlagscheibe auf der Schraube entsteht ein abisolierter Hohlraum, welcher die Kontakte des Flächenelementes vor äußeren Einflüssen z.B. Feuchtigkeit und Wetter abschirmt und vor Korrosion schützt.

### 3.10 Schnitt- / Kontaktstellen

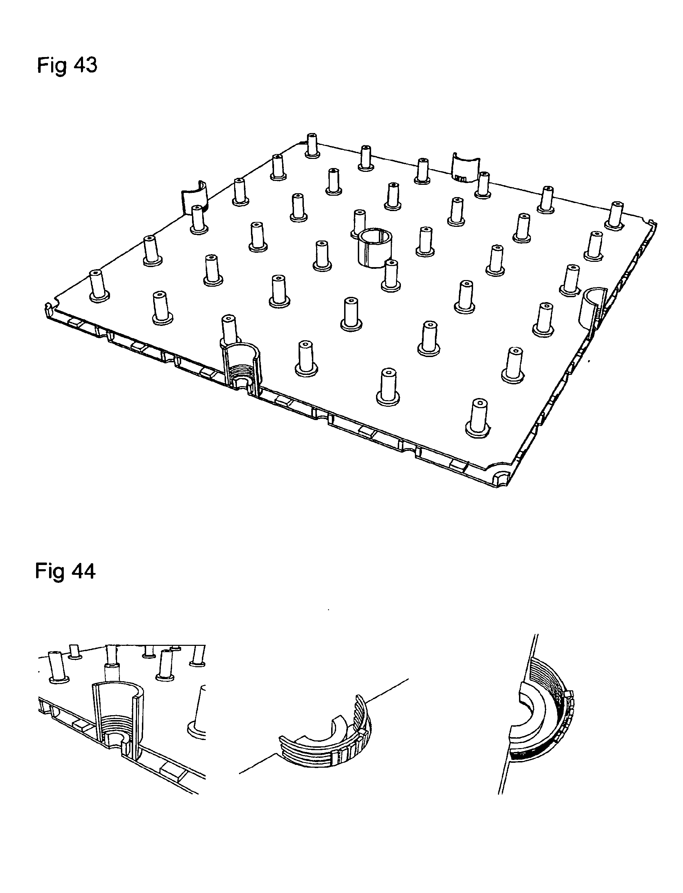

Die Schnitt- oder auch Kontaktstellen befinden sich symmetrisch in den entsprechenden Aussparungen der Flächenelemente. Über sie werden Daten und Strom zwischen benachbarten Flächenelementen und externen Nutznießern / Vorrichtungen ausgetauscht. Dies wird in Fig. 43 veranschaulicht.

Die halbrunden, sowie runden röhrenartigen Kontaktstellen sind mit der Hülle / Gehäuse der Flächenelemente verklebt bzw. verschweißt. Sie können allerdings auch ein fester Bestandteil des Gehäuses sein und bei der Produktion zusammen auf die Bauteile des Flächenelementes gestülpt werden. Zudem werden sie u.U. mit der Platine verlötet sowie verklebt und damit in die Elektrik der Kachel eingebunden. Die Kontaktstellen stehen auf der Statorplatte platziert auf den entsprechenden Statorplattenringen. Dies wird in Fig. 44 veranschaulicht.

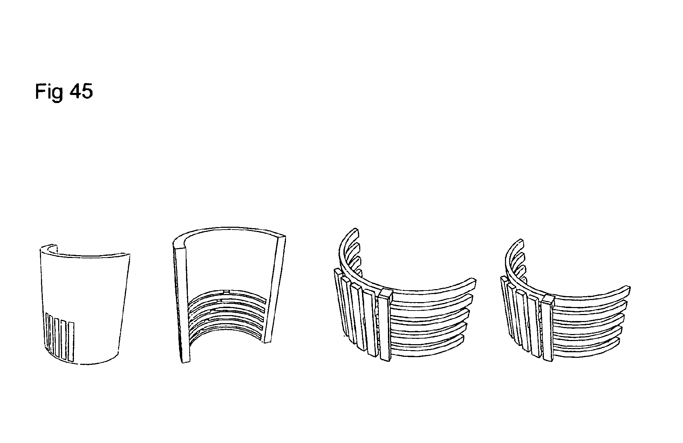

Die runde bzw. halbrunde Kontaktstelle besteht aus Isolationsmaterial und einem der Rundung angepassten Kontaktmaterial (Kupfer, Löt, ...). Die Form der Kontaktkonstruktion ist derart mit Aussparungen versehen, dass sie die Kontaktleitungen entsprechend bündig aufnimmt. Die einzelnen Kontaktleitungen verlaufen getrennt von einander im Inneren des Rund / Halbrund übereinandergeschichtet. Auf der Außenseite der runden Konstruktion verlaufen die Leitungsbahnen senkrecht eingelassen in der Oberfläche. Dies wird in Fig. 45 dargestellt.

Schichtweise sind Durchlässe in der Konstruktion für die jeweiligen Kontaktleitungen vorgesehen, welche die einzelnen Leitungen des inneren Runds mit den entsprechenden senkrechten Leitungsbahnen des äußeren Runds verbinden. Die Leitungen des inneren Rund verlaufen derart, dass sie nicht mit Kontaktstellen des nächsten angedockten Flächenelementes in direkter Verbindung stehen. Erst ein entsprechend ausgestalteter positionierter Fixierring oder ein Kontaktelement in der Aussparung stellt eine Verbindung her. Diese physische Trennung der Leitungen von Flächenelement zu Flächenelement ermöglicht eine vom Anwender gewollte mechanische Aktivitätskontrolle eines Flächenelementes. Softwarefehler, Regelungsfehler, Fehlkontakte bzw. ungewollte elektrische Verbindungen können auf diese Weise unterbunden werden. Nur Flächenelemente, welche durch eine Kontaktvorrichtung miteinander verbunden sind, können Strom und Daten austauschen.

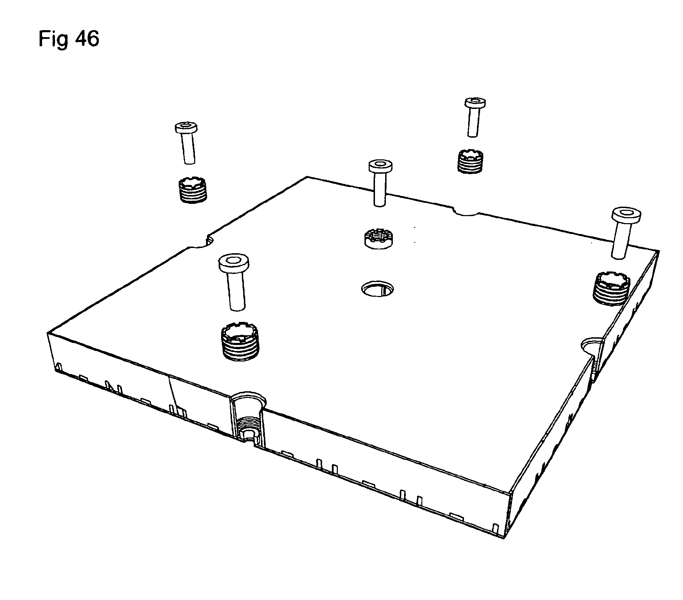

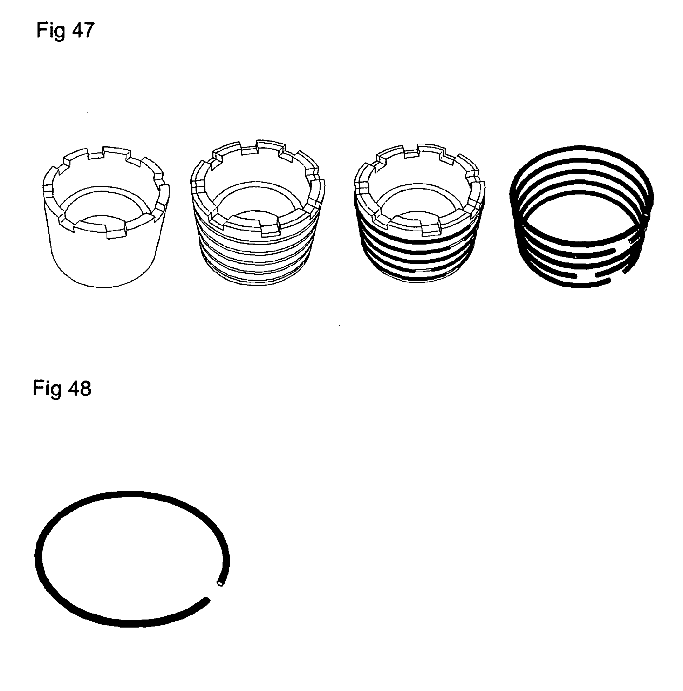

Die Kontaktfixierringe (wie in Fig. 46 und 47 dargestellt) gleichen den bereits vorgestellten Fixierringen. Sie werden ebenfalls auf den Statorplattenring aufgesteckt /aufgeschraubt und zwingen die benachbarten Flächenelemente zusammen. Ihre Außenrundung ist ebenfalls mit einer Isolationsschicht versehen. In dieser Isolationsschicht sind auf der entsprechenden Höhe zu den Kontaktschichten der Kontaktstellen eines Flächenelementes ringförmige elektrische Leitungsbahnen eingelassen. Diese Leitungsbahnen nehmen jeweils einen Kontaktring auf, welcher die elektrische Verbindung über die Kontaktstellen der benachbarten Flächenelemente zu denselben herstellt. Die eingelassenen Kontaktringe haben einen leicht größeren Radius als Kontaktfixierringe und die Kontaktstellen. Sie sind an einer Stelle unterbrochen. Auf die Art entsteht ein Federeffekt welcher die im Radius größeren Kontaktringe beim Einschrauben / Einstecken an die Kontaktleitungen der Kontaktstellen der Flächenelemente drückt. Die Unterbrechung des Kontaktringes erlaubt es dem Material sich im Radius bei aufgesteckten / aufgeschraubten Zustand zu verjüngen.

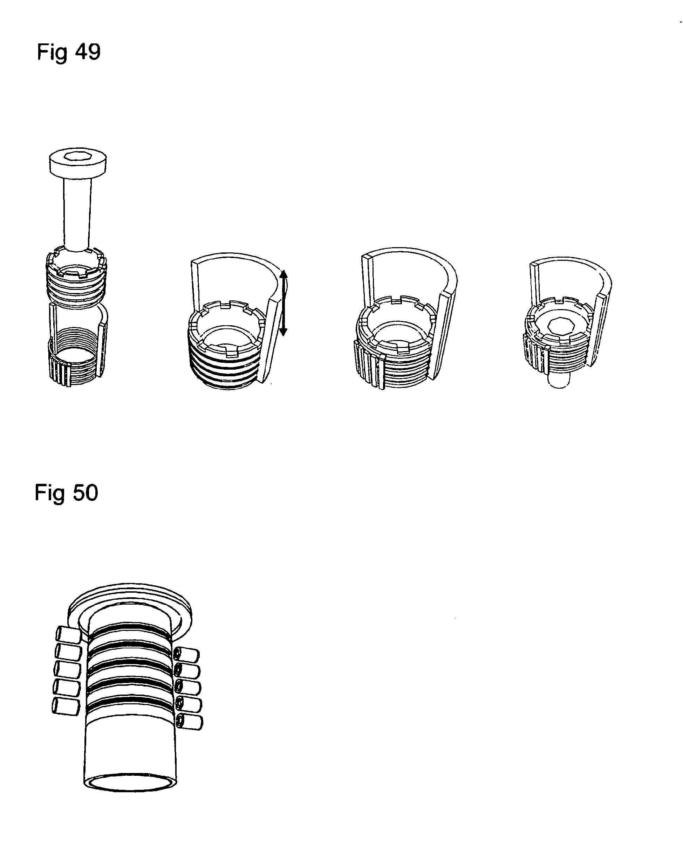

Die Kontaktfixierringe bzw. Fixierringe (siehe Fig. 49) können über einen inneren Grad verfügen. Ein Schraubenkopf, welcher durch den größeren Radius über das Schraubengewinde hinaussteht, liegt auf diesem Grad auf. Bei einer Verschraubung presst somit der Schraubenkopf zudem den Kontaktfixierring bzw. Fixierring auf das entsprechende Ringelement der Statorplatte. Dies garantiert zudem die Fixierung der Kontaktringe (Fig. 48) in der richtigen Höhe zu den Kontaktstellen und Kontaktleitungen der Flächenelemente.

Alternativ besteht die Möglichkeit, starre Kontaktleitungen in den Aussparungen der Isolationsschicht der Kontaktfixierringe unterzubringen und federgelagerte Kugelkontakte in den Kontaktstellen der Flächenelemente unterzubringen (siehe Fig. 50). Die gefederten Kugeln würden bei einer Versenkung des Kontaktfixierringes sich an dessen Kontaktleitungen drücken und auf die Art eine elektrische Verbindung ermöglichen. Diese Lösung realisiert allerdings nur eine Punktuelle Verbindung. Bei einer Korrosion an einer der Kugelkontaktstellen würde die elektrische Verbindung unterbrochen werden.

3.11 Zusätzliche Nutzenfunktionen der Schnitt- und Kontaktstellen

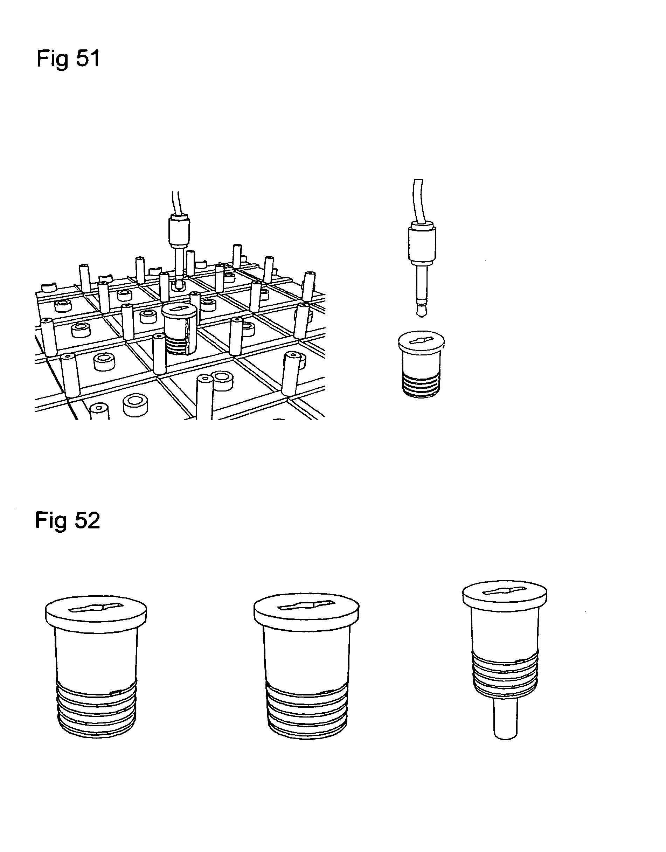

Neben der Daten- sowie Energieübermittlung zwischen den Flächenelementen der Plattform sollen die jeweiligen Kontaktstellen zudem für externe Nutznießer / Vorrichtungen als Datensowie Energieschnittstelle zur Verfügung stehen. Dies ermöglicht eine Energieversorgung externer Vorrichtungen und / oder einen Datenaustausch durch einen Kontaktadapter (siehe Fig. 51).

Speziell für den jeweiligen Anwendungstyp gefertigte Kontaktadapter können in die Aussparungen und Kontaktstellen der Flächenelemente versenkt oder verschraubt werden.

Sie greifen im gleichen Aufbau wie die Kontaktfixierringe den Strom über die Flächenelementschnittstelle ab. Ebenso drücken sich in die Isolierschicht gelassene Kontaktringe an die Kontaktleitungen der Flächenelementschnittstellen und stellen auf die Weise eine elektrische Verbindung her. Die Kontaktadapter reichen von der Größe bis an die Flächenelementoberfläche und füllen im Kopf (evtl. bündig oder überstehend) den Grad in der Aussparung aus. Über einen Schlitz am Kopf des Kontaktadapters kann derselbe in die Aussparung des Flächenelementes verschraubt und festgezogen werden. Da nicht immer eine Verschraubung des Flächenelementes mit dem Untergrund gewünscht ist gibt es zwei Arten von Kontaktadaptern: Kontaktadapter mit inneren Gewinde welche sich über die Statorplattenringe schrauben und Kontaktadapter mit einem unten herausstehenden Schraubgewinde welche zudem ebenfalls die Flächenelemente am Untergrund fixieren. Dies wird in Fig. 52 veranschaulicht.

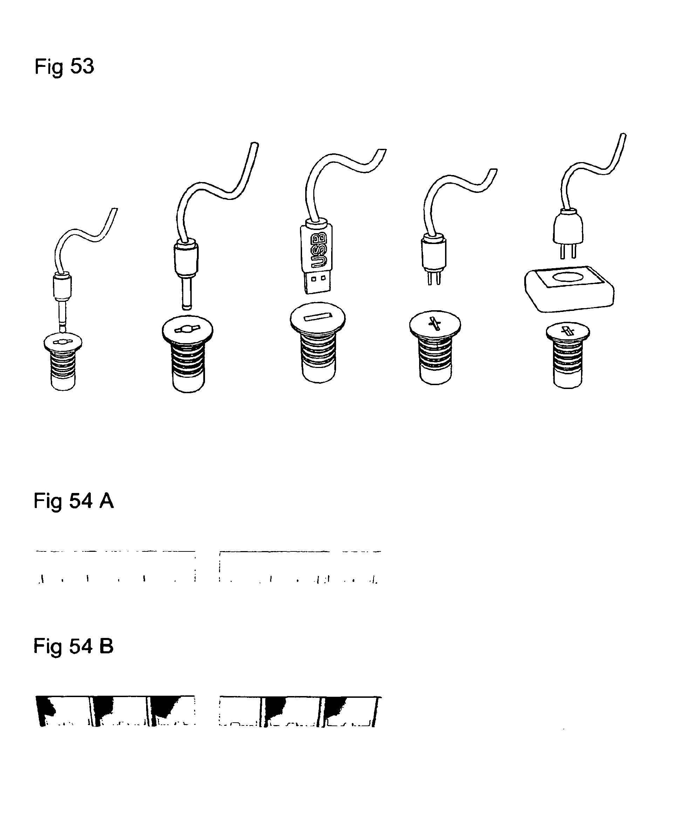

Am Kopf eines Kotaktadapters ist jeweils ein spezieller Einlass für diverse Stecker von externen Nutznießern angebracht. Eine Kontaktadapter interne Vorrichtung und Verkabelung führt den entsprechenden Strom und/oder die entsprechenden Daten an den jeweiligen Bereich des eingesteckten Steckers. Eine konkreter innerer Aufbau eines Kontaktadapters für die Aufnahme diverser Steckvorrichtungen wurde noch nicht entwickelt; wird sich voraussichtlich nach den gegebenen Standards und Normen richten. Während eines eingesteckten Zustandes sind die umliegenden Spulen im deaktivierten Zustand. Dies schützt die angesteckte Vorrichtung, führt zu keinen Magnetfeldirritationen und die angeregten Magnetwirbelströme können nicht die Funktionen des externen Nutznießers beeinflussen (siehe Fig. 53).

Der Strom- und Datenaustausch von externen Vorrichtungen /Nutznießern über die Flächenelemente der Plattform mit dem zentralen Steuerungssystem ermöglicht eine weitere große Bandbreite an Anwendungsmöglichkeiten. Eine derart eingebrachte Sensorik, ob optisch oder induktiv würde ebenfalls die Ortung von aufliegenden Objekten unterstützen. Spezielle Vorrichtungen zur Kontaktlosen Energie- und Datenübertragung sind denkbar (wenn nicht durch die Spulen des Flächenelementes realisiert). Externe Nutznießer können in Ihrem Verhalten und ihrer Energie-/ Datenversorgung beeinflusst werden. Individuelle Abschaltungen durch das zentrale Steuerungssystem sind jederzeit möglich, eine exakte Strom- sowie Datenüberwachung sind möglich. Weiterhin potenziert eine Dateneinspeisung durch externe Vorrichtungen in das System die Mächtigkeit sowohl der externen Vorrichtung, als auch die des zentralen Systems.

### 3.12 Hülle / Gehäuse

Die Hülle eines Flächenelementes besteht aus nichtleitendem nichtferromagnetischem Material. Vorzugsweise Plastik. Sie setzt sich aus mehreren Bauteilen zusammen: Der Hüllenbodenplatte, den Hüllenseiten und dem Hüllendach / Gehäusedeckel.

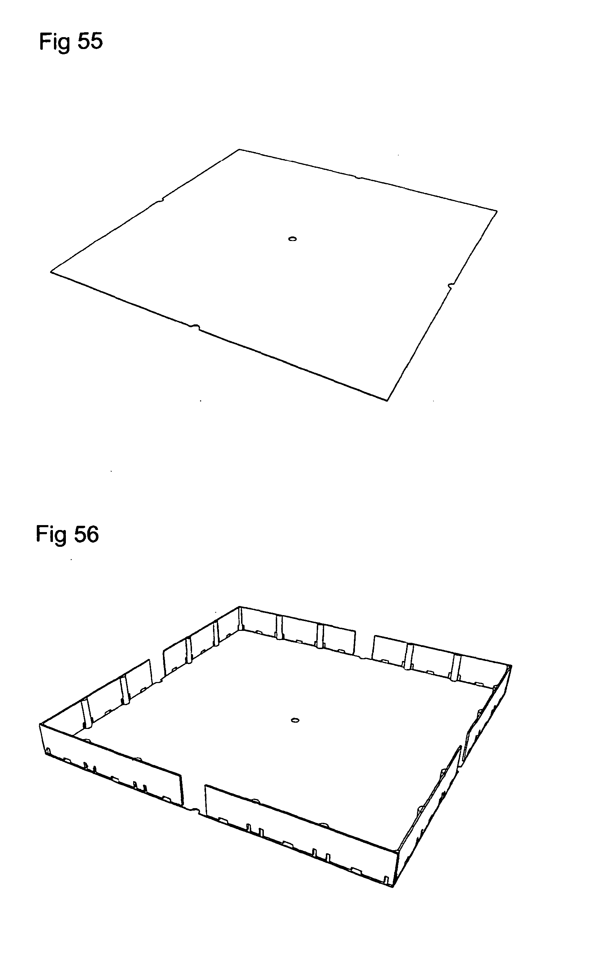

Die Bodenplatte der Hülle passt ihre Formgebung nach der Grundform der Statorplatte an, mit welcher sie verklebt bzw. vergossen ist. Sie besitzt an den Seiten und im Inneren entsprechende Aussparungen sowie Löcher für die Fixierungen und Kontaktstellen des Flächenelementes (siehe Fig. 55 und Fig. 56).

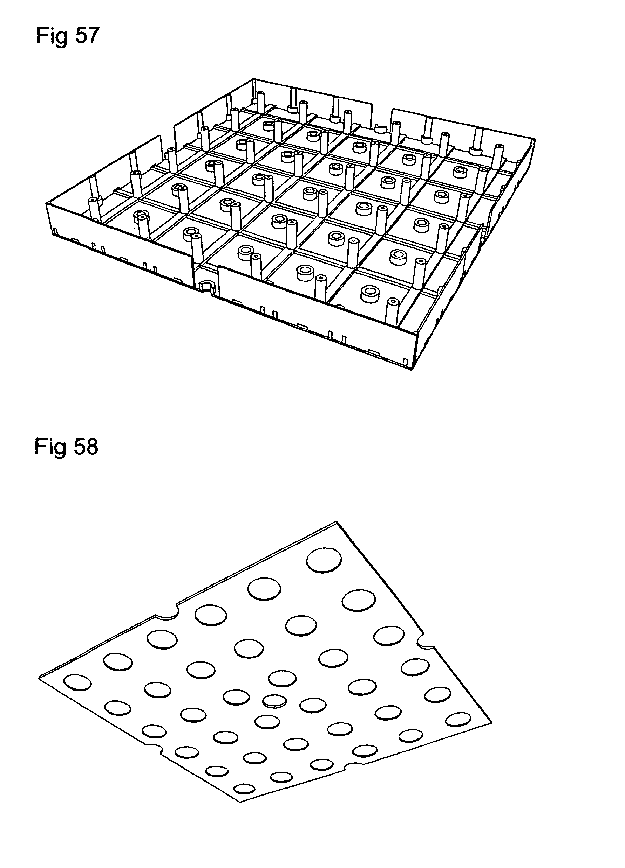

Die Hüllenseiten / Seitenwände (siehe Fig. 57) passen sich ebenfalls der Formgebung der Statorplatte an. Sie sind symmetrisch aufgebaut. Die Statorplatte "durchdringt" den Fuß der Seitenwände um mit dem benachbarten Flächenelement direkt in Kontakt zu geraten. Auf die Art wird eine weitere Schnittstelle für Wirbelströme zwischen erregten Spulen benachbarter Flächenelemente geschaffen.

In der Mitte jeder Seitenwand befindet sich ebenfalls eine oder bei größeren Flächenelementen mehrere Aussparungen in Form eines durchgehenden Spaltes für die Fixierungen und Kontaktstellen des Flächenelementes. Auf der Rückseite verlaufen senkrechte Stabilisierungsstreben welche sich an der Anzahl und dem Ringdurchmesser der Statorplattenringe orientieren und in diese einfügen. Diese Art der Verzahnung von Hülle sowie Innenbauteilen fixiert und verstärkt.

Das Hüllendach / der Hüllendeckel (siehe Fig. 58) ist neben den Aussparungen für die Fixierstellen und Kontaktstellen mit Aussparungen für die Polköpfe der Wandler versehen. Das Material ist besonders Wärmeleitend um die Wärmestrahlung, welche sich im Kachelinneren temporär durch die erregten Spulen bildet, nach Außen abzuleiten.

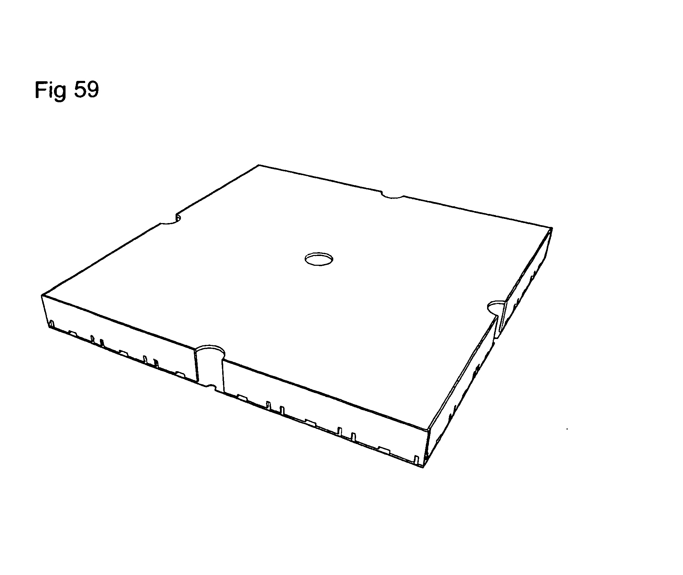

Alle Hüllenbauteile werden miteinander verklebt bzw. verschweißt um ein Feuchtigkeitseindringen zu verhindern. (Siehe auch Fig. 59)

### 3.13 Plattformränder / Plattformrahmen

Damit ausgelegte Flächenelemente bzw. die Plattform auch an Seiten, welche nicht mit anderen Flächenelementen verbunden sind, fixiert werden können wird ein Rahmen bzw. Rand angefügt. Die Ränder setzten sich aus unterschiedlich langen Randelementen / Randtypen zusammen welche auf Passgenauigkeit und Größe der verschiedenen Flächenelemente hin konstruiert wurden. Derzeit existieren die Randelemente mit Längen von 25cm, 50cm, 100cm. Die Struktur und der Aufbau der jeweiligen Randtypen kann zusätzlich variieren.

Ist eine Versenkung der Plattform notwendig so sollten Randtypen mit gerade verlaufenden Kanten / Profil verwendet werden. Bei einer auf dem Boden aufliegenden Plattform ist u.U. ein abgeschrägtes Randprofil sinnvoll. Wenn z.B. Vorrichtungen auf die Plattform gefahren oder gerollt werden müssen.

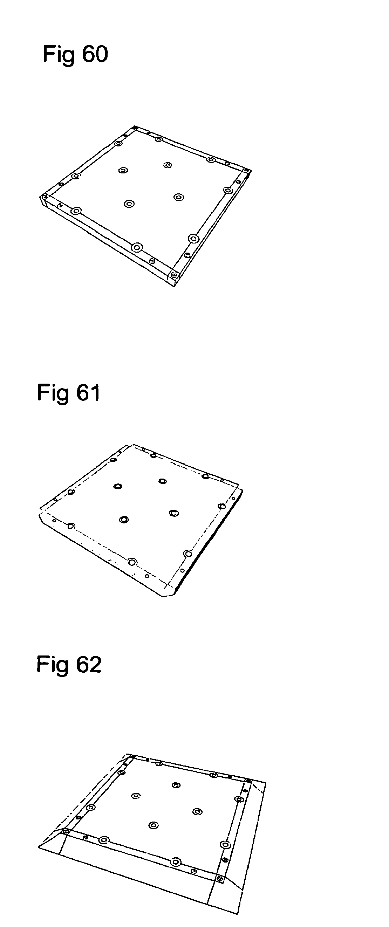

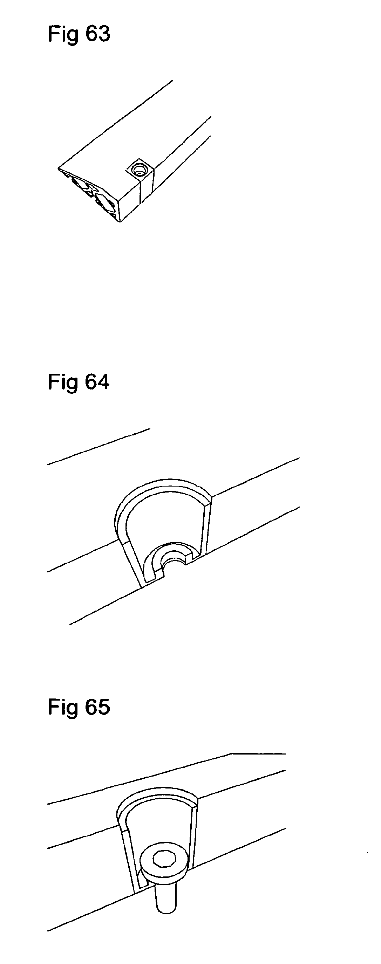

Alle Randelemente (siehe Fig. 60 - 66) sind separat mit dem Untergrund verschraubbar. Neben der Fixierungsstellen für ein oder mehrere Flächenelemente befinden sich zusätzliche Versenkungslöcher / Fixierungsmöglichkeiten für Schrauben in den Randelementen. Ein entsprechender Grad in den Versenkungslöchern ermöglicht das Einsetzten von Blendverschlüssen / Blendaufsätzen.

Sollte die Plattform beispielsweise auf Regalböden oder an Trägerstreben befestigt werden, welche von der Unterseite erreichbar sind, so kann eine Fixierung der Randelemente an einem Schlitz der Randelemente realisiert werden. Hierfür werden entsprechende Muttern in die Aussparung / Schlitz des Randelementes seitlich eingeführt. Schrauben welche über Bohrungen des Untergrundes mit diesen eingeführten Muttern verschraubt werden fixieren die Ränder auf diese Weise von der Rück- / Unterseite der Plattform mit dem Untergrund.

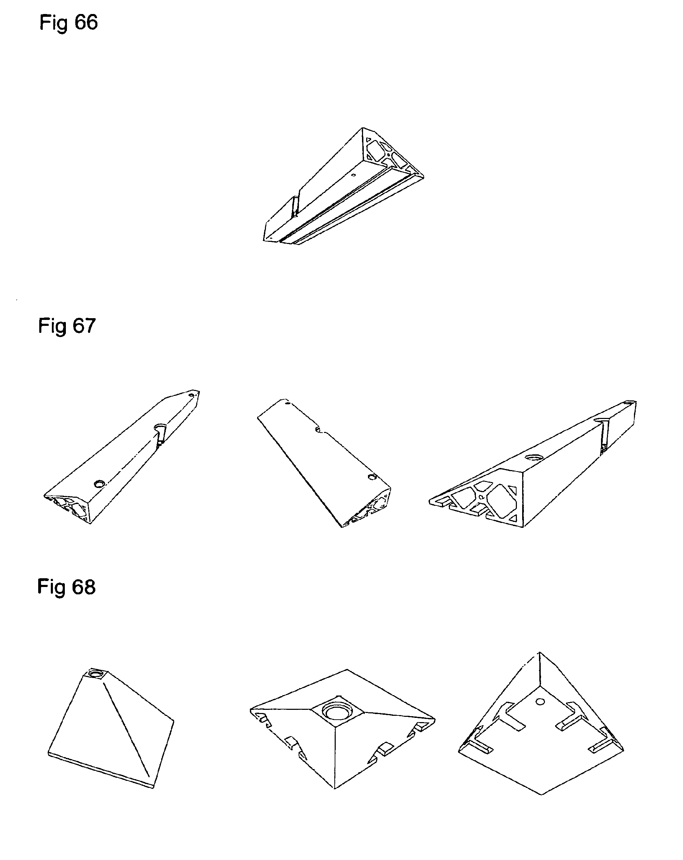

Fig. 67 zeigt eine Rahmenelement-Schräge (25cm) mit zwei Schraubenversenkungen und einer Flächenelementfixierungsstelle

Die Ränder wurden nach dem am Markt gängigen Produkten der Firma "item" ausgerichtet um eine größtmögliche Kompatibilität mit standardisierten und verbreiteten Konstruktionen zu realisieren. Auf diese Art soll das Integrationspotential der Flächenelemente vergrößert werden und bereits gängige Produkte in die Plattform mit eingebunden werden können. So ist beispielsweise die Größe sowie der Verlauf von Teilen der inneren Verstrebungen absichtlich aus Pass- und Kompatibilitätsgründen Produkten von "item" nachempfunden. Die Außenbemaßungen passen sich allerdings der Struktur der Plattform / Flächenelemente an.

Zur Gewichts- und Ressourcenreduktion sind die Randelemente mit Hohlräumen versehen. Innere Verstrebungen fangen Stauchungen durch äußere Einflüsse auf und erhöhen die Gesamtstabilität bzw. die Steifigkeit der Randelemente. Dies ermöglicht zudem eine Erleichterung in der Produktion. Das heiße weiche Material des Randelementes wird bei der Herstellung längsgezogen und behält bei dem Abkühlungsvorgang die gezogene Form bei.

Bei den Schrägen wurde die spitzzulaufende Kante entgratet. Dies dient zum einen einer gewissen Dreckbremse als auch zur Verstärkung des Elementmaterial. Die stumpfe Spitze / Kante ist nicht mehr so leicht zu beschädigen.

Die Rahmenecken sind passgenau auf die Randelemente abgestimmt konstruiert. Sie verfügen wie andere Rahmenelemente über eine Verschraubungsbohrung zur Fixierung mit dem Untergrund durch eine Schraube. Diese Verschraubungsbohrung verfügt ebenfalls über einen Grad für die Versenkung von Blendknöpfen. Weiterhin sind ebenso am Boden Schlitze zur Verschraubung mit anderen Vorrichtungen in das Rahmeneckelement eingelassen (siehe Fig. 68).

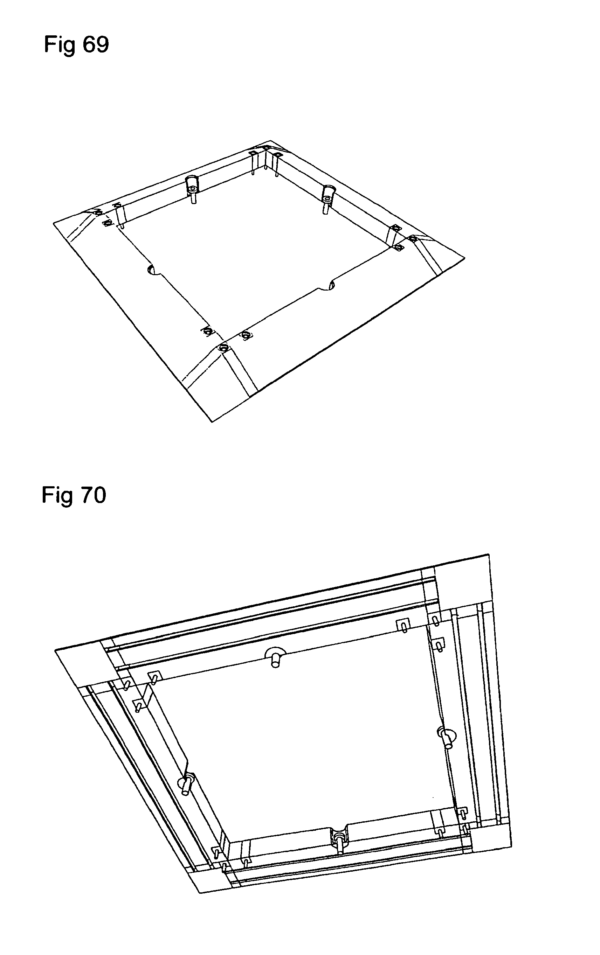

Die in den Rahmenelementen eingelassenen Schlitze, Bohrungen und Aussparungen (siehe Fig. 69 und 70) können ebenso mit Steckverbindungen versehen werden um andere Rahmenelemente oder anderwärtige Vorrichtungen einzustecken bzw. daran zu befestigen.

Weiterhin ist eine eingelassene Verkabelung in die Rahmenelemente denkbar. Das zentrale Steuerungssystem würde nicht direkt an ein Flächenelement der Plattform angeschlossen sein, sondern an ein dafür ausgelegtes Schnittstellenrahmenelement. Dieses realisiert sodann mit Hilfe der Kontaktschnittstellen der Flächenelemente den Energie- und Datentransfer zwischen der Plattform sowie dem zentralen Steuerungssystem. Wobei externe Nutznießer ebenfalls von dieser Verkabelung profieren können. Es sollten die bereits vorhandenen Schnittstellen zu den Flächenelementen genutzt werden. Eine zusätzliche Energie- und Datenschnittstelle welche an einem Rahmenelement angebracht ist sollte allerdings nicht ausgeschlossen werden.

4. Schaltung und elektronische Steuerung

An dieser Stelle soll nur kurz bzw. übergreifend auf die entsprechende Regeltechnik sowie Elektrik der Flächenelemente und des Systems eingegangen werden.

Die einzelnen Flächenelemente, welche vom Anwender individuell zusammengefügt zu einer Plattform gestaltet werden, erhalten von einem zentralen Rechner die entsprechenden Steuerungssignale, um spezifisch Magnetfelder zu erregen und die Energie anderweitiger Nutznießer zu konditionieren. Die benötigte Energie kann ebenfalls zentral dem System zugeführt werden.

Die Software steuert durch das Protokoll mit Hilfe eines Datenbusses über die jeweiligen Schnittstellen der Flächenelemente die Einzelwerte der Elektrospulen. Aus Kosten- und Hot-Pluggin-Gründen empfiehlt sich ein serielles Bussystem (USB, Firewire).

Je nach Übertragungsart wird das interne Steuerungselement eines Flächenelementes geschaltet. Diese interne Schaltung sollte mit Hilfe eines integrierten eindeutig zuweisbaren Schieberegisters, Controllers, etc. und der vorgegeben Daten der externen zentralen Plattformsteuerung die Energieabgabe in Stärke, Spannung und Frequenz steuern.

Um den Datenaufwand gering zu halten empfiehlt sich eine Digital-Analog dosierte Ansteuerung eines Magneten über eine Puls-Modulation und Endstufen. Geht man von digitalen Signalen am Eingang eines potentiellen Verstärkers aus, so wäre das Konzept bis zu den Leistungsendstufen durchgängig digital.

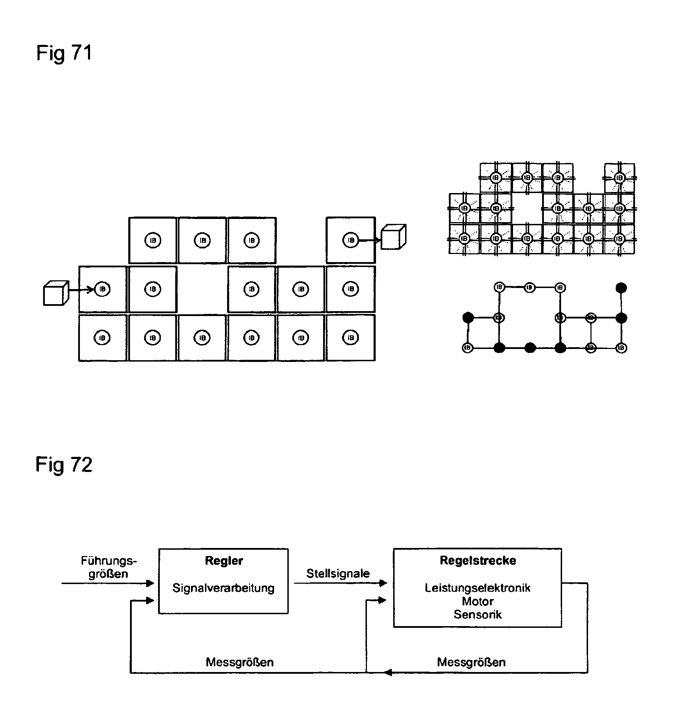

Figur 71 zeigt eine beispielhafte Vernetzung von Flächenelementen.

Außer einer komplett zentralisierte Steuerung kann eine neuronale Strukturierung mit einer gewissen "Intelligenz" eines jeden Flächenelementes gewählt werden.

Die neuronale Lösung kann sich allerdings als nachteilig bei auftretenden Störungen während des Bewegungsablaufes einer Transportvorrichtung bzgl. der Routenoptimierung aller Transportvorrichtungen erweisen. Gleichzeitig ermöglicht eine neuronale Struktur allerdings eine gewisse Unabhängigkeit der Flächenelemente gegenüber der Zentralsteuerung, was wiederum Störungen der Datenübertragung durch die Zentrale reduziert, und den zeitnahen reibungslosen Datentransfer mit benachbarten Flächenelementen.

Eine "teilneuronale" Kompromisslösung beider Varianten wäre denkbar, da die Flächenelemente Status- und anderweitige Informationen an die Zentralsteuerung aber auch direkt oder indirekt an die Nachbarelemente übergeben müssen.

Der Aufbau der Netztopologie für die Energieversorgung ist ebenfalls nach Verbrauch und Wirtschaftlichkeit zu optimieren und richtet sich nach den Vorgaben der elektromagnetischen Spulen, der elektronischen Elemente, sowie den Bedürfnissen potentiell angeschlossener systemfremder Nutznießer. Die Maximalanzahl der kombinierbaren Flächenelemente einer Plattform ergibt sich somit ebenfalls aus den wirtschaftlich optimierten und vertretbaren Vorgaben der elektrischen und mechanischen Einzelkomponenten der Steuerung.

Bei hohen Spannungen müssen in den Flächenelementen Material- und Sicherheitsmaßnahmen gegen Störungen vorgenommen werden. Dies ist der Fall bei voluminöseren Spulen. Bei kleiner ausgelegten Spulen sinkt der benötigte jeweilige Spannungsbedarf gleichzeitig erhöht sich die Anzahl der Spulen. Die Größe der Spulen richtet sich nach der gewünschten Bewegungspräzession der Transportvorrichtungen und deren maximal Gewichts, wirtschaftlichen Faktoren etc..

Die Vorgaben der Schaltungsentwicklung und Energiekonditionierung haben somit ebenfalls maßgeblich Einfluss auf die Entwicklung der elektromagnetischen Spulen.

Für eine Metalldetektion (siehe Abschnitt: Metalldetektion) wird nach dem Induktionsgesetz eine zeitlich veränderte Spannung benötigt welche durch veränderte Magnetfelder (Wirbelströme) hervorgerufen wird. D.h. es muss ein analoger Ist-Strom durch einen rückführenden Regelkreis gemessen werden. Um die Detektion Energiesparsam zu realisieren ist eine temporär frequentierte Pulsmessung gegenüber einer analogen Dauermessung sinnvoll. Für den Umfang und Exaktheit der Erfassung dieser Wirbelströme sind wiederum die zu konzipierenden elektromagnetischen Spulen führend verantwortlich.

Besonders in der Elektronik sind viele Variationen möglich.

Fig. 72 zeigt grob die Struktur eines Regalsystems.

5. Transportvorrichtungen/Anker

Aus systemtechnischer Sicht stellen die in den Flächenelementen befindlichen Elektromagnete ein eigenes Antriebssystem dar und sind nicht, wie sonst üblich, Elemente in übergeordneten Antriebssystemen. Diese Eigenschaft kann sich ressourcenschonend auf potentielle Transportvorrichtungen / Ankervorrichtungen auswirken.

Anker in Transportvorrichtungen, welche Objekte transportieren, können unterschiedlich gestaltet sein, um eine bestmögliche Bewegungsvielfalt unter Beachtung des Masseträgheitsmomentes zu gewährleisten. Dennoch wird aus Produktionstechnischen Gründen ein standardisierter Ankertyp welcher sich an verschiedene Transportvorrichtungen anfügen / fixieren lässt favorisiert.

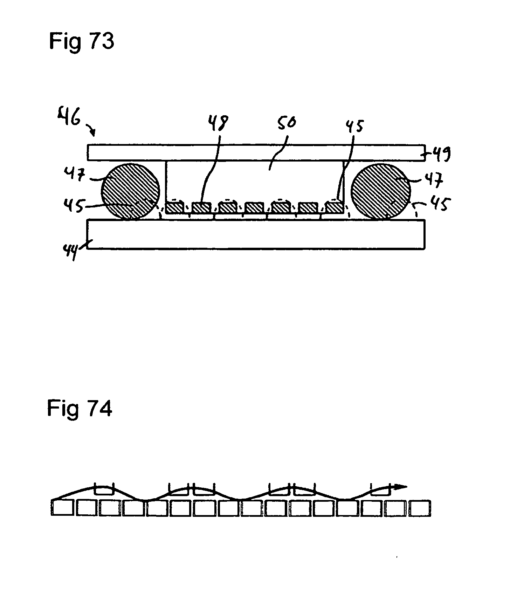

In Fig. 73 wird eine mögliche Ausführungsform einer passiven Transportvorrichtung in der seitlichen Schnittansicht angedeutet. Ihre tragenden Rollelemente sitzen auf einem fixierten Flächenelement auf. Über den Rollen / Rädern befindet sich die eigentliche Transportfläche auf welcher die zu transportierenden Objekte abliegen oder befestigt sind. Zwischen den Rollen und unter der Transportfläche sitzt der Körper. Er enthält ferromagnetische Elemente oder Permanentmagnete, die als Anker in der relativ direkten Nähe des Flächenelements angebracht sind. Ebenso können allerdings auch die Rollen, um magnetische Wirbel zu reduzieren, in einem gewissen Abstand nebeneinander angeordnet sein. Ebenso können auch die Rollen mit ferromagnetischen Elementen oder Permanentmagnete durchsetzt sein. Bauen die Wandler des Flächenelementes elektromagnetische Felder auf, wirken diese auf die mit ferromagnetischen Elementen ausgestatteten Bereiche der Transportvorrichtung.

In Fig. 73 erkennt man:

    44 Elektromagnetisches Flächenelement,
    45 Magnetfeld,
    46 Beispielhafte Transportvorrichtung,
    47 tragende Rollelemente (Rad, Kugel, ...),
    48 Ferromagnetische Elemente und / oder Permanentmagnete,
    49 Objektauflagefläche,
    50 Körperelement.

Durch die in Zeit und Intensität gestaltete unterschiedlich Ansteuerung der Wandler werden die Ankerelemente an die elektromagnetische Kachel gezogen. Dies bewirkt, bei der richtigen Ausgestaltung der Magnetfelder, eine Bewegung der Transportvorrichtung.

Schematisch im Ablauf betrachtet wird die Transportvorrichtung durch magnetisch führende Wellen tangential gezogen (siehe Fig. 74).

Transportvorrichtungen können selber steuerbare Flächenelemente oder Wandler enthalten und analog zu den Flächenelementen elektromagnetische Kräfte zur Eigenbewegung in Verbindung mit externen ferromagnetischen Elementen erzeugen. Dies ist jedoch aufwändig und nicht die bevorzugte Variante.

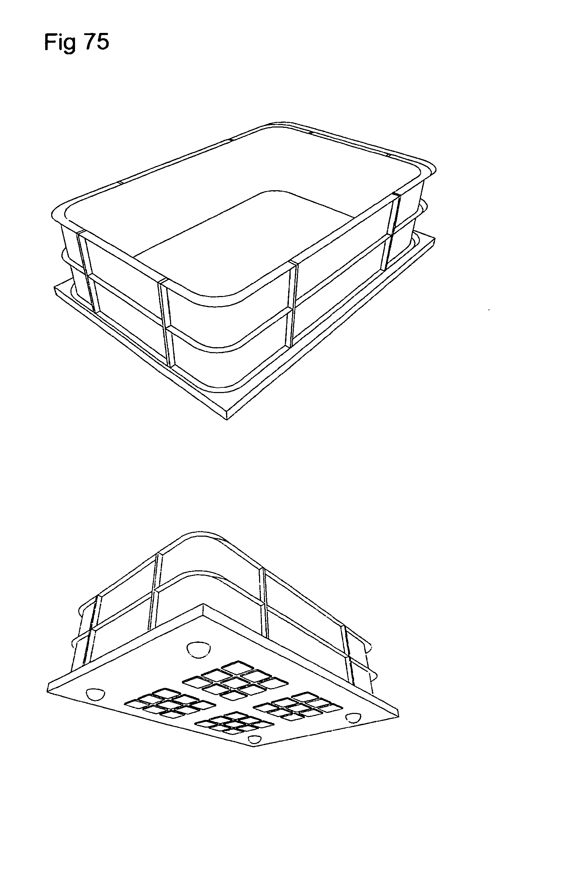

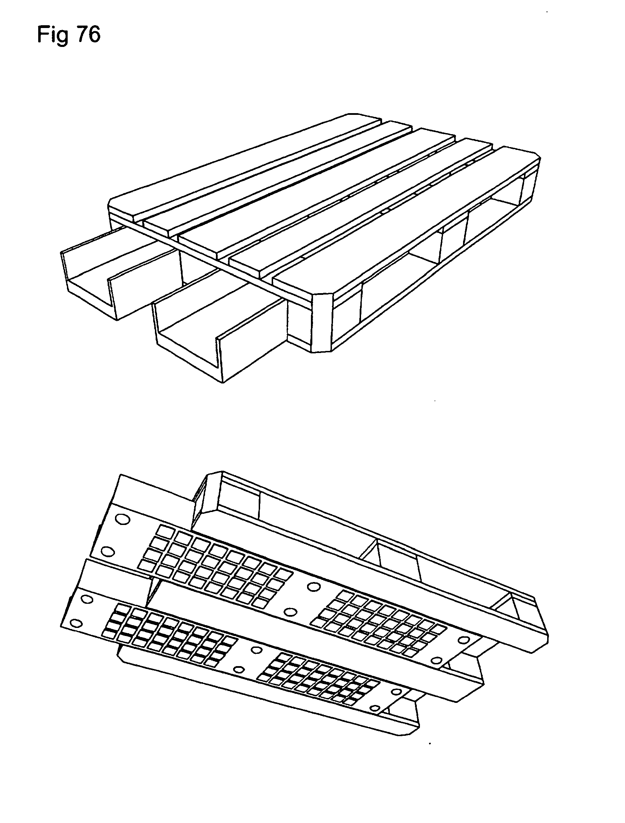

Mögliche Transportvorrichtungen zeigen die Fig. 75 und 76.

Auch gängige Transportvorrichtungen können, unter integrativer Anfügung von entsprechend ausgelegten Ankerelementen, die elektromagnetischen Felder der Flächenelemente zum Eigenantrieb oder zur Unterstützung der Eigenbewegung nutzen.

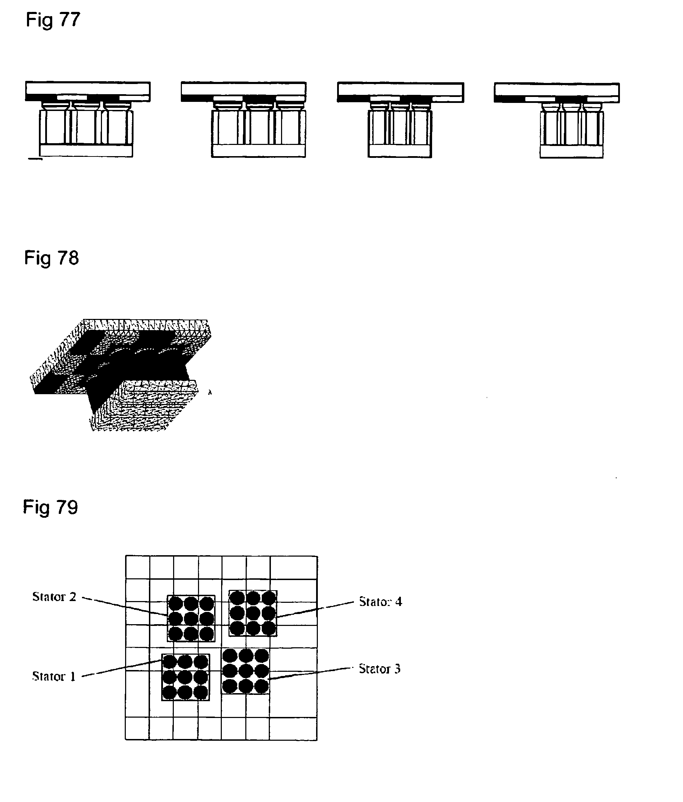

Eine optimierte Anordnung und Materialauswahl (ferromagnetische Elemente, Permanentmagnete, ...) der Ankerelemente in der Transportvorrichtung kann die Magnetkraftwirkungen der Flächenelemente unterstützen. Ist das Ankerelement zum Pol des Wandlers im Flächenelement versetzt, kann die Magnetkraft des erregten Poles und damit den Anker um eine halbe Wandlerbreite so verschieben, dass sich der Wandler und das Wirkelement genau gegenüber stehen. Wird nun die Erregerspule dieses Wandlers abgeschaltet und ein weiterer Wandler eingeschaltet, dessen Ankerelement leicht versetzt über ihm steht, so wird durch diesen Pol des Magneten der maximale Fluss fließen und den Anker genau über diesen ziehen. Es entsteht eine Verschiebung. Folgt anschließend eine Aktivierung des ersten Wandlers und Deaktivierung des zweiten Wandlers, werden auf diese Art Tangentialkräfte erzeugt. Bei andauernder Wiederholung dieser Ansteuerung wird eine Läuferbewegung des Ankerobjektes erzielt. Dies wird in Fig. 77 veranschaulicht.

Zu beachten ist, das die Tangential- und Normalkräfte um so größer sind, je kleiner der Luftpalt S zwischen den Läufer-(Ankerobjekte) und den Ständerpolen (Wandlern) ist. Die Qualität der Ankerführung ist deshalb entscheidend für die Parameter des Linearantriebes. Die relativ großen Normalkräfte würden im Falle einer mechanischen Führung sehr stabile Konstruktionen erfordern (siehe Fig. 78).

Besondere Anforderungen stellt der Schweranlauf gegen das Massenträgheitsmoment und ein gegebenenfalls vorhandenes Gegenmoment einer Transportvorrichtung dar. Neben der thermischen Belastung treten nach dem Einschalten hohe elektrische und mechanische Beanspruchungen durch transiente Vorgänge auf, die beim Entwurf und der Betriebsweise zu beachten sind (Statorstrom, Trägheitmoment, "Drehmoment").

Für die Führung der Transportvorrichtungen sind die besten Ergebnisse bisher mit Luftführungen erzielt (Linearer Hybridschrittmotor mit Luftlagerung) worden. Die magnetischen Normalkräfte sind im Hinblick auf eine hohe Lagersteifigkeit dabei sehr vorteilhaft. Die Luftlagerung hat außerdem den Vorteil, dass praktisch keine Reibung und kein mechanischer Verschleiß auftreten und das Gewicht verteilt wird. Allerdings führt die Bereitstellung der Luft zu einem zusätzlichen Energieverbrauch. Unter Laborbedingungen lassen sich in Abhängigkeit von der Ebenheit und der Rauhigkeit der Stator- und Ankerführungsflächen Luftspalte von 10 bis 20 $\mu$m

erreichen. Diese sauberen Gegebenheiten sind allerdings, im Rahmen der meisten Einsatzgebiete, welche erfindungsgemäß vorgesehen sind, nicht vorhanden. Weiterhin ist bei normfremder Objektlagerung auf den Transportvorrichtungen mit Verzerrungen der Magnetfelder zurechnen, welches eine regelintensive Schaltung und Software provoziert. Transportvorrichtungen werden daher in den ersten Phasen nicht schwebend realisiert.

Aus der Vielfalt der Bauarten elektrischer Maschinen gewinnen permanentmagneterregte Synchronmaschinen, die über Wechselrichter gespeist werden, an Bedeutung. Durch eine Umgestaltung des magnetischen Kreises derart, dass bei kleineren Polteilungen nur kleine Verluste erzeugt werden. Weitere Vorteile liegen in der hohen Kraftdichte und dem niedrigen Gewicht.

Bei Einsatz von Permanentmagneten im Anker kann sich durch die vektorielle Überlagerung des Statorfeldes mit dem Feld der Permanentmagnete eine "magnetische Zahnstruktur", die eine zusätzliche Kraftkomponente erzeugt und somit zum "Drehmoment" der Maschine beiträgt, bilden. Eine Zunahme an Magnetvolumen führt zu einer Vergrößerung der mechanischen Belastung der Stege in den Transportvorrichtungen, welche den jeweiligen Magnet und das zugehörige Blechstück zwischen Magnet und Luftspalt halten. Damit gilt es, die Parameter Magnethöhe und -breite (Polbedeckung) zu optimieren. Die Grenze für die max. mittlere mechanische Spannung in den Stegen sollte mit Rücksicht auf die Kerbwirkungen nicht zu hoch gewählt werden und die Zahl der zu erwartenden Lastspiele berücksichtigen. Analytische Berechnungen der auftretenden Spannungen sollten durch Finite-Elemente-Rechnungen überprüft werden. Dies erfolgt über die Berechnung des Maxwell'schen Spannungstensors (Flächenkraftdichte) oder über die Anwendung des Energieerhaltungssatzes (Prinzip der virtuellen Verschiebung, Änderung der magnetischen Energie).

Der Einsatz eingebetteter Permanentmagnete hat in Bezug auf den Bauaufwand Vorteile: Zum einen kann eine automatisierte Herstellung der Anker relativ problemlos erfolgen, da die Magnete mit einer entsprechender Vorrichtung maschinell in die im Eisenmaterial vorgesehenen Aussparungen eingesetzt werden können. Die Herstellung wird zusätzlich durch nur zwei verwendete Materialien (Eisen- und Magnetmaterial) erleichtert. Bei richtiger Dimensionierung der Verbindungsstege (Brücken) zwischen dem Eisenmaterial über dem Pol und dem Restmaterial kann eine Bandagierung entfallen. Damit möglichst wenig Fluss durch diese Brücken kurzgeschlossen wird, sollten diese möglichst schmal ausfallen, andererseits müssen sie ausreichend groß sein, um die Festigkeit der Anordnung auch bei maximaler Geschwindigkeit der Vorrichtungen zu gewährleisten. Vorteilhaft sind hierfür einstellbare Permeabilitäten des Materials. Dies kann beispielsweise durch bistabile Werkstoffe erfolgen, die ihre magnetischen Eigenschaften durch Wärmebehandlung verändern.

Fig. 79 zeigt vier Statormodule / Flächenmotoren mit einem großflächigen Anker.

Der große Überlastbereich wird wahrscheinlich in der Praxis durch die Ankerrückwirkung eingeschränkt, die im ungünstigsten Fall eine lokale Entmagnetisierung der Magnete hervorruft. Um dies zu verhindern, darf die Flussdichte im Magnetmaterial nicht unter einen minimalen Wert fallen, der von der Qualität des Magnetmaterials und der Temperatur abhängig ist. Maßgebend sind zwei Betriebszustände: Maximale Durchflutung (inklusive Nutzung der Reluktanz) und keine Durchflutung.

Weiterhin können Transportvorrichtungen oder Nutznießer für ihre elektrische Energieversorgung und elektrischen Datenversorgung die Form der kontaktlosen elektrischen Energiezuführung und bidirektionalen elektrischen Datenübertragung über die Flächenelemente nutzen. Erreicht wird dies über eine Spulen-/Wandlerschaltung im Mittelfrequenzbereich, wenn das Gesamtsystem auf der Seite der Energieeinspeisung und auf der Verbraucherseite entsprechende leistungselektronische Baugruppen besitzt.

Die derart zugeführte Energie und Daten können wiederum für eine eigenständige, vom System unabhängige, Bewegungsleistung dieser Transportvorrichtung genutzt werden. Die Plattform würde vom passiv, führendem Charakter über unterstützende Eigenschaften bis hin zum gesteuerten Antrieb Transportvorrichtungen begleiten können.

Über dies sind für die Entwicklung weitere potentielle Variablen der Transportvorrichtungen und Container zu beachten wie: Größen, Strukturen, Materialien, Belastbarkeiten, Druck /Gewicht, Temperaturen, mögliche Geschwindigkeiten und Reaktionen auf entstehende Magnetfelder.

6. Kontaktlose Energie- und Datenübertragung

Die Übertragung elektrischer Energie auf mobile Einrichtungen ist eine bei technischen Systemen weit verbreitete Aufgabe. Bisher geschah dies fast ausschließlich unter Zuhilfenahme eines galvanischen Kontakts entweder durch eine Kabelverbindung oder bei ausgedehnten Verkehrssystemen durch Schleifkontakte (Stromschiene bzw. Pantograph). Allerdings ist dies mit deutlichen Nachteilen in Bezug auf Robustheit, Witterungsunabhängigkeit sowie Wartungsaufwand verbunden.

Die kontaktlos induktive Energieübertragung ermöglicht die Versorgung beweglicher Verbraucher mit Elektroenergie. Durch das Entfallen von Stromschienen, Schleppkabeln oder Schleifringen steigt die Beweglichkeit der Verbraucher. Sicherheit und Zuverlässigkeit der Energiezuführung verbessern sich infolge des Verzichts auf mechanische Kontakte. Eine berührungslose Energieübertragung ist dagegen aufgrund der galvanischen Trennung sicherer und wartungsfrei. Vorteilhaft ist darüber hinaus die Vermeidung von Kontaktübergangswiderständen und Funkenbildung, so dass die Technologie für den Einsatz in rauer Umgebung prädestiniert ist.

Kern des kontaktlosen Übertragungssystems ist eine transformatorische Magnetanordnung. Abweichend vom klassischen Transformator gibt es jedoch keinen geschlossenen Eisenkern. Vielmehr sind die Primär- und die Sekundärspule durch einen Luftspalt getrennt, der mehrere Dezimeter groß sein kann. Da die Energieübertragung im Mittelfrequenzbereich erfolgt, besitzt das Gesamtsystem auf der Seite der Energieeinspeisung und auf der Verbraucherseite entsprechende leistungselektronische Baugruppen. Die auf diesem Weg übertragbare elektrische Leistung bewegt sich zwischen einigen mW und mehreren kW. Bei zielgerichteter elektrischer und magnetischer Auslegung ist selbst bei großen Luftspalten ein guter Wirkungsgrad erreichbar.

Häufig ist neben der Stromversorgung eine Datenübertragung gefragt. Diese kann in einer Richtung oder auch bidirektional gewünscht sein. Die Datenübertragung ist ebenfalls kontaktlos induktiv möglich.

Umfangreiche Untersuchungen belegen die Gültigkeit für beliebige magnetische Anordnungen zur kontaktlosen Energieübertragung. Charakteristisch für diese Übertragungssysteme sind sehr kleine Hauptinduktivitäten und große Streuinduktivitäten. Von entscheidendem Einfluss ist die genutzte Übertragungsfrequenz: Durch Frequenzen im Bereich von 100 kHz können übertragbare Leistung und Wirkungsgrad deutlich erhöht werden.

Eine Nutzung der Wandler, welche in den Flächenelementen gegeben sind, zur kontaktlosen Energie- und Datenübertragung würde eine Versorgung von darüber befindlichen elektrischen Geräten ermöglichen. Neben der Energieversorgung wäre ein dauerhafter Datenaustausch zwischen dem System und EDV-lastigen Verbraucher denkbar. Das Flächenelementfungiert folglich ebenfalls als Eingabeschnittstelle.

Die Erfahrung mit der Energieversorgung von resonanten Lasten hat gezeigt, dass Wechselrichter größerer Leistung sehr empfindlich gegenüber einer Phasenverschiebung zwischen Ausgangsstrom und -spannung sind, da die Schaltvorgänge nicht mehr verlustarm im Stromnulldurchgang erfolgen. Dieses Problem kann mittels einer Phasenregelung mit der Frequenz als Stellgröße gelöst werden.

Sinnhaft kann für die kontaktlose Energieübertragung die Vierpol- oder die Pick-Up-Methode sein. Das Ziel ist die Erzeugung eines konstanten Wechselstroms in einer Primärschleife. Dies wird durch den Vierpol in seiner Funktion als Spannungs-/Stromwandler erreicht. Die Impedanzen werden so gewählt, dass gilt:

$$X_C = -X_L$$

Wird für die Frequenz der Eingangsspannung $U_0$ die Eigenfrequenz des Vierpols gewählt, resultiert ein Strom mit der konstanten Amplitude.

$$I_L = \frac{U_0}{X}$$

Die Energieabnahme erfolgt mittels eines Pick-up, dessen Sekundärwicklung Bestandteil eines Resonanzkreises ist. Das magnetische Feld erzeugt in der Sekundärwicklung einen Strom, der nach Bedarf gleichgerichtet werden kann.

Die berührungslose Energieübertragung setzt ein magnetisches Feld konstanter Amplitude voraus. Dieses Stromquellenverhalten ermöglicht der Vierpol, in dem der Strom unabhängig von der Last konstant gehalten wird. Die Schaltfrequenz des Wechselrichters sollte so hoch wie möglich sein, um das Bauvolumen der Induktivitäten zu minimieren (Beispiel: Frequenz von 20 kHz).

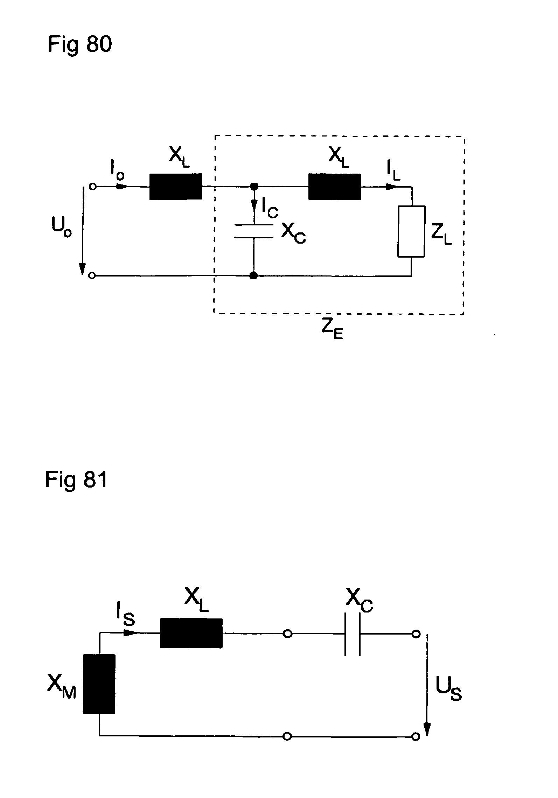

Der Pick-Up (siehe Fig. 81) stellt die Sekundärwicklung des Transformators dar. Er besteht lediglich aus einer Induktivität und einer Kapazität. Beide Elemente bilden einen Schwingkreis. Dieser Schwingkreis kann als Reihen- oder als Parallelschwingkreis ausgeführt werden. Der Ferritkern der Spulen konzentriert den magnetischen Fluss, der von dem Primärkreis aufgebaut wird. Die Ausgangsspannung des Pick-Up ist proportional zur Windungszahl und zum Primärstrom, so dass sich die Möglichkeit ergibt, hierüber die Spannung einzustellen.

Problematisch bei der Speisung der Primärwicklung mit einem Hochleistungswechselrichter ist bereits jede geringfügige Veränderung der Impedanz dieser Wicklung, beispielsweise durch Temperaturschwankungen oder auch durch Annäherung ferromagnetischer Körper. Aufgrund der Phasenverschiebung zwischen Ausgangsstrom und -spannung entstehen zunehmende Schaltverluste.

Die Leistungshalbleiter, z. B. IGBTs, schalten nicht mehr verlustarm im Stromnulldurchgang und können deshalb infolge der zunehmenden Schaltverluste zerstört werden.

7. Metalldetektion / Sensorik

Die notwendige Positioniergenauigkeit und automatisierte Erfassung von Transportvorrichtungen und Hindernissen erfordert Sensoren mit hoher Auflösung und sehr hoher Wiederholgenauigkeit. Außerdem muss der Sensor störfest gegen magnetische Felder, Schockbelastungen und Vibrationen sein. Sinnhaft sollten daher die Spulen - wenn möglich - selbst zur Messung von Induktionen und Wirbelströmen, welche durch Wirkelemente auf den Flächenelementen entstehen, genutzt werden. Ist dies aus regeltechnischen Gründen nicht möglich, so werden Detektionsspulen in den Deckel der Flächenelementhülle / des Flächenelementgehäuses eingelassen.

Da die meisten relevanten Objekte und Vorrichtungen aus induktiven / leitenden Materialen bestehen, kann auf diese Weise ein breites Spektrum an Objekten in seiner Form, Position und Geschwindigkeit bestimmt werden. Anders gestaltete Objekte müssen in das System manuell eingepflegt oder über eine andersartige Sensorik (z.B. optisch) erfasst werden.

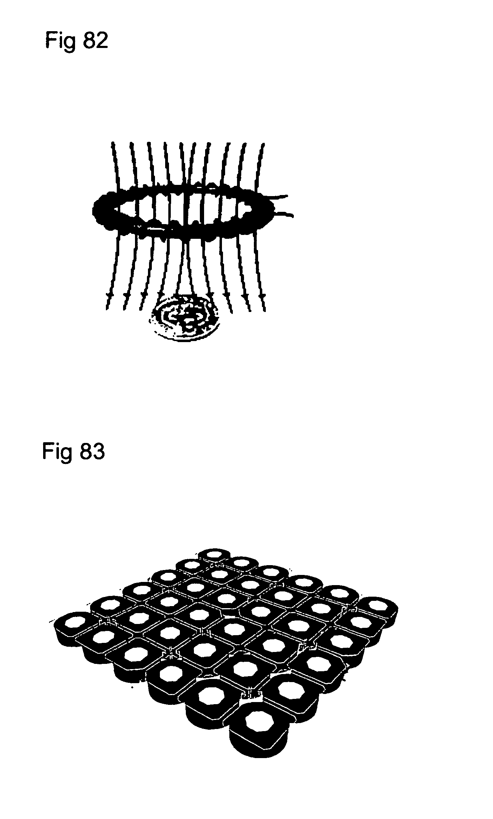

Metalldetektoren / Induktive Näherungsschalter bestehen aus einer elektronischen Schaltung und einer von niederfrequentem Wechselstrom durchflossenen Suchspule. Die Form der Spule ist dazu entweder flach (Teller- oder Ringform, ohne Kern) oder gestreckt (Zylinderspule). Die flachen Formen werden zum Absuchen von Personen oder von Bodenflächen verwendet, während die gestreckten Formen zur Lokalisierung des Verlaufes von Rohrleitungen und Kabeln in der Erde und in Wänden Einsatz finden. Dies wird in Fig. 82 (Beispiel, nicht Teil der beanspruchten Erfindung) veranschaulicht.

Nach dem Induktionsgesetz werden in einem zeitlich veränderlichen Magnetfeld elektrische Spannungen induziert. Befinden sich elektrisch leitfähige Stoffe in dem zeitveränderlichen Feld, so kommt es infolge der induzierten Spannungen zu einem Stromfluss in diesen Stoffen. Diese Ströme werden, da sie bei einer bildlichen Darstellung den sich zeitlich ändernden magnetischen Fluss umwirbeln, als Wirbelströme bezeichnet. Die Wirbelströme erzeugen selbst ein Magnetfeld, welches auf das ursprüngliche zeitveränderliche Magnetfeld zurückwirkt. Das durch die Wirbelströme entstehende Feld wirkt dabei dem ursprünglichen Feld entgegen (Lenzsche Regel).

Metalldetektoren werden nach den zugrundeliegenden Messverfahren Pulsmessung und Wechselstrommessung unterteilt: Bei der Ersteren werden periodisch einzelne Strompulse über die Sendespule ausgesendet. Diese Pulse erzeugen in metallischen Objekten in der Umgebung der Spule Wirbelströme. Diese wiederum verursachen in der Empfangsspule eine Signaländerung, welche unmittelbar nach dem Ausschalten des Sendepulses als Spannung messbar ist. Je nach zeitlichem Verlauf und Dauer dieser Wirbelstromantworten auf unterschiedlich lange Pulse und Pulsfolgen kann auf verschiedene Metalle und Größe der metallischen Objekte geschlossen werden. Die Signalauswertung erfolgt dabei meistens im Zeitbereich.

Bei der Wechselstrommessung (Beispiel, nicht Teil der beanspruchten Erfindung) wird kontinuierlich ein meist niederfrequentes Wechselstromsignal ausgesendet, welches wiederum als Empfangssignal in der Empfangsspule analysiert wird. Das Übertragungsprinzip ist ein magnetisch gekoppeltes System ähnlich wie bei einem Transformator.

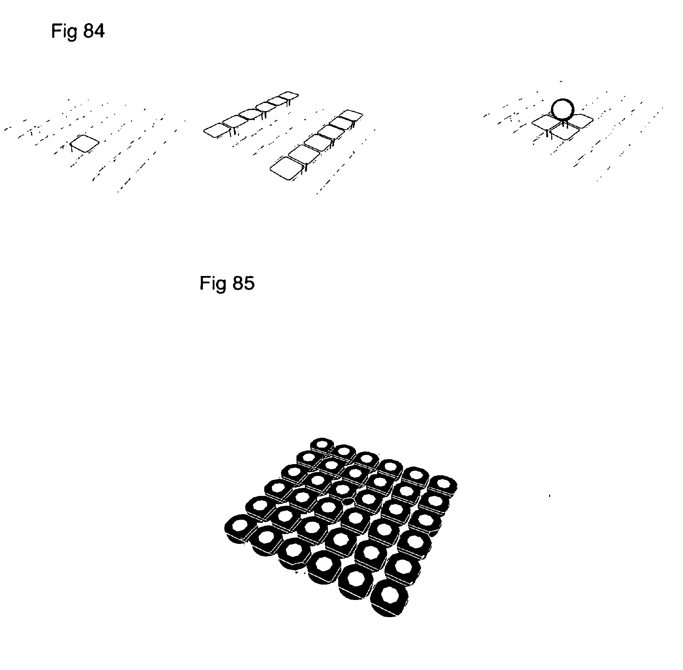

Ähnlich sind die Wandler der Flächenelemente durch das Pulsmessverfahren als Detektoren einzusetzen (siehe Fig. 83, 84). Die Wandler fungieren somit als Sende- und Empfangsspulen. Dies würde eine Analyse der Lage und der Form von darüber befindlichen ferromagnetischen Elementen ermöglichen und somit Transportverbindungen entsprechend in das System einbinden. Mit der Einbindung eines Näherungsschalters in die Flächenelemente sollen auf diese Art auch passive Objekte mit ferromagnetischen Eigenschaften in den Datensatz des Systems automatisch eingebunden werden. Das Betriebssystem würde die Fahrtrouten der Transportvorrichtungen um diese Objekte herum anpassen.

Aus regeltechnischen Gründen kann eine Nutzung der vorhandenen Spulen eines Flächenelements zur Detektion entfallen. Aus diesem Grund wurden alternative 2 Metalldetektionsverfahren entwickelt, welche in den Gehäusedeckel integriert bzw. auf Höhe der Polköpfe um diese geführt werden können. Beide Verfahren basieren wie üblich auf verlegten Spulen, welche rechteckig aufgebaut sind und aus wenigen Wicklungen und dünnen Lackdrähten bestehen. Das erste Verfahren realisiert eine individuelle Detektionsspule um bzw. über jeden einzelnen Polkopf. Damit erhöht sich die Präzision der Abfragen und der Erkenntnisse über detektierte Objekte in der Form ihrer Grundfläche, Lage und Geschwindigkeit. Es bedeutet allerdings gleichzeitig einen erhöhten Aufwand für Elektronik (Ansteuerung, Bauteile), Konstruktion und die Datenverarbeitung, zumal die Spulen immer über separate Leitungen, welche zwischen den Spulen zur Elektronik verlaufen, verfügen müssen. Die Lösung individueller Metalldetektionsspulen ist daher nur in kleinflächigen Flächenelementen ratsam.

Eine ganzheitliche Abtastung durch alle Spulen zu jeder Zeit ist nicht notwendig. Temporär frequentierte und ausgesucht geschaltete Detektionen durch vereinzelte Spulen sind für einen Grobüberblick der Güter welche sich auf der Plattform befinden ausreichend. Bei erhöhten Objektaufkommen und Verkehr wird die Frequenz und Genauigkeit (sprich die Anzahl der angesprochenen Spulen) der Messungen um diese Bereiche ebenfalls erhöht. Dies ermöglicht bei wirtschaftlicher Nutzung für das System zu jeder Zeit einen optimalen Überblick über die auf der Plattform befindlichen Objekte.

Bei größer ausgeprägten Flächenelementen sind Detektionsspulen für jeden Polkopf eines Wandlers nicht mehr sinnhaft. Stattdessen werden die Spulen in rechteckigen Bahnen um jeweils eine Reihe der Polköpfe / Wandler geführt (siehe Fig. 85). Die Bahnen der Detektionsspulen verlaufen nebeneinander in der x-Richtung und nebeneinander in der y-Richtung. Es entstehen 2 Bahnenflächen welche sich überlappen. Die Leitungsanfänge und - enden verlaufen von der Spule über die Hüllenwände bis zur Platine in die entsprechende Regeltechnik. Dies ermöglicht eine Reduzierung von Leitungsträgern und elektronischen Baugruppen.

Durch eine temporär frequentierte Ansteuerung der Bahnen wird ein grobes Abtastungsmuster erreicht. Im Falle einer Objektdetektion werden die benachbarten Spulenbahnen durch temporäre Detektionspulsung von x- und y-Bahnen stückweise die Grundfläche des Objektes abtasten (siehe Fig. 86 und 87). Als nachteilig erweist sich diese Methode bei Objekten mit löchrigen Strukturen. Da allerdings die Kollisionsvermeidung im Vordergrund steht und nicht die exakte Formbestimmung kann dieser Nachteil vernachlässigt werden.

8. Identifikation

Flächenelemente sind kombinatorische Teilelemente einer ausgestalteten Plattform. Um im Verbund und der Ansteuerung durch das zentrale Steuersystem optimal wirken zu können, benötigt es ein einzigartiges Erkennungsmerkmal. Mit Hilfe dieses Erkennungsmerkmales kann die zentrale Systemsteuerung den Typ und die Ausgestaltung, sowie Störungen der elektromagnetischen Kachel / Flächenelemente auslesen und auf diese Daten entsprechend reagieren. Mit der Merkmalsbestimmung werden nicht nur alle Kachelfähigkeiten, wie zum Beispiel die Art, Anordnung und Ausgestaltung der Wandler oder die Form und Größe des Flächenelementes selbst, aufgeschlüsselt, sondern es wird unter Bezugnahme benachbarter Flächenelemente die genaue Lage und Position ermittelt. Dieses einzigartige Erkennungsmerkmal wird durch eine Identifikationsnummer (IB, siehe Fig. 88) realisiert. Diese IB (Identifikationsnummer) ist, vergleichbar mit einer Telefonnummer oder Computer Mac-Adresse, leicht von Kachel zu Kachel übermittelbar und auf diese Weise von der Steuerung auszulesen. Sie wird in den Microcontroller eines jeden Flächenelementes geimpft und gebrannt. Somit ist die IB unbegrenzt mit dem Flächenelement verbunden.

Die Einzigartigkeit der IB stellt zudem noch einen wirksamen Schutzmechanismus vor Diebstahl oder Produktpiraterie da. Nicht registrierte IB und Kachelelemente werden vom Betriebssystem erkannt und vom Betrieb ausgeschlossen. Sollte weiterhin das lokale Netzwerk an benachbarte Netzwerke angeschlossen werden ist es ebenfalls denkbar gestohlene oder kopierte Elemente dem nächsten Provider oder einer zentralen Vergabestelle automatisch zu melden.

Bei einer zusätzlichen Registrierung des Eigentümers und der IB ist weiterhin das Besitzverhältnis leicht zu ermitteln. Dies ist zwar bei an einem Ort fixen Flächenelementen nicht zwingend erforderlich, aber implementiert man das IB-System ebenfalls in Transportvorrichtungen oder Objekten (z.B. mithilfe eines RFID-Tags) wird der Nutzen schnell deutlich. Ähnlich einer Fahrgestellnummer eines Automobiles oder eines Wasserzeichens kann auch hier ein Eigentumsverhältnis der Transportvorrichtung leicht nachvollzogen werden. Im täglichen Austausch von Objekten, Waren und Gütern ist dies äußerst sinnvoll. Zumal das System auf diese Weise den jeweiligen Standort in Echtzeit nachvollziehen und den Anwenderwünschen entsprechend reagieren kann.

9. Software

Damit das abgestimmte Zusammenwirken aller Prozesse, die der Raumüberwindung in einer Zeiteinheit aus der Sicht des Beförderungsobjektes, d.h. dem Fluss von Personen, Objekten, Energien und Daten dienen, auf der Plattform abgewickelt und kontrolliert werden kann, bedarf es einer EDV-basierten Steuerung.

Diese Steuerung sollte im Zusammenwirken aller Netzwerkteilnehmer entsprechend Daten entgegennehmen, auswerten und weiterleiten, sowie steuernd und regelnd eingreifen können.

Zu diesem Zeck verfügt die vorgeschlagene Vorrichtung über drei Softwarebereiche (siehe Fig. 89). Die der Hardware nächste Software arbeitet in den Microcontrollern bzw. der direkten Schaltung in den Flächenelementen. Zusammen mit der IB-Nummer werden die jeweils relevanten Daten, wie beispielsweise Objekterfassungen, Störungen oder Wandleransteuerungsbefehle, mit dem Betriebssystem ausgetauscht. Das Betriebssystem fungiert als Schnittstelle zwischen Hardware und Anwendungssoftware.

Im Folgenden soll nur kurz auf die Aufgaben des Betriebssystems und potentieller Anwendungssoftware eingegangen werden.

9.1 Betriebssystem

Das Betriebssystem wird im Betrieb als Schnittstelle zwischen den Flächenelementen der Plattform und der Anwendersoftware dienen. In erster Linie gibt das Betriebssystem Steuerbefehle zur Wandleransteuerung an die Schaltung und den Microcontroller der entsprechenden Flächenelemente aus. Welche Flächenelemente und welche Wandler angesprochen werden entscheidet das Betriebssystem anhand der ihm zur Verfügung stehenden Kachelidentifikationsnummern (IB). Die jeweiligen IBs übermitteln dem Betriebssystem den genaue Kacheltypus und die Kachellage im Gesamtgefüge der Plattform. Auf die Art kann jeder Wandler und jede Funktion in den Flächenelementen angesprochen werden. Dies betrifft auch den elektrischen Leistungstransfer und Signaltransfer von Flächenelement zu Flächenelement oder zu einem weiteren Nutznießer. Ebenso können entsprechend ausgestaltete Transportvorrichtungen oder auf der Plattform befindliche elektrische Vorrichtungen die kontaktlose Energie- oder Signalübertragung nutzen. Jeder Verbraucher kann angesprochen oder elektrisch isoliert werden. Ausfälle und Störungen werden ebenfalls registriert und an die Anwendersoftware weitergeleitet. Im Schlimmstenfalls werden Notmaßnahmen, wie zum Beispiel ein Stop aller bewegten Transportvorrichtungen, eingeleitet.

Ebenfalls koordiniert das Betriebssystem den Datenaustausch von fremden Netzwerken und Systemen ähnlich einem Switch oder Router. Beispielsweise kann eine Internetverbindung, durch eine Steckverbindung in den Flächenelementen, über die Plattform vom Laptop ins angeschlossene Telefonnetz erfolgen. Dies ermöglicht die Ansteuerung von elektrischen Vorrichtungen mit der Plattform als Übertragungsmedium.

Weiterhin verwaltet das Betriebssystem die Detektion von auf der Plattform befindlichen erfassbaren Objekten. Die entsprechenden Spulen und Flächenelemente werden hierfür temporär abgefragt und die erkannten Objekte in ihrer Gestaltung und Geschwindigkeit wahrgenommen.

Die Kollisionskontrolle und Verwaltung der Bewegungen bzw. Routen von Transporteinheiten fällt in Teilbereichen ebenfalls dem Betriebssystem zu, damit die Anwendersoftware entlastet werden kann.

Für die Objektkoordination fungiert als Vorbild das System der Japanischen Eisenbahn. So entscheidet die Japanische Eisenbahn bei Verspätungen oder Ausfällen von Zügen, an Hand von algorithmischen Berechnungsverfahren, über die optimale Version zur Wiederherstellung des Gesamtsystems. Als Höchster Parameter dient hierbei der Grad der Unzufriedenheit der Passagiere. Das System soll ähnlich bei der Vergabe von Vorzügen gegenüber anderen zielkonkurrierenden Transporteinheiten auf der Plattform verfahren. Informationen über die jeweiligen Objekte erhält das Betriebssystem von den Transporteinheiten selbst oder über die Anwendersoftware vom Benutzer. So werden Routen und Prioritäten in Form eines flexiblen Echtzeitfahrplanens rollierend neu errechnet. Die zu vergebenen Prioritäten richten sich nach Kriterien wie beispielsweise Sicherheit, Gefahrenstoffe, Objektart, Objektform, Temperaturabhängige Objekte, Lebensmittel, transportierten Lebewesen, etc. Die maximal Geschwindigkeiten, Beschleunigungsgeschwindigkeiten und die Abbremsgeschwindigkeiten der Transporteinheiten spielen ebenfalls im bewegten Zusammenspiel neben dem Prioritätsverhalten eine wesentliche Rolle. Statistische Wahrscheinlichkeiten der abgerufenen Transporteinheiten an bestimmten Orten zu bestimmten Zeiten beeinflussen vorausschauend ebenso die individuelle Lagerung und das Verhalten der vom Gesamtsystem gesteuerten Transporteinheiten. Dies erhöht die Verfügbarkeit und den reibungslosen Ablauf. Gleichzeitig reduziert es Transportflächenpuffer und trägt so zum ökonomischen Ansatz des Gesamtsystems bei.

Da das Gesamtsystem alle Transporteinheiten individuell steuert und erfasst, ist auch jederzeit der genaue Aufenthaltsort aller Transporteinheiten bekannt. Kollisionen sind daher vermeidbar. Ein geringes Restrisiko bleibt bestehen, da Systemfremde-Objekte auf einzelne Transporteinheiten störend einwirken können. Ferromagnetische Elemente, welche die Plattform kreuzen, können allerdings vom System registriert werden. Spulen in den Plattformelementen agieren ähnlich einem Metalldetektor und leiten die erfassten Daten an das Steuersystem weiter. Aus den empfangenen Daten können die Umrisse des "Eindringlings" errechnet und es kann entsprechend darauf reagiert werden. In der Nähe befindliche Transporteinheiten werden folgend umgeleitet oder abgebremst.

9.2 Anwendungssoftware

Je nach Ausgestaltung der Anwendersoftware sind Informationssysteme über den Zustand der Plattform und über die Objektsituation denkbar. Planungs-, Steuerungs- und Controllingwerkzeuge optimieren den beabsichtigten Materialfluss und die entsprechende Energieabgabe an Transportvorrichtungen oder Fremdnutzer.

Über eine entsprechende Prioritätszuweisung bzw. Rechtevergabe und Definition von am System beteiligten Transportvorrichtungen, elektrischen Geräten oder Objekten, kann beispielsweise die Routenberechnung des Betriebssystems für Transportvorrichtungen beeinflusst werden. Wege, Positionen, Verhaltensweisen von angesteuerten Objekten können auf die gleiche Weise vom Anwender in ihrem Umfang oder in ihrer Aktivierungszeit festgelegt werden.

Dies ermöglicht eine Logistik- oder Prozesssimulation mit anschließender Realisation. Eine Automatisation von standardisierten Ver- und Entsorgungsprozessen und Objektflüssen resultiert.

Eine marktorientierte, integrierte Planung, Gestaltung, Abwicklung und Kontrolle des gesamten Material- und dazugehörigen Datenflusses zwischen einem Unternehmen und seinen Lieferanten, innerhalb eines Unternehmens sowie zwischen einem Unternehmen und seinen Kunden würde EDV-kontrolliert in weiten Teilen bei entsprechender Vernetzung automatisiert werden können.

Bezugszeichen

| 1  | Flächenmotor |
| 1' | Flächenmotor |
| 2  | einzelner Wandler |
| 2' | Wandler / Wandlerelemente |
| 3  | Umhüllungen aus nichtferromagnetischem Material |
| 3' | Umhüllungen aus nichtferromagnetischem Material |
| 4  | an den Seiten des Flächenmotors angebrachte Kontakte |
| 5  | elektronische Steuereinheit |
| 6  | Magnetfeldausprägung |
| 7  | Magnetfeldausprägung |
| 8  | Magnetfeldausprägung |
| 10  | Transportvorrichtung |
| 10' | Transportvorrichtung |
| 11  | Räder |
| 12  | ferromagnetisches Element |
| 13  | Lade- oder Transportfläche |
| 14  | Unterbau |
| 15  | Lastkraftwagen |
| 16  | Transportvorrichtung |
| 17  | Statorpolfläche |
| 18  | Kern / Spulen |
| 20  | Anker |
| 21  | Fuß / Statorfuß / Statorpolfuß (Statorpol / Polfläche) |
| 22  | Kern / Wicklungsachse / Statorachse |

23 Wicklung / Spulenwicklung
24 Kopf / Statorkopf (Statorpol / Polfläche)
25 Arbeitsluftspalt
26 Spulenkörper
27 Eisenkreis
28 Boden / Aufhängung
29 Energiezuleitungen
30 Datenzuleitungen
31 Steuerungselement / Elektronik / Platine / Chip
32 Stromverteilung zu den Wandlern
33 Wandler / Elektromagnete / Spulen
34 Schnittstellen / Kontakte
35 Oberfläche / Hülle
36 Statorplatte mit Verstrebungen, Statorplattenringen, Achsen bzw. Jochen,...
37 Polflächen / Statorköpfe mit Achsen bzw. Jochen / Statorpole
38 Flächenelement-Oberfläche / Hülle bestehend aus Hüllenwänden und Hüllendeckel / Gehäuse bestehend aus Gehäusewänden und Gehäusedeckel
39 Blender / Blendköpfe / Bohrungsverschlüsse / Blendaufsätze
40 Schrauben
41 Plattformrand / Randschräge / Plattformrahmen
42 Hüllenboden - Teil der Flächenelement-Oberfläche
43 Plattformrandecke schräg / Rahmenecke schräg
44 Elektromagnetisches Flächenelement
45 Magnetfeld
46 Beispielhafte Transportvorrichtung
47 Tragende Rollelemente (Rad, Kugel, ...)
48 Ferromagnetische Elemente und/oder Permanentmagnete
49 Objektauflagefläche
50 Körperelement

## Patentansprüche

1. Lager- oder Transportsystem mit

   a) einem elektromagnetischen Flächenmotor (1, 1'), der eine Transportvorrichtung (10, 16) antreibt;
   b) wobei der Flächenmotor (1, 1') eine Mehrzahl von aktiven Wandlern (2) aufweist, die geeignete Magnetfelder (7) zur Krafteinwirkung auf die Transportvorrichtung (10, 16) erzeugen können;
   c) wobei die Transportvorrichtung (10, 16) auf Rädern (11) oder Rollen gelagert ist; und
   d) wobei die Transportvorrichtung (10, 16) hinsichtlich des Antriebs durch den Flächenmotor (1, 1') passiv ausgestaltet ist;
   **dadurch gekennzeichnet, dass**
   e) mindestens eine Einrichtung zur Metalldetektion in den Flächenmotor integriert ist; und dass

f) die mindestens eine Einrichtung zur Metalldetektion als ein induktiver Näherungsschalter ausgebildet ist,

   - wobei als Detektor entweder die Wandler als Sender und Empfangsspulen im Pulsmessverfahren fungieren oder
   - individuelle rechteckig aufgebaute Detektionsspulen um oder über jedem einzelnen Polkopf eines Wandlers vorgesehen sind oder
   - Detektionsspulen in rechteckigen Bahnen um jeweils eine Reihe der Polköpfe der Wandler geführt sind.

2. Lager- oder Transportsystem nach dem vorhergehenden Anspruch,
   **dadurch gekennzeichnet,**
   **dass** die Transportvorrichtung (10, 16) einen Anker aufweist, der ferromagnetisches Material enthält.

3. Lager- oder Transportsystem nach einem der vorhergehenden Ansprüche,
   **dadurch gekennzeichnet,**
   **dass** die Wandler (2) derart ausgebildet sind, dass sie Energie oder Daten kontaktlos an die Transportvorrichtung (10, 16) oder an einen anderen Wandler (2) übertragen können.

4. Lager- oder Transportsystem nach einem der vorhergehenden Ansprüche,
   **dadurch gekennzeichnet,**
   **dass** die Wandler (2) Kontakte oder Schnittstellen für Steckverbindungen zur Energieübertragung oder Datenübertragung oder Fixierung von externen Elementen und/oder Vorrichtungen aufweisen

5. Lager- oder Transportsystem nach einem der vorhergehenden Ansprüche,
   **dadurch gekennzeichnet,**
   **dass** der Flächenmotor (1, 1') eine dreidimensionale Oberflächenform ausbildet, mit der eine Transportvorrichtung (10, 16) in drei Dimensionen bewegt werden kann.

## Claims

1. Storage or transport system having

   a) an electromagnetic surface-area motor (1, 1') which drives a transport apparatus (10, 16);
   b) wherein the surface-area motor (1, 1') has a plurality of active transducers (2) which can produce suitable magnetic fields (7) for force to act on the transport apparatus (10, 16);
   c) wherein the transport apparatus (10, 16) is mounted on wheels (11) or rollers; and

EP 2 165 406 B1

d) wherein the transport apparatus (10, 16) is designed to be passive with regard to the drive by the surface-area motor (1, 1');
**characterized in that**
e) at least one device for metal detection is integrated in the surface-area motor; and
f) the at least one device for metal detection is realized as an inductive proximity switch,

   - wherein as detector, either the transducers function as transmitter and receiving coils according to the pulse measurement method, or
   - individual rectangular shaped detection coils around or above each pole head of a transducer are provided, or
   - detection coils are arranged in each case in rectangular paths around a row of the pole heads of the transducers.

2. Storage or transport system according to the preceding claim,
**characterized in that**
the transport apparatus (10, 16) has an armature which contains ferromagnetic material.

3. Storage or transport system according to one of the preceding claims,
**characterized in that**
the transducers (2) are designed such that they can transmit power or data to the transport apparatus (10, 16) or to another transducer (2) without contact.

4. Storage or transport system according to one of the preceding claims,
**characterized in that**
the transducers (2) have contacts or interfaces for plug connections for power transmission or data transmission or fixing of external elements and/or apparatuses.

5. Storage or transport system according to one of the preceding claims,
**characterized in that**
the surface-area motor (1, 1') has a threedimensional surface shape by means of which a transport apparatus (10, 16) can be moved in three dimensions.

**Revendications**

1. Système de stockage ou de transport

   a) avec un moteur planaire électromagnétique (1, 1') qui entraîne un dispositif de transport (10, 16) ;
   b) le moteur planaire (1, 1') comportant plusieurs convertisseurs actifs (2) qui peuvent produire des champs magnétiques appropriés (7) pour exercer une force sur le dispositif de transport (10, 16) ;
   c) le dispositif de transport (10, 16) étant monté sur des roues (11) ou des rouleaux ; et
   d) le dispositif de transport (10, 16) étant conçu de manière passive pour ce qui est de l'entraînement par le moteur planaire (1, 1') ;
   **caractérisé en ce que**
   e) au moins un dispositif pour la détection de métal est intégré dans le moteur planaire ; et **en ce que**
   f) le ou les dispositifs pour la détection de métal sont conçus comme des détecteurs de proximité inductifs, sachant que

      - comme détecteur, soit les convertisseurs fonctionnent comme émetteurs et bobines réceptrices dans le procédé de mesure d'impulsions,
      - soit des bobines de détection individuelles, construites rectangulaires, sont prévues autour ou au-dessus de chaque tête polaire individuelle d'un convertisseur,
      - soit des bobines de détection sont guidées dans des trajectoires rectangulaires à chaque fois autour d'une série de têtes polaires des convertisseurs.

2. Système de stockage ou de transport selon la revendication précédente, **caractérisé en ce que** le dispositif de transport (10, 16) comporte un induit qui contient un matériau ferromagnétique.

3. Système de stockage ou de transport selon l'une des revendications précédentes, **caractérisé en ce que** les convertisseurs (2) sont conçus de telle sorte qu'ils peuvent transmettre de l'énergie ou des données sans contact au dispositif de transport (10, 16) ou à un autre convertisseur (2).

4. Système de stockage ou de transport selon l'une des revendications précédentes, **caractérisé en ce que** les convertisseurs (2) comportent des contacts ou des interfaces pour des connexions à fiches en vue de la transmission d'énergie ou de données ou en vue de la fixation d'éléments externes et/ou de dispositifs externes.

5. Système de stockage ou de transport selon l'une des revendications précédentes, **caractérisé en ce que** le moteur planaire (1, 1') constitue une forme de surface tridimensionnelle avec laquelle un dispositif de transport (10, 16) peut être déplacé dans trois dimensions.

## Fig. 1

## Fig. 2

**Fig. 3**

**Fig. 4**

**Fig. 5**

**Fig. 6**

**Fig. 7**

**Fig. 8**

**Fig. 9**

**Fig.10A**

**Fig.10B**

**Fig. 11**

Fig 12

Fig 13

Fig 14

Fig 15

Fig 16

Fig 17

Fig 18

Fig 19

Fig 20

Fig 21

| 35 |
| 34 |
| 33 |
| 32 |
| 31 |
| 30 |
| 29 |
| 28 |

Fig 22

Fig 23

Fig 24

Fig 25 A

Fig 25B

Fig. 25 C

Fig 26

Fig 27

Fig 28

Fig. 29

Fig 30

Fig 31

Fig 32

Fig 33

Fig 34 A

Fig 34 B

## Fig 35

Fig 36

Fig 37

Fig 38

EP 2 165 406 B1

Fig 39

Fig 40

Fig 41

Fig 42

Fig 43

Fig 44

Fig 45

Fig 46

Fig 47

Fig 48

Fig 49

Fig 50

Fig 51

Fig 52

Fig 53

Fig 54 A

Fig 54 B

Fig 55

Fig 56

Fig 57

Fig 58

Fig 59

Fig 60

Fig 61

Fig 62

Fig 63

Fig 64

Fig 65

Fig 66

Fig 67

Fig 68

Fig 69

Fig 70

## Fig 71

## Fig 72

Führungsgrößen → **Regler** Signalverarbeitung → Stellsignale → **Regelstrecke** Leistungselektronik Motor Sensorik

Messgrößen          Messgrößen

## Fig 73

## Fig 74

# Fig 75

Fig 76

**Fig 77**

**Fig 78**

**Fig 79**

Stator 2

Stator 4

Stator 1

Stator 3

Fig 80

Fig 81

Fig 82

Fig 83

Fig 84

Fig 85

Fig 86

Fig 87

Fig 88

IB

Ankerplattform
+ evtl. IB

Kachel
+ IB

Fig 89

Struktur

Anwendungssoftware

Betriebssystem

IB

Hardware / Plattform

**EP 2 165 406 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1443632 A2
- US 20030178901 A1